# EUROPEAN PATENT SPECIFICATION

(11) **EP 3 783 502 B1**
(45) Date of publication and mention of the grant of the patent: **25.06.2025**
(21) Application number: 19193230.0
(22) Date of filing: 23.08.2019
(51) Int. Cl.: G06F 16/23, G06F 11/14, G06F 16/21

(54) **SYSTEM FOR PERSISTING APPLICATION PROGRAM DATA OBJECTS**
SYSTEM FÜR PERSISTENTE ANWENDUNGSPROGRAMMDATENOBJEKTE
SYSTÈME POUR DES OBJETS DE DONNÉES DE PROGRAMME D'APPLICATION PERSISTANT

(43) Date of publication of application: 24.02.2021
(73) Proprietor: Spicter AG, 6300 Zug (CH); SOE Consulting GmbH, 61462 Königstein (DE)
(72) Inventor: OBERHACK, Andreas, 6300 Zug (CH)
(74) Representative: Richardt Patentanwälte PartG mbB

(56) References cited:
- US-A1- 2015 149 704
- JIM GRAY: "The Transaction Concept: Virtues and Limitations", 1 January 1981 (1981-01-01), XP055035838, Retrieved from the Internet <URL:http://research.microsoft.com/en-us/um/people/gray/papers/theTransactionConcept.pdf> [retrieved on 20120820]

## Description

### Field of the invention

The disclosure relates to the storing of data objects of application programs and more particularly to techniques for quick and consistent analysis or recovery of data of a previous state.

### Background and related art

Modern, complex application programs often comprise massive amounts of data, often including mission-critical data that needs to be always in a consistent state. For example, enterprise software, also known as enterprise application software (EAS), and control software used in the context of monitoring and/or controlling an industrial manufacturing workflow, are configured to process large amounts of data. Often, they reflect the current state of parts of a company or of a process whose consistency and actuality is of utmost importance. For example, the manufacturing of products in an industrial manufacturing workflow based on an "internet of things" approach is associated with the need to generate, monitor and control a huge number of data objects representing real objects or parts thereof and their dynamically changing state.

To ensure that the content of an application and the intermediate results of ongoing critical processes performed in the application program are not lost upon a crash of the application program, the data objects of the application program are typically persisted in a relational database that is periodically backed up by repeatedly taking snapshots of the database. For example, US patent application US 20140258241A1 describes a technique for reconstructing a database from a backup.

US patent application 2015/0149704 describes a method for high performance transactional processing. For each data change occurring transaction created as part of a write operation initiated for one or more tables in a mainmemory-based DBMS, a transaction log entry is written to a private log buffer corresponding to the transaction. All transaction log entries in the private log buffer are flushed to a global log buffer upon completion of the transaction to which the private log buffer correspond.

Some of these systems use object-relational mapping tools such as Hibernate for mapping an object-oriented domain model of the data objects to database and table schemas of the relational database used for persisting the data of the application program. For example, Hibernate maps Java classes to database tables, and maps Java data types to SQL data types. Hibernate generates SQL calls and relieves the developer from the manual handling and object conversion of the result set.

The above-mentioned system architecture has several severe drawbacks. Firstly, the recovery of a particular state of the database from a snapshot or a database log is highly time consuming and sometimes even infeasible.

This is because in praxis, database tables comprise multiple indices, dependencies, secondary keys and constraints. Any INSERT operation needs to be performed in accordance with these constraints and cross-table interdependencies and involves an update of indices. Hence, starting from a snapshot or backup of a database and re-applying (re-doing) all data changes specified e.g. in a log is often highly time consuming and computationally demanding. Deactivating the constraints and inter-dependency checks might increase performance but might also result in the corruption of the data of the database by storing incomplete or inconsistent data records. Furthermore, the log file comprising the data changes may be too big to fit into memory and the parsing of the log file may also take a considerable amount of time.

Hence, a reconstruction operation using such a legacy backup scenario would require a considerable time, e.g. several hours or even days, if the amount of the data stored in the database is large. During the database recovery, the application program would need to be suspended in order to ensure no new data is generated that needs to be persisted. This "down time" period may be inacceptable in many application scenarios, in particular in cases when the application program controls an industrial manufacturing workflow, any downtime of the application program and/or the OLTP program used for storing a current state of the program imposes significant costs on the owner of the workflow.

So the task of persisting data objects of complex application programs in a consistent and quickly reconstructible way continues to remain an unsolved problem.

### Summary

It is an objective of the present invention to provide for an improved method for persisting data objects of an application program as specified in the independent claims. Embodiments of the invention are given in the dependent claims. Embodiments of the present invention can be freely combined with each other if they are not mutually exclusive.

The invention is set out in the appended set of claims.

In one aspect, the invention relates to a computer-implemented method for persisting data objects of an application program as specified in claim 1. The method comprises:
- providing an application program comprising a plurality of data objects - DOs;
- performing change operations which respectively create, modify and/or delete at least one of the DOs in the application program, thereby creating delta objects, each delta object being descriptive of one or more DO changes caused by one of the change operations; and
- storing the delta objects in a data store referred to as "delta store".

The application program is configured for initiating the creation of one or more integrated transactions and for performing the change operations within the one or more integrated transactions, whereby the creation and the storing of the ones of the delta objects being descriptive of one or more change operations within a particular one of the integrated transactions is executed within the said integrated transaction.

These features may be advantageous as the data content of the delta store is ensured to comprise data that was written within a transactional context and that allows reconstructing the state of the DOs of the application program at an arbitrary time in the past. This is because the change operations performed within the application program and the storing operations for storing the delta objects in the delta store are performed within integrated transactions and hence are performed in accordance with the all-or-nothing principle. In case the delta store comprises delta objects representing the creation and/or modification of some data objects in the application program, it is ensured that these data object changes have actually been performed and committed within the application program. In case the storing of one of the delta objects in the delta store fails for whatever reason, the storing of all delta objects contained in the same integrated transaction is aborted or revoked, and also the data object changes performed in the application program within the said integrated transaction are revoked.

It should be noted that some current database recovery approaches claim to be able to quickly reconstruct the state of a data store at a particular time. However, typically the time when a database reconstruction is possible is limited to predefined "snapshot" times and hence does not allow reconstructing the state of the database at an arbitrarily selected time in the past. Second, information on state of an application program at the level of individual transaction is not comprised in or synchronized with the data store that is to be recovered in a transaction-save manner and hence the state of an application program cannot be recovered in a consistent state based on these approaches.

As the data content of the delta store is ensured to comprise data that was written within a transactional context, the delta store allows reconstructing the state of the DOs of the application program at an arbitrary time in the past consistently.

It should further be noted that the creation of a transactional context is triggered by an action performed within the application program where the data object changes are performed. As the creation of the integrated transactions is triggered in the application program, the creation and management of the integrated transactions can be closely linked to the creation, deletion and/or modification of data objects in the application program by a developer at design time of the application program. The begin and end of the integrated transactions may hence correspond closely to the workflows and functions implemented in the application program.

According to embodiments, the data content of the delta store is ensured to always be transactionally consistent with the state of the DOs in the application program and hence can be used as a basis for reconstructing the state of the application program at an arbitrary moment in time.

By propagating any changes made within the application program to the delta store within an integrated transactional context that covers at least the application program and the delta store, mission critical application programs can be provided whose state at an arbitrarily selected time can quickly and consistently be reconstructed. As any DO state changes are, according to embodiments, automatically persisted in the delta store within a transactional context and preferably in real-time, the data content of the delta store can be used for a fast and consistent recovery of the application program at an arbitrary time in the past. As a consequence, the application program can be used in many mission critical scenarios such as for control of fly-by-wire aircraft, anti-lock brakes on a vehicle, internet-of-things based industrial production processes, enterprise application programs and the like.

In a further beneficial aspect, embodiments of the invention may provide for an automated logging method that does not require an explicit, manual and hence error prone specification of reporting routines in the source code of the application program. An increasing proportion of manufacturing processes are fully automated or largely automated, with object-oriented, complex software programs for monitoring and control playing an important role. Those complex software programs generate an immense amount of structured data, and it is often not possible to predict already at design time of a software application which specific aspects and routines are particularly error prone or relevant for the user for other reasons. As any data change operation performed in the application program is reflected in a delta object that is persisted in the delta store, an automated change log is created at a highly fine-granular level that is ensured to cover any change of a data object of the application program. The stored sequence of delta objects may enable an automated, semi-automated or manual inspection and analysis of the data object changes occurring in an application program over time, and hence may allow the identification of trends, of errors, of cause-and-effect relationships at an arbitrarily chosen level of granularity. These analyses are made possible even in case the application program itself lacks any explicit reporting capabilities or merely comprises exporting functions that do not cover a particular aspect of the program considered to be particularly relevant at hindsight.

According to embodiments, any change operation performed within the application program during the whole lifetime of the application program (i.e., the total time in which the application program is instantiated, i.e. "running") is automatically persisted in the form of delta objects in the delta store and is, according to embodiments, in addition propagated to an OLTP data store for updating the OLTP data store.

The automated storing of any data object change in a delta store in the form of an ordered sequence of adjacently stored delta objects may tremendously facilitate the implementation of complex monitoring and control programs for all kinds of technical and other processes and workflows, as it is not necessary to implement explicit reporting or logging routines for any relevant aspect of the program and it is not necessary to decide at design time of the program which functional aspect of the complex program will be of relevance to the end user. This is because any kind of change in the state of a data object in the application program will result in the creation and storing of one or more delta objects reflecting these changes that can be quickly traversed for performing any kind of analysis on the delta objects. Programming the application program or a framework that is interoperable with the application program such that delta objects are automatically created and stored upon every data object change in the application program may ensure that every single, small change of the state of the application program is persisted and can be used for reconstructing and/or analyzing the state of the application program quickly and easily. According to embodiments, the creation of a delta object and the storing of the delta objects in the delta store is automatically triggered by and/or inherently associated with the execution of one of the change operations in the application program. For example, the framework can comprise class files for each of a plurality of different predefined types of data change operations and can be configured to automatically create the delta objects in the form of new instances of the one of the class files corresponding to the currently performed data change operation.

According to embodiments, the data object changes induced by every change operation performed in the application program on any one of the data objects of the application program is represented in a delta object that is stored in the delta store (provided that the integrated transaction within which the change operation is performed, and within which the delta object is created and stored commits successfully).

This may be beneficial because it is ensured that every change of DOs in every submodule of the application program is recorded in the delta store in a consistent and transaction-safe manner.

### Delta Store

The delta store is a data store used for storing delta objects.

According to embodiments, the delta store is a data store that is adapted to store and maintain the delta objects in such a way that they are stored in sequentially adjacent physical storage areas in accordance with the chronological order of physically writing the delta objects on the delta store. For example, the delta store can be an "immutable data store", also referred to as "append only store".

This means that the delta store is a data store that ensures that after a delta object is stored in the delta store, the physical storage area to which the delta object was stored is maintained even in case some background routines are performed which may typically modify the location where a data record is stored. For example, hard disc defragmentation routines may induce a modification of the physical storage area comprising a data records. This effect is disabled in the delta store according to embodiments of the invention: the delta store and the software used for storing delta objects in the delta store are configured to ensure that delta objects stored sequentially in chronological order one after another will be stored in adjacent storage areas in the delta store in accordance with the chronological sequence of their respective physical write events and this physical order of the delta objects in the delta store is maintained throughout the usage time of the delta store for storing delta objects of an application. Update and delete operations and insert operation for storing a new delta object in between already stored delta objects may not be allowed.

For example, the "append only" delta store can be a data store managed by a queuing system and/or managed by a streaming application.

According to preferred embodiments, the delta store is a logical storage unit combprising a plurality of physical storage unit which are managed such that parallel write and/or read operatins can be performed on the delta store, e.g. for writing and reading delta objects. For example, the multiple physical storage units can be distributed physical storage units connected with each other via a network, e.g. the internet or an intranet.

This may have the advantage of a particular high performance, because multiple delta objects can be stored in parallel to the different physical storage units of the delta store. Often, read/write operations on a physical data store constitute the bottleneck of computer systems used for persisting, analyzing and/or restoring large amounts of data. Hence, by using a delta store comprising multiple physical storage units in combination with a software adapted to write and/or read the delta objects in parallel, the speed of storing and/or reconstructing the state of an application program can greatly be increased.

For example, the delta store can be managed by a combination of a queuing system system and a distributed in-memory database like Apache ignite or hazelcast which is configured to delivere a unique sequential ID for each of the delta objects stored in the qeue management system. The in-memory database can be configured to create unequivocal IDs that can be used as a kind of "queuing-system-generated" transaction-ID for each of the integrated transactions, whereby these type of transaction-IDs in combination with the timestamps of the delta objects may be used as unequivocal identifiers of the individual delta objects which allow storing a stream/queue of delta objects to many different physical storage units in parallel such that the original order of the delta objects in the stream/queue can be reconstructed. This may ensure that the original order of delta objects in the qeue/the stream of delta objects can be reconstructed although the delta objects were stored to different physical storage units. Hence, the reconstructed order of delta objects allows directly deriving UNDO or REDO operations which can be executed right in the order of their creation.

These embodiments have a particularly good performance and scalability.

According to embodiments of the invention, the delta store is a data store that is free of cross-table and inner-table constraints, in particular uniqueness constraints imposed by relational database management systems for primary key columns.

For example, the delta store can be a database table that is free of any constraints, in particular uniqueness constraints. Hence, in a further beneficial aspect, a sequential write (append only) of delta objects in the delta store is much faster in the delta store then traditional databases where a lot of updates has to be made which have to comply to various constraints to ensure data integrity and consistency.

For example, there exist specialized file systems which are optimize for fast, distributed storing of sequential data in multiple different, distributed physical storage units like LogDevice.

According to other embodiments, the delta store is a relational database, in particular a relational database supporting automatically generated sequential IDs for the delta objects. However, this embodiment has the disadvantage that only one delta object can be written at a time.

According to embodimetns, the storing of the delta objects in the delta store is performed by a framework. According to embodiments, the framework (or any other software in charge of storing the delta objects in the delta store) performs a grouping of the delta objects created within not-yet committed integrated transactions based on the transaction-IDs of the transaction within which the delta objects were respectively created. The grouped delta objects can be cached by the framework/the software in charge of storing the delta objects. Once one of these not-yet committed integrated transactions is ready for commit (e.g. after all data change operations have been completed within the application program and should now be persisted), selectively all delta objects having been created within this particular "commit-ready" integrated transaction are stored in the delta store sequentially. The order of write operations which store multiple delta objects created in the said integrated transaction is in accordance with the timestamp comprised in each of the delta objects. Hence, according to embodiments of the invention, the chronological order of delta object related physical write operations in the delta store depends firstly on the chronological order of commit-ready events of the integrated transactions and secondly depends on the timestamps within each of the delta objects. Typically, each time stamp reflects the time of data change of a data object or class in the application program.

These features may be beneficial as they may ensure that a sequential scan of the physical storage areas in the delta store will provide a series of delta objects that is inherently ordered in accordance with the series of integrated transactions within which the DOs and/or classes of the application program were originally modified. A sequential read of a read/write head of a physical storage device will automatically, without any jump operations to distant physical storage areas and without any complex re-sorting of the read delta objects, provide a series of delta objects whose order corresponds to the order of original integrated transaction commit events and corresponds to the chronological order of the time stamps of the delta objects within a given transactional context. Hence, the series of delta objects that are obtained in a sequential read of the delta store can be used for reconstructing an original state of the application program (e.g. by applying UNDO commands derived from delta objects on an OLTP data store or directly on the application program as described for embodiments of the invention or by applying the delta objects) very quickly and in a transaction-based manner that confirms to the ACID criteria.

In a further beneficial aspect, as the order of the delta objects obtained in a sequential read already corresponds to the order of changes performed in a series of transactions, it is not necessary to load a large number of delta objects or the whole content of the delta store into memory in order to perform a sorting, parsing or other form of data processing in memory. The delta objects obtained in a sequential read are immediately ready for performing a series of delta-object-based REDO or UNDO operations on an OLTP data store or on the application program directly (as described for embodiments of the invention) and hence have a very small "memory footprint". The above-described way of storing delta objects in the delta-store may allow for a very fast reconstruction of the state of the application program that requires only minimum memory consumption even in case the delta store comprise many terabytes of delta objects.

According to embodiments, the delta objects are provided to the delta store in the form of a stream of delta objects. For example, the framework may sort the delta objects firstly into groups of delta objects in accordance with a "commit-ready" time of the integrated transaction within which they were created, then sort the delta objects within each group according to their timestamp, and then provide the sorted series of delta objects in the form of a stream to a software adapted to store the delta objects in the delta store.

According to embodiments, the delta store is a streaming database. In this case, the software adapted to store the delta objects in the delta store can be a streaming application.

This may be advantageous because several currently available streaming databases and streaming applications already come with inbuilt functionalities that can be used for implementing the method and system for storing, reading and processing data records (here: delta objects).

For example the streaming application Apache Kafka has an in build Streaming component which is highly scalable, fault-tolerant, and secure (able to protect stored data against unauthorized access, e.g. based on encryption algorithms). It guarantiees delivery and exactly-once processing semantics which is very helpful for implementing the delta store. Other streaming applications which may be used for storing the delta objects are e.g. Hazelcast Jet or Ignite Streaming.

According to one example, the streaming application is Apache Kafka. Its storage layer is essentially a massively scalable pub/sub message queue designed as a distributed transaction log. Kafka can connect to external systems (such as the framework or other software program configured for creating delta objects) for data import/export via Kafka Connect, and it allows users and other applications to subscribe to it and publish data (e.g. delta objects stored and read by the Apache Kafka framework to and from the delta store to one or more other applications, including real-time applications.

According to preferred embodiments, the streaming application comprises one or more analytical functions that are applied on the delta objects before they are stored in the delta store and/or after the delta objects are read from the delta store. Example analytical functions include creation of "materialized views" for data aggregations (dashboards, statistics, etc.), predictive analytics (intelligent forcast from past data analysis), customer behavior pattern analytics, machine behavior pattern analytics (how many consumables were used/how many products fabricated by a particular machine) etc. All those analytical functions are possible because all data and the complete history thereof is available in form of the delta objects that are to be stored or that have already been stored in the delta store.

According to embodiments, the delta store is a data store managed by a queuing system.

According to embodiments, the streaming application comprises a windowing function. The windowing function is used for defining a timeframe (eg. time window) which is used for neartime analytics and / or data recovery. For example the windowing function provides a standardized SQL query interface to the stored delta objects for neartime adhoc queries and reports.

According to some embodiments, the method comprises changing the state of the application program (or a copy/new instance thereof) to a state that is identical to the state of the application program at an arbitrarily selected time in the past. The changing of the state comprises:
- identifying the one of the delta objects in the delta store belonging to the most recently committed integrated transaction and being the most recently stored delta object of all delta objects within the said integrated transaction;
- starting with the identified delta object, sequentially traversing the delta objects in the delta store until a downstream-termination delta object is reached, the downstream-termination delta object being the one of the delta objects that belongs to the one of the integrated transactions having committed first after the selected time and that was first stored in the delta store after the select time, the traversing including the downstream-termination delta object and comprising sequentially undoing (e.g. in one or more UNDO operations) all DO changes specified in the traversed delta objects in the application program in which the DO changes were originally applied or undoing all DO changes in a new instance or copy of the application program that reflects the latest state of the application program.

The reconstruction of the application program (or a new instance thereof) at the selected time can be performed, for example, for crash recovery purposes, for increasing the robustness of the system against failures by providing multiple redundant copies of the application program, but also for performing debugging or testing purposes. For example, it may be beneficial to create multiple copies of a particular application program that represents the state of a complex industrial manufacturing process or a simulation thereof. It may be unclear with control parameter value (e.g. which temperature) provides the best result at a particular state in the workflow (e.g. a complex chemical process involving multiple sequentially executed reaction processes). By creating multiple instances of the application program having exactly the state of the original application program at a time of interest, it is possible to enter different control parameter values into the different application program instances and monitor the effect of the entered control parameter value on the outcome of the manufacturing process.

### OLTP data store

According to embodiments, the computer-implemented method further comprises:
- providing an OLTP-data store comprising the latest state of all DOs of the application program before the change operations were performed; and
- updating the OLTP-data store such that the updated OLTP-data store reflects the changes of the DOs caused by the change operations.

The updating of the OLTP-data store with the one or more DO changes created by the one or more data change operations performed within the particular one of the integrated transactions is executed within the said integrated transaction.

The updating of the OLTP-data store with the one or more DO changes can be performed continuously to ensure that any data object change occurring after the OLTP data store was initially provided is updated such that it now also reflects these DO changes and hence continues to reflect the latest state of the application program.

For example, when the application program is instantiated the first time, and/or at any later moment in time, the totality of data objects contained in the application program can be persisted in the OLTP data store. Then, all changes induced by data change operations performed in the application program after the OLTP data store was created are propagated to the OLTP data store and used for updating the data content of the OLTP data store. The updating is performed continuously to ensure that any change in the state of a data object in the application program is propagated to the OLTP data store. The OLTP data store hence is ensured to always represent the latest state of the application program and the data objects contained therein. As the updates are performed within the same integrated transactions within which the change operations are performed and within which the delta objects are created and stored, it is ensured that the state of the application program, the content of the delta store and also the content of the OLTP data store are always in sync and transactionally consistent. Hence, the application program is the place where the data objects are changed initially and where the integrated transactions are begin and committed. The OLTP data store is a data store that always reflects the latest state of the application program but that is preferably free of any data being indicative of a previous state of the application program and its data objects. The delta store is a data store comprising all changes introduced by the change operations in the application program (starting e.g. from an arbitrary user-selected time, e.g. the time when the application program was initially instantiated) in sequential order on a physical storage space, whereby the order of the delta objects in the physical storage area corresponds to the sequence of commit events of the integrated transactions comprising the delta objects and, within a given transactional context, corresponds to the chronological sequence of timestamps in the delta objects.

These features may be advantageous, as they may ensure that the data content of the OLTP data store is always available in a current, consistent state, whereby the OLTP data store preserves its OLTP capabilities and whereby in addition the data content of the OLTP data store at an arbitrarily selected time in the past can quickly be recovered by processing the delta objects stored in the delta store. This is because the data object changes are not only propagated to the OLTP data store in order to update the OLTP data store, the data object changes are in addition also persisted by means of delta objects in the delta store. The delta store preferably maintains the storage locations assigned to the individual delta objects in the moment of the physical write process. Hence, the chronological order of the physical write operations for storing individual delta objects is reflected by the series of adjacent storage areas to which the delta objects are stored. This ensures that a sequential scan/traversal of the delta objects in the delta store provides the delta objects exactly in the correct order needed to re-apply the changes encoded in the respective delta object on a previously created backup copy of the OLTP data store or to undo the changes encoded in the respective delta object on the OLTP data store that reflects the latest state of the application program. As a consequence, the recovery of the state of the OLTP data store can be performed very fast. The way the delta objects are stored in the delta store ensures that a read/write head of a physical data store device can quickly read all data change information necessary for reconstructing the state of the OLTP data store at a selected time simply by sequentially traversing the delta objects in the delta store.

By propagating any changes made within the application program both to the OLTP data store and to the delta store, mission critical application programs can be provided whose state is synchronized with and reflected by the OLTP data store in real-time and hence can be used for many mission critical scenarios such as for control of fly-by-wire aircraft, anti-lock brakes on a vehicle, and the like. For example, one or more different client applications may access the OLTP data store in order to receive current status information of the application program without directly interfacing with the application program. The OLTP data store may comprise structured data being descriptive of the data objects in the application program in a program-m language independent/agnostic form. This may ensure indirect interoperability of the application program with many other (client) programs and systems via the OLTP data store even though the application program and the one or more client programs may be written in different programming languages and/or may lack interfaces for direct data exchange.

After the data changes performed within a particular integrated transaction have been propagated successfully to both the OLTP data store and to the delta store, the transaction commits. According to embodiments, the commit event of an integrated transaction comprises removing all delta objects created within the committed integrated transaction from the cash of the framework that was used for creating the delta objects, for forwarding the delta objects to the delta store and for updating the OLTP data store with the respective data object changes.

### OLTP data store reconstruction I

According to embodiments, the method further comprises:
- receiving an indication of a selected time; for example, the selected time mentioned in this embodiment and in the embodiments described below can be received by the framework from a user interacting with a GUI element or from a client application having submitted a request comprising an indication of the selected time;
- reconstructing the state of the OLTP data store at the selected time, the reconstruction comprising:
   ∘ identifying the one of the delta objects in the delta store belonging to the most recently committed integrated transaction and being the most recently stored delta object of all delta objects within the said integrated transaction;
   ∘ starting with the identified delta object, sequentially traversing the delta objects in the delta store until a downstream-termination delta object is reached, the downstream-termination delta object being the one of the delta objects that belongs to the one of the integrated transactions having committed first after the selected time and that was first stored in the delta store after the select time, the traversing including the downstream-termination delta object and comprising sequentially **undoing** (e.g. in one or more UNDO operations) all DO changes specified in the traversed delta objects in the OLTP data store or in a copy thereof.

The reconstruction of the OLTP data store at the selected time can be performed, for example, for crash recovery purposes, but also for performing some data analysis or reporting task by querying the OLTP data store in a state at a selected time of interest. This feature may be advantageous as the OLTP data store reconstruction can be performed very fast. The UNDO operations are obtained by linearly scanning a physical data store (the delta store) and deriving UNDO operations from the delta objects traversed during the scan.

These features may be advantageous as a method of reconstructing the state of an OLTP data store is provided that does not require the frequent creation of backup copies: as a previous state of the OLTP data store is created starting from the current version of the OLTP data store, the creation of a complete backup copy (snapshot) of the original OLTP data store is rendered unnecessary. The frequent creation of complete backups has been observed to be impracticable for large databases for space and performance reasons. OLTP data stores of complex applications, e.g. of large airlines, banks or manufacturing companies currently often comprise several petabytes of data. To the contrary, as the current OLTP data store state is always available, the problems associated with repeatedly creating database snapshot copies may be avoided completely.

According to embodiments, when the UNDO operations are executed on the OLTP data store, the UNDO operations are performed within transactions whose begin and commit times correspond to the begin and commit events of the integrated transactions within which the traversed delta objects were stored. This may be beneficial as the UNDO operations being performed within transactions whose begin and commit events correspond to the begin and commit events of the integrated transactions ensure that a previous state of the OLTP data store is obtained in a transactionally save manner. This also ensures that it is possible to repeatedly set the state of the OLTP data store to different time points of interest without risking data inconsistencies. Thus, the reconstruction of a state that never actually existed in the original OLTP data store as this state does not correspond to a state when all data changes were committed can be avoided.

### OLTP data store reconstruction II

According to embodiments, the computer-implemented method further comprises:
- creating a backup of the OLTP data store at a time referred to as backup time;
- receiving an indication of a selected time;
- reconstructing the state of the OLTP data store at the selected time, the reconstruction comprising:
   ∘ identifying the one of the delta objects in the delta store belonging to the one of the integrated transactions having committed first after the backup time and that was first stored in the delta store after the backup time;
   ∘ starting with the identified delta object, sequentially traversing the delta objects in the delta store until an upstream-termination delta object is reached, the upstream-termination delta object being the one of the delta objects that belongs to the one of the integrated transactions that was last committed before the selected time and that was last stored in the delta store before the selected time, the traversing including the upstream-termination delta object and comprising sequentially **applying** ("re-doing", e.g. in one or more REDO operations) all DO changes specified in the traversed delta objects on the backup.

The reconstruction of the OLTP data store at the selected time based on a backup of the OLTP database can be performed, for example, for crash recovery purposes, but also for performing some data analysis or reporting task by querying the OLTP data store in a state at a selected time of interest. The redo operations are applied on the backup created most recently before the selected time.

These features may be advantageous as the reconstruction can be performed very fast. The REDO operations are obtained by linearly scanning physical storage areas of the delta store comprising a sequence of delta objects and deriving REDO operations from the delta objects traversed during the scan.

According to embodiments, when the REDO operations are executed on a backup copy of the OLTP data store, the REDO operations are performed within transactions whose begin and commit times correspond to the begin and commit events of the integrated transactions within which the traversed delta objects were stored. This may be beneficial as the REDO operations being performed within transactions whose begin and commit events correspond to the begin and commit events of the integrated transactions within which the delta objects were created ensure that the state of this backup copy is set to a later state in a transactionally save manner. This also ensures that it is possible to repeatedly set the state of the backup to different time points of interest without risking data inconsistencies. Thus, the reconstruction of a state that never actually existed in the original OLTP data store as this state does not correspond to a state when all data changes were committed can be avoided.

These features may be advantageous as a method of reconstructing the state of an OLTP database is provided that does not require the frequent creation of backup copies: as the delta objects are organized sequentially on a data storage medium, they can be read very fast. A single OLTP database copy created e.g. upon the first instantiation of the application program may be sufficient. The creation of additional complete backup copies is possible, but often not necessary. This may safe processing power.

### OLTP data store reconstruction III

According to embodiments, the computer-implemented method further comprises providing an OLTP-data store copy at a time referred to as copy time. The OLTP data store copy comprises the latest state of all DOs of the application program at the copy time. The method comprises: after the copy time, continuously updating the OLTP-data store copy with delta object copies created after the copy time such that the updated OLTP-data store copy comprises and represents the latest state of all DOs of the application program. For example, the framework may traverse and parse delta objects in order to extract OLTP data store update commands from the delta objects and use the data store update commands for updating the OLTP data store copy. The OLTP data store copy can have the same or a different structure as the original OLTP data store copy.

According to preferred embodiments, the updating of the OLTP-data store copy with the copies of the delta objects created within any particular one of the integrated transactions is executed within the said integrated transaction. This means that in case the updating of the OLTP data store copy with a copy of one of the delta object fails, the creation of all delta objects within the same integrated transactions, the data object changes reflected by these delta object, the storing of the delta objects in the delta store and the updating of the OLTP data store with the said data object changes is aborted or revoked.

According to embodiments, the updating of the OLTP-data store copy with the copies of the delta objects is performed in near-time or real-time.

These features may be advantageous as the OLTP data store copy is ensured to reflect the latest state of the DOs of the application program without applying any REDO or UNDO operations. This means that the OLTP data store copy continuously updated with copies of delta objects can immediately be used as a replacement for the original OLTP data store, e.g. for disaster recovery purposes.

According to embodiments, the OLTP data store copy is used for replacing the OLTP data store immediately and fully automatically in the case of a failure of the OLTP data store that is continuously updated by the framework.

The OLTP data store copy can be a remote OLTP data store copy or a local OLTP data store copy.

According to embodiments, the delta object copies are transferred to the remote OLTP data store copy via a network asynchronously (asynchronous in respect to the delta objects stored in the delta store).

These features may be advantageous as the creation of additional OLDP data store backups for disaster recovery purposes is not necessary any more as there is always an additional OLTP data store available that reflects the latest state of the application program and that can be used in case of an complete failure of the original OLTP data store.

### OLTP data store/application state reconstruction general

According to embodiments, when the REDO operations are executed on a backup copy of the OLTP data store, or when the UNDO operations are executed on the original OLTP data store, the REDO or UNDO operations are performed within transactions whose begin and commit times correspond to the begin and commit events of the integrated transactions within which the traversed delta objects were created and stored.

This may be beneficial as the REDO and UNDO operations being performed within transactions whose begin and commit events correspond to the begin and commit events of the integrated transactions within which the delta objects were created ensure that the reconstructed state of the OLTP data store or OLTP data store copy reflects a state of the application program and/or of the original OLTP data store that actually existed and that could be "seen" by application-program-external clients (which are not able to see uncommitted changes in the application program and in the OLTP data store).

According to embodiments, the reconstruction of the state of the application program at a selected time covers two aspects: in a first aspect, the state of the OLTP data store at the selected time is reconstructed based e.g. on UNDO or REDO commands derived from delta objects. These REDO or UNDO commands are performed within a transactional context (i.e., within reconstruction transactions) which corresponds to the borders of the integrated transactions indicated in the delta store. In a second aspect, the state of the application program is reconstructed from the reconstructed OLTP data store, e.g. based on an object-oriented domain model that maps data structures in the OLTP data store to data objects, attributes and object associations. The reconstruction of the application program from the OLTP data store can be performed outside of a transactional context. It can be performed after the reconstruction of the state of the OLTP data store has completed or, more preferably, is performed in parallel to the reconstruction of the OLTP data store, whereby each commit of a reconstruction transaction, the state of the data objects modified by the committed reconstruction transaction is updated.

According to embodiments, the method comprises reconstructing the state of the application program at the selected time. The reconstruction of the state of the application program comprises instantiating data objects in accordance with the state of the totality of data objects specified in the data content of the reconstructed OLTP data store.

Using the OLTP data store in combination with the stored delta objects for creating new instances of the application program may have the benefit of being able to flexibly create application program instances representing the state of an application program at an arbitrary time in the past. This may be highly advantageous for testing and error detection purposes in complex software systems. For example, in order to test the hypothesis that the entry of a certain parameter led to a faulty production control, it is possible to set the state of the application program back to a state right before this parameter was entered, entering a different parameter value and monitor the effect on this new parameter value on the production process controlled by the newly created instance of the application program.

These features may be advantageous, as the delta store allows for a highly efficient, fast and memory-saving recovery of the OLTP data store at an arbitrarily selected time in the past. By recovering the state of the application program based on the recovered OLTP data store, embodiments of the invention provide for a method that allows for a highly efficient, fast and memory-saving recovery of a complex application program at an arbitrarily selected time in the past.

According to embodiments, the computer-implemented method further comprises:
- providing an input data store, the input data store being the OLTP data store or a copy or version thereof, the input data store reflecting the state of the DOs of the application program at a current or previous time;
- receiving an indication of a selected time;
- reconstructing the state of an input data store such that it reflects the state of the DOs of the application program at the selected time; for example, the input data store can be reconstructed at the selected time as described herein for different embodiments of the invention, e.g. based on reconstruction approaches I-III;
- creating a new instance of the application program (e.g. by closing and re-instantiation or creating an additional instance) such that the state of the new instance of the application program reflects the state of the application program at the selected time, the creation comprising:
   ∘ reading data being descriptive of the state of the plurality of data objects of the application program at the selected time from the input data store; and
   ∘ creating the DOs of the new instance of the application program and the associations between the said DOs in accordance with the read data, the said DOs and DO associations being created according to a predefined object-relational mapping of an object-oriented domain model to a database schema of the input data store.

### Integrated Transactions

Performing the change operations, creating and storing the delta objects and optionally also performing the updating of the OLTP data store within a plurality of integrated transactions spanning at least the application program, the software performing the storing operations in the delta store and optionally also the software in charge of updating the OLTP data store may be advantageous as the said operations are all performed in accordance with the ACID criteria: a change of one or more data objects or classes (including classes implementing method interfaces provided by the framework) performed within a given integrated transaction may ensure that changes of data objects or classes in the application program which are not successfully propagated to the OLTP data store via the OLTP data store updates or that fail to be persisted in the delta store in the form of delta objects are revoked in the application program. Hence, any OLTP data store reconstruction program that sequentially scans the data content of the delta store and/or that is to apply the UNDO or REDO operations on the OLTP data store or a copy thereof can be sure that neither the OLTP data store nor the delta store comprises any data object changes not contained in the application program. The reconstruction process can also be sure that neither the OLTP data store nor the delta store misses change information that has already taken effect within the application program.

According to embodiments, each delta object comprises a transaction-ID of the one of the integrated transactions within which the delta object was created and stored in the delta store. In addition, or alternatively, each delta object is stored in the delta storage in association with an identifyer of the one of the integrated transactions within which the delta object was created and stored in the delta store. For example, the transaction-ID can be a numerical value or an alphanumerical character string that is unique for all integrated transactions created and managed by a particular software program, e.g. a framework.

For example, the delta objects can be stored as key-value pairs in the delta store, whereby a combination of the transaction-ID and the timestamp of the delta object are used as key and the delta object is used as value. For example, all property values of the delta object can be stored in an XML object or a JSON object. This embodiment may ease the development of software programs and modules used for parsing the delta objects and creating REDO or UNDO operations adapted to re-apply or undo data object changes encoded in the delta object.

According to another example, the delta objects can be stored in the form of transaction-specific key-value pairs in the delta store. For example, all delta objects created within a particular transaction are combined together to form a single combined value. This value is stored (e.g. in the form of an XML or JSON object) in the delta store whereby the transaction-ID is used as the key. This embodiment may accelerate the reading and traversing of delta objects in the delta store as the amount of data that is read from the delta store per individual read operation is increased and the number of individual read operations may be reduced.

According to embodiments, each integrated transaction defines a integrated transactional context in which an event selected from a group comprising:
- a failure to store within the integrated transaction a delta object in the delta store and/or
- a failure to perform within the integrated transaction an OLTP data store update reflecting a DO change in the application program and/or
- a failure to perform within the integrated transaction a change operation on a DO in the application program
induces:
- a reversal of all DO changes in the application program having already been performed in the said integrated transaction; and
- a reversal of all OLTP data store updates having already been performed in the said integrated transaction; and
- a deletion of all delta objects having already been written in the delta store in the said integrated transaction.

These features may be advantageous as the integrated transactional context may ensure that the state (and the data content) of the application program, the state (and the data content) of the OLTP data store and the state (and the data content) of the delta store are always synchronized and consistent. In case a data object change operation in the application layer fails, the storing of all data object changes belonging to the same transaction as the failed change operation in the OLTP data store and the storing of all respective delta objects in the delta store will be prevented and any new OLTP data records and delta objects within this transaction that may have already been written to the OLTP data store or the delta store within the context of this failed transaction are deleted/revoked. Likewise, in case the storing of a delta object in the delta store fails or in case the updating of the OLTP data store fails, also the data object change operation in the application layer having triggered these storing operations and all other data object change operations within the same transactional context will be revoked in the application layer.

The strictly transactional data object change and storing process may be highly advantageous as it ensures that the reconstruction of the state of the OLTP data store at an arbitrarily selected time and in a guaranteed consistent manner can be performed quickly by scanning sequentially stored delta objects and directly applying REDO or UNDO operations quickly derivable from the delta object during this sequential scan.

It should be noted that the sequential scanning of the delta objects does not require the loading of large log files or large backup tables into the main memory which often makes state of the art recovery approaches very slow. As the way the delta objects are stored ensures they are provided in the order needed for a transactionally consistent OLTP data store recovery, it is not necessary to load the totality of delta objects into memory all at once. Rather, it is sufficient to process the delta object sequentially and hence with minimum memory consumption.

According to embodiments, each integrated transaction defines a integrated transactional context within which the performing of change operations in the application program, the storing of delta objects in the delta store and the performing of updates in the OLTP data store to reflect the said DO changes within the same integrated transaction is executed such that the ACID properties (Atomicity, Consistency, Isolation, Durability) are satisfied.

According to embodiments, the begin event of each of the one or more integrated transactions is triggered by a call to a function. Preferably, this function is adapted to receive the one or more change operations to be performed within this integrated transaction is provided by the application program as one or more arguments of this function. According to preferred embodiments, the call is performed by a data object of the application program. The function is provided by and performed in a framework that is interoperable with the application program. For example, the function can be a Java lambda function or another function that preferably provides a transactional isolation of data change operations performed within this function from data change operations performed in other functions.

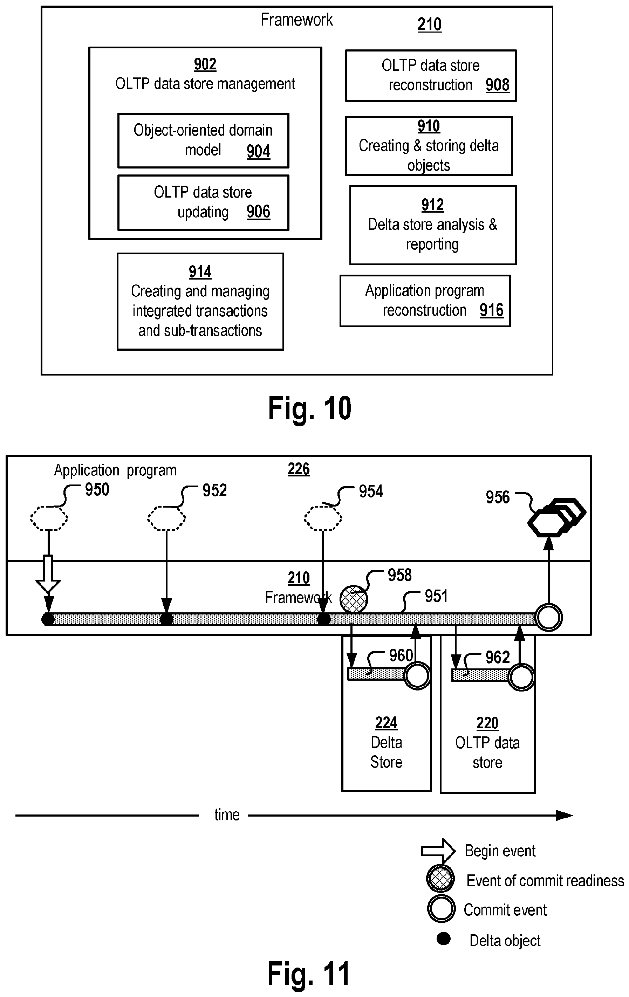

An example of a function receiving a plurality of data change operations as arguments is provided in the figure description of figure 11 in the form of the lambda function *repository*.unitOfWork("add_data", (uow) -> {argument1, ..., argumentn}.

This may greatly facilitate transaction management and may ensure data consistency at a very low level of a software system architecture: as any call to a particular method provided e.g. by the framework will inherently begin a new transactional context and as the transactional context will be terminated with a commit (or a failure) automatically when the called function returns, the programmer of the application program is freed of the burden to explicitly begin and commit (or roll back) individual transactions. This may increase the quality of the application program and speed up the software development process as any manually defined, explicit transaction handling may result in inconsistences, e.g. when the developer forgets to close a transactional context.

According to embodiments, the creation and storing of the delta objects within the integrated transactions is implemented in the framework.

Preferably, the program logic of the framework encoding the creation and storing of the delta objects within the integrated transactions is hidden from the application program and is accessible only via an interface. The interface allows the application program to trigger the begin of an integrated transaction and allow the application program to indicate which and how many change operations performed in the application program belong to this integrated transaction. However, the interface does not allow the application program to see or directly interact with the program logic used by the framework for creating and persisting the delta objects. Likewise, in embodiments where the framework is configured for continuously updating an OLTP data store with data changes performed in the application program within transactional context defined by the integrated transactions, the interface does not allow the application program to access ("see") or directly interact with the program logic used by the framework for performing these updates.

According to preferred embodiments, the program logic of the framework for creating and storing delta objects and, optionally, for repeatedly updating an OLTP data store, and for maintaining and controlling the integrated transactions (e.g. determining if the storing of delta objects and/or if an updated was performed successfully and, if not, performing revocation actions) is encapsulated and hidden from the application program logic. This may ensure that a developer of the application program at design time of the application program does not write any application program code that depends on framework-internal program routines for creating and persisting delta objects or updating the OLTP data store. The application program developer is merely able (and required to implement) calls to functions provided by the framework in order to begin a transactional context that is managed by framework-internal routines ant that automatically terminates (with a commit or roll back action) when the called transaction returns. Hence, the program logic of the framework is encapsulated and can be easily replaced, amended or updated without the need to amend any code in the application program. For example, framework-internal routines for creating, storing, reading and/or parsing delta objects, for updating the OLTP data store, for generating reports based on traversed delta objects or for recreating an instance of an application program or an OLTP data store at a selected time can be replaced, amended or updated without the need to amend any code in the application program. This may provide a great degree of flexibility to the programmer as the programmer is allowed to concentrate on the business logic of the application program. The task of handling and persisting changes of a data objects of the application program and/or the task of using the stored delta objects and/or an OLTP data store for analysis and recovery purposes is delegated completely to the framework which is accessed by the application program only via a defined interface. For example, the interface may comprise small set of interface classes and/or methods which hide implementation details from the application program.

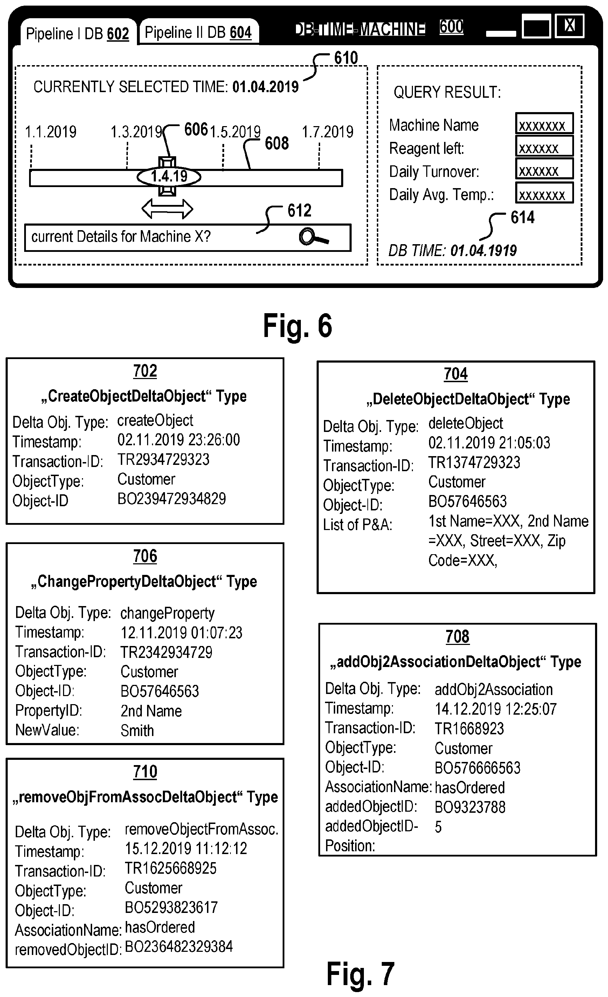

Hence, according to embodiments, of the invention, the change operations are operations performed within the application program, and hence represent functions and routines that are inherently linked to the data processing workflow performed by the application. Any data object change is automatically communicated from the application program to the framework and will be processed by the framework in a transaction-based manner .Some example implementations of how the integrated transactions are created and managed are described with reference to figures 7-11.

Hence, a programmer and software developer may fully concentrate on the development of the code that performs the actual data processing task, e.g. the control of a particular machine, and does not have to care about transaction management and does not have to write complex code in order to define when a transactional context should be created and when a transaction should commit. In some cases, the data change operations can simply be provided as arguments to a function (e.g. a Java lambda function) that triggers the creation of a respective integrated transaction in the framework.

The function can be provided by the framework which may also comprise more complex transaction management logic. Providing the data change operations as arguments to a function provided by the framework may have the advantage that a programmer will be automatically protected from forgetting to close a transactional context that was created previously, or implements data object change operations that are not persisted in the delta store or OLTP data store. By providing the data change operations as arguments of a method, the compiler will ensure that the begin and end point of a series of data change operations will always be encapsulated in an integration transaction context. If the brackets are not closed in the source code, the compiler will throw an error.

According to embodiments, any operation performed in the application program which changes one or more data objects (e.g. setting an attribute value, creating a new data object, deleting an existing data object) and/or which changes a class used as template for instantiating a data object automatically triggers the creation and begin of a respective integrated transaction and the successful completion of the said change operation within the application program triggers a commit event for the said transaction. This ensures complete transactional consistency of the data content of the OLTP database and of the delta store with the state of the data objects and the structure of the classes of the application program at any given moment in time.

According to embodiments, the delta objects are stored in the delta store in accordance with the chronological order of the commit events of the integrated transactions comprising the delta objects. For example, once all change operations which have to be performed in the application program within a given integrated transaction have completed, the integrated transaction is ready for commit and the framework starts persisting the delta objects of this integrated transaction in the delta store and, optionally, starts updating the OLTP data store with these changes. When the persisting of the delta object and the optional updating of the OLTP data store with the changes has successfully been executed, the integrated transaction that was "ready for commit" now actually commits. No other integrated transaction is allowed to store delta objects in the delta store unless the transaction that was ready for commit prior to this integrated transaction has successfully committed.

As a consequence, according to embodiments, the delta objects are stored in the delta store in accordance with the chronological order of the commit events of the integrated transactions comprising the respective delta objects.

According to embodiments, the delta store is used for reconstructing the state of the OLTP data store at an arbitrarily selected time. For example, the reconstruction can be performed by an OLTP data store reconstruction program. The framework or any other software application program can implement the functionality of the OLTP data store reconstruction program described herein for various embodiments of the invention.

According to embodiments, the traversing of the delta objects during the OLTP data store reconstruction process comprises:
- identifying, for each of the traversed delta objects, the one of the integrated transactions within which the delta object has been created and stored;
- performing the undoing of the DO changes specified in the traversed delta objects according to reconstruction approach I such that all DO changes specified in delta objects identified to have been created and stored in the same integrated transaction are **undone** in the OLTP data store or in the copy thereof within a common, single transaction; or
- performing the application of the DO changes specified in the traversed delta objects according to the reconstruction approach II such that all DO changes specified in delta objects identified to have been created and stored in the same integrated transaction are **applied** on the backup within a common, single transaction.

In other words, the borders of the integrated transactions within which data object changes and/or class changes performed within the application program were propagated both to the OLTP data store and to the delta store are used for reconstructing respective transactions during the OLTP data store reconstruction process (referred herein as "reconstruction transactions"). Hence, each reconstruction transaction corresponds to one of the integrated transactions used for propagating changes from the application program to the OLTP data store and the delta store. This means that the data changes specified in the totality of delta objects created within a particular integrated transaction are used for creating one or more respective UNDO or REDO operations for undoing (in the first reconstruction approach) or re-applying (in the second reconstruction approach) the said data changes on the OLTP data store or a previous version and copy of the OLTP data store.

This may be advantageous as it ensures that not only the process of storing the data object changes of the application program in the OLTP data store and the delta store is transactionally consistent, but also the process of reconstructing the OLTP data store at a particular time and the reconstruction process has the same transactional "granularity" as the delta store.

### The framework ("persistence framework")

According to embodiments, the method further comprises providing a software program referred to herein as "framework" or "persistence framework".

According to embodiments, the creation of the delta objects is performed by the framework.

According to embodiments, the framework is further configured for sorting the delta objects in accordance with the order of integrated transaction "commit-ready" events and, within a given integrated transaction context, in accordance with the order of timestamps contained in the delta objects as described herein for embodiments of the invention.

According to embodiments, the framework is further configured for storing the (optionally sorted) delta objects in the delta store directly or for providing the (optionally sorted) delta objects to a software (e.g. a streaming application) that is configured to store the delta objects in the delta store.

According to embodiments, the framework is further configured for continuously updating the OLTP data store such that any DO change induced in the application program by one or more change operations is reflected in the OLTP data store and thus that the data content of the OLTP data store always reflects the latest state of the DOs in the application program.

According to embodiments, the framework is further configured for performing the recovery of the OLTP database or a copy of the OLTP database and/or for performing the recovery of the application program at an arbitrarily selected time in the past as described herein for embodiments of the invention.

According to embodiments, the framework is interoperable with the application program. The framework is configured to manage the creation, commit and/or roll back of the integrated transaction, to perform the storing of the delta objects in the delta store and optionally also the updating of an OLTP database with data object change. The implementation of the said management and storing tasks is encapsulated and hidden from the application program such that the implementation of these tasks in the framework can be modified or exchanged without requiring a modification of the source code of the application program. The execution of any one of the DO change operations in the application program automatically induces the creation of a delta object being indicative of the change performed on the DO object.

According to embodiments, the framework comprises a function that is accessible to data objects of the application program for triggering the creation of an integrated transaction, whereby the created integrated transaction automatically terminates (with a commit or roll back event) when the called function returns.

According to embodiments, the function is configured to receive an indication of one or more data object change operations as function arguments, whereby the one or more data change operations are performed in the application program and the indication of the one or more data change operation is used by the framework for automatically creating one or more delta objects representing the data object changes induced by the data object change operations.

According to embodiments, the framework comprises classes for multiple different delta object types and the framework is configured for automatically selecting, in dependence on the type of change operation performed in the application program, the one of the multiple different delta object types that represents the type of data object change induced by the change operation.

According to embodiments, data object change operations comprise a class change operation. The framework is configured to create a delta object for this type of data change operation in the same way as performed for any other type of data object change operation (like setting a new attribute value, creating a new data object or deleting a data object). This may provide a high degree of flexibility, because it allows changing the class structure of the application program at runtime without the need to modify and/or recompile the source code of the persistence logic.

According to embodiments, the framework comprises an object-oriented domain model and comprises functions for automatically performing the updating of the OLTP data store with the changes induced by the change operations in accordance with the object-oriented domain model fully automatically.

According to embodiments, the framework is configured to automatically update the object-oriented domain model in response to receiving an indication of a data object change operation that is a class change operation. For example, the object-oriented domain model may assign a particular table to a particular data object class and may assign a column of this table to each attribute of this class. The table is used for storing class instances of this class, whereby each attribute value is stored in a respectively assigned column. In case a class change operation that adds an additional attribute to a particular class, the updating of the object-oriented domain model may comprise adding an additional column to the table and updating the mapping. This may provide a high degree of flexibility, because it allows changing the class structure of the application program at runtime without the need to manually modify the object-oriented domain model used for updating the OLTP data store.

According to embodiments, the framework comprises a plurality of different interface methods respectively representing one out of a plurality of different predefined data change operations. The execution of any one of the change operations in the application program automatically induces the execution of the one of the interface methods representing the type of the said data change operations. Each interface method is configured to automatically create a data change operation type-specific delta object being indicative of the change performed on the DO object.

According to embodiments, the plurality of DOs and their associations are defined in accordance with an object-oriented domain model. The storing of the DOs in the OLTP data store is performed by the framework such that the DOs and their attributes are stored in accordance with an object-relational mapping of the object-oriented domain model to a database schema of the OLTP data store.

The framework can be used as persistence framework for persisting delta objects and DO changes both to the delta store and the OLTP data store. In respect to the storing of the data object changes in the OLTP data store via the updates, the framework can be configured to handle object-relational impedance mismatch problems by replacing direct, persistent database accesses with high-level object handling functions.

In contrast to existing persistence frameworks such as Hibernate, the framework according to embodiments of the invention is more strongly connected to change operations performed in the application program as the change operations use interface methods provided by the framework. Hence, any change of a data object and even changes to classes used as templates for creating the data objects will inherently be communicated to the framework and as the framework comprises program code for creating and persisting the delta objects and for performing the OLTP data store updates, it is ensured that any change to the DO objects and/or class structures is immediately and automatically propagated to the OLTP data store without requiring a user to manually adapt the object-relational mapping between DOs and the data structures of the OLTP data store used for storing the latest state of the DOs of the application program.

Existing object-relational tools like Hibernate tend to render the application program inflexible and difficult to adapt to new requirements, because any amendment to the object-relational model of the DOs in the application layer would lead to an inconsistency in the object-relational mapping of Hibernate. Even in case it is possible to update the object-relational mapping of these persistence tools, then still there is the problem that the updated object-relational mapping does not fit to the table structure of database backups having been performed before the object-relational mapping was modified. Embodiments of the invention avoid this problem, because any change in a class file is represented as a respective delta object, and the traversal of this delta object would automatically induce a modification of the structure of the data in the OLTP data store.

According to embodiments, the data change operations comprise a class change operation. A class change operation is the creation, deletion or structural modification (e.g. modifying the number and type of attributes) of a class acting as template for a class-specific type of data objects. The changes induced by the class change operation are reflected in one or more of the delta objects.

For example, a class change operation can be a function that can be executed at the runtime of the application program. The framework is configured to automatically create a delta object in response to the execution of one of the class change operations, whereby the delta object is descriptive of the changes of the structure of the class and/or the structure of the newly created class and/or the identity of the deleted class. Any dynamically executed class change will result in a respective update of the DOs being instances of this class in the application program. For example, a removal of an attribute of an existing class will result in the removal of this attribute and its attribute value from all DOs which are instances of this class. The updating of the DOs is performed in a respective change operation. Preferably, the framework is in addition configured to update the object-relational domain model and the respective mapping accordingly such that the DOs that are created based on the changed class and the respective DO changes can be persisted in the OLTP database and/or to automatically create delta objects also for each DO change caused by a modification of the respective template class.

This may be advantageous as the change of a class structure is handled fully automatically. It is possible to reconstruct the state of the OLTP data store at an arbitrary time in the past even in case the structure of one or more classes used as templates for instantiating the DOs in the application program changed one or more times since this time in the past. Hence, structural changes to the classes and/or to OLTP database tables are therefore no longer an obstacle when it comes to reconstructing a previous state of the OLTP database.

### Time Traveling in an OLTP database

According to embodiments, the computer-implemented method further comprises:
- Displaying a GUI, the GUI comprising at least one GUI element enabling a user to select a point on a graphical representation of a timeline;
- In response to receiving the user's selection of the point on the timeline with the GUI element, performing the reconstruction of the OLTP data store at the selected time in accordance with several different approaches described herein, wherein the selected time is the time selected by the user with the GUI element; and
- In response to the completion of the reconstruction, automatically updating the GUI such that the GUI indicates that the state of the reconstructed OLTP data store is the state of the OLTP data store at the selected time.

This may be advantageous as a GUI is provided that enables a user to dynamically move the current state of the OLTP-DB forward and backward in time, even in case the OLTP data store should comprise multiple megabyte or gigabyte of data.

According to embodiments, the user's selection of a point in the graphical representation of the timeline, the respective reconstruction of the OLTP data store and the updating of the graphical representation of the timeline are performed multiple times in real-time.

Using a GUI that enables a user to select an arbitrary time in the past in combination with a fast OLTP data store reconstruction method according to embodiments of the invention may be advantageous as these features allow a user to examine and use the data content of an OLTP data store at an arbitrary time in the past in real time without requiring the OLTP data store to store many snapshots or versions of the data content (which consumes a lot of storage space, reduces performance and imposes a challenge in respect to version management). Rather, according to preferred embodiments, the data content of the OLTP data store merely reflects a single, particular state of the data objects of the application program, e.g. the current state or the state at a selected time in the past. Thanks to the delta objects in the delta store, the state of the OLTP data store can be quickly reconstructed in real-time at an arbitrary time in the past, thereby enabling a user e.g. to perform error analysis of an industrial production pipeline or any other kind of analysis that spans a period of time.

According to embodiments, the state of an application program is synchronized with the state of the data content of the OLTP data store selected by the user via the GUI.

This may be advantageous as the user is enabled to set the state of a complex application program easily and in real time to an arbitrarily selected time in the past. This may allow performing complex error analysis tasks, performing an analysis regarding the behavior of the application program in response to different input data and many other use-case scenarios.

According to embodiments, the user's selection of a point in the graphical representation of the timeline, the respective reconstruction of the OLTP data store and the updating of the graphical representation of the timeline being performed within a session context of the user interacting with the GUI, wherein the reconstruction of the OLTP data store is performed on a session-based copy of the OLTP data store, the lifetime of the session-based OLTP data store copy being limited to the session context of the user.

The session-based dynamic reconstruction of an application program can be used, for example, for the purpose of debugging the application program and/or for testing how the application program or a system controlled by the application program behaved at a particular time in the past. Optionally, different input data can be entered into the previous version and respective instance of the application program than the input data actually provided at that previous time in order to assess the impact of the entered data on the process outcome. Providing session-based versions of the application program ensures that other users currently using this application program are nod adversely affected as the reconstruction of the application program state at the selected time was performed on a newly created, session-bound instance of the application program.

In a further aspect, the invention relates to a computer system as specified in claim 20. The computer system comprises:
- a data store referred to as "delta store";
- an application program comprising a plurality of data objects - DOs, the application program being configured to perform change operations which respectively create, modify and/or delete at least one of the DOs in the application program, wherein the application program is configured for initiating the creation of one or more integrated transactions and for performing the change operations within the one or more integrated transactions;
- a software program (e.g. the application program or a framework operatively coupled to the application program or a combination thereof). The software program is configured for: creating, in response to the performing of the one or more change operations, delta objects, each delta object being descriptive of one or more DO changes caused by one of the change operations; and storing the delta objects in the delta store. The creation and the storing of the ones of the delta objects being descriptive of one or more change operations within a particular one of the integrated transactions is executed within the said integrated transaction. According to embodiments, this software program is also configured for creating and managing the integrated transactions. For example, the creation of an integrated transaction can be performed in response to a call of a function provided by the framework by a data object of the application program.

According to embodiments, the computer system further comprises an OLTP data store. The OLTP data store comprises the latest state of the DOs of the application program before the change operations was performed. The software program is configured for updating the OLTP-data store such that the updated OLTP-data store reflects the changes of the DOs caused by the change operations, wherein the updating of the OLTP-data store with the one or more DO changes created by the one or more data change operations performed within the particular one of the integrated transactions is executed within the said integrated transaction.

In a further aspect, the invention relates to a computer readable medium as specified in claim 19 comprising instructions that when executed by a processor causes the processor to execute a method for persisting data objects of an application program according to any one of the embodiments described herein.

Also disclosed herein is a computer-readable storage medium comprising computer-interpretable instructions which, when executed by a processor, cause the processor to provide a framework as described herein for embodiments of the invention.

According to some embodiments, the framework is operatively coupled to an application program comprising a plurality of data objects - "Dos". The framework further comprises an interface to a delta store and is configured for:
- receiving an indication of change operations which respectively create, modify and/or delete at least one of the DOs in the application program from the application program;
- in response to the receiving, creating delta objects, each delta object being descriptive of one or more DO changes caused by one of the change operations; and
- storing the delta objects in the delta store.

Thereby, the creation and the storing of the ones of the delta objects being descriptive of one or more change operations within a particular one of the integrated transactions are executed within the said integrated transaction.

According to embodiments, the framework implements additional functions such as one or more functions selected from a group comprising updating of an OLTP data store with DO changes, reconstructing the state of the OLTP data store or the application program at a selected time in the past, providing interface methods, providing templates for different types of delta objects, providing data object persistence routines in accordance with an object-oriented domain model that are automatically updated in accordance with dynamic modifications of classes of the application programs, and others. Various additional features and functionalities of the framework are described herein in combination with other features and components such as the delta store and the application program. However, the framework can be provided, sold and distributed in isolated form. The framework can be used by programmers for and during the development of new application programs, thereby enabling a programmer to develop application programs which make use of the framework and in particular its interface methods for developing application programs which implicitly trigger the creation of delta objects, the persisting of the delta objects to the delta store and the updating of the OLTP data store within integrated transactions whenever DOs or classes are modified in the application program. The developer may completely or largely be freed of the burden to explicitly write code for creating and persisting the delta objects, for updating an OLTP data store, for beginning, committing and rolling back failed integrated transactions, for persisting the latest state of the DOs in an OLTP data store according to an object-relational mapping and for generating reports as all these routines can be provided by the framework already.

A "computer system" as used herein is a machine or a set of machines that can be instructed to carry out sequences of arithmetic or logical operations automatically via computer programming. Modern computers have the ability to follow generalized sets of operations, called "programs", "software programs" or "software applications". These programs enable computers to perform a wide range of tasks. According some embodiments, a computer system includes hardware (in particularly, one or more CPUs and memory), an operating system (main software), and additional software programs and/or peripheral equipment. The computer system can also be a group of computers that are connected and work together, in particular a computer network or computer cluster, e.g. a cloud computer system. Hence, a "computer system" as used herein can refer to a monolithic, standard computer system, e.g. a single server computer, or a network of computers, e.g. a clout computer system.

A "change operation" as used herein is any operation performed by and/or within an application program that creates a new data object of the application program (e.g. based on a class acting as a template for a new data object instance), and/or that modifies an existing data object of the application program (e.g. changes the value of a data object attribute) and/or that deletes an existing data object of the application program (e.g. changes the value of a data object attribute).

A "transaction" as used herein is an atomic change of state of data. A transaction is a set of one or more data processing operations performed as an individual, indivisible unit of work. Each transaction must succeed or fail as a complete unit. It can never be only partially complete. Transaction processing systems, e.g. OLTP data stores, consist of computer hardware and software hosting a transaction-oriented controller that performs the routine transactions necessary to conduct a particular task such as manufacturing, process control, shipping, etc.

A "commit ready time" of an integrated transaction as used herein is the time when all data change operations to be performed the application program within this integrated transaction have been performed but the integrated transaction has not yet committed. This means that at the commit ready time, the delta objects reflecting the said data changes need to be stored to the delta store and optionally also the OLTP data store needs to be updated with these changes. The framework is configured to ensure that the integrated transaction commits only after a successful storing of all delta objects in the delta store and, according to some embodiments, after a successful updating of the OLTP data store with the data changes. Accordingly, a "commit ready event" is an event that the framework is notified of the commit-ready-time of an integrated transaction.

An "integrated transaction" as used herein is a transaction that guarantees atomicity in "global transactions" that are executed across two or more software components such as application programs and software that manages a data store. An "integrated transaction" could also be referred to as "cross-application transaction", whereby any software used for storing data in a data store may also be considered an "application". For example, an integrated transaction can be implemented in accordance with the X/Open XA standard (short for "eXtended Architecture"), a specification that was released in 1991 by X/Open for distributed transaction processing (DTP). To guarantee integrity, XA uses a two-phase commit (2PC) to ensure that all of a transaction's changes either take effect (commit) or do not (roll back), i.e., atomical-ly. XA describes the interface between a global transaction manager and a specific application.

According to embodiments, the software that creates the delta objects uses XA to create integrated transactional contexts by instantiating an XA transaction manager using a library or separate service. The transaction manager tracks the participants in the transaction (i.e. the various data stores to which the framework writes, i.e., the delta store and optionally also the OLTP data store), and works with them to carry out the two-phase commit. In other words, the XA transaction manager is separate from an application's interactions with servers. XA maintains a log of its decisions to commit or roll back, which it can use to recover in case of a system outage.

An "integrated transaction" is a transaction in accordance with the ACID criteria that covers at least operations performed within the application program and storing operations performed within a software used for storing the delta objects in the delta store. According to some embodiments, the transaction in addition covers storing operations performed within a software used for updating an OLTP data store with the data object changes. According to some embodiments, the integrated transactions are implemented based on the two-phase-commit protocol. According to other embodiments, other protocols can be used ensuring that all operations performed in the application program, the storing operations in the delta store and, optionally, the storing operations in the OLTP data store, which are performed within the same integrated transaction, are performed according to the "all or nothing principle": either they are all performed successfully (commit event), or they are all not performed or rolled back (failure/roll back event).

The "ACID" criteria (Atomicity, Consistency, Isolation, Durability) as used herein is a set of properties of transactions intended to guarantee validity even in the event of errors, power failures, etc. A sequence of operations performed in one or more different applications (e.g. data object changes within an application program and storing operations performed by one or more software programs maintaining a data store) that satisfies the ACID properties is called a transaction. Hence, all operations contained within a transaction represents a single logical operation on the data. For example, the creation of a new data object, the assignment of new attribute values to various attributes of the new data object and the storing of each delta object representing one of the said data object changes can be performed within a single transaction referred herein as "integrated transaction" as the transaction comprises operations performed in two or more different software programs.

A "data object", also referred herein as "DO", as used herein is a data object within a **software application.** According to preferred embodiments, a DO is an instance of a class written in an object-oriented programming language such as, for example, Java. For example, a DO can be a Java bean. A DO can comprise one or more variables, also referred to as "properties" or "attributes", and respective data values. Some DOs may merely comprise one or more variables and may be used for holding a set of instance variables and/or associations with other DOs, thereby weaving a network of objects representing the object relationships. Other DOs may in addition or exclusively comprise one or more methods, also referred to as "functions", for manipulating the variable values of other DOs and/or for performing any other kind of data processing task, e.g. for monitoring or controlling an industrial production workflow, for aggregating the data contained in a plurality of other DOs, for selecting one or more DOs fulfilling a particular criterion, for creating new DOs and/or for deleting DOs. Typically, the creation of a new DO is implemented as the creation of a new instance of a class and the deletion of an existing DO is implemented as the deletion of an instance of a class.

For example, a DO "car_237428348" would be an instance of the class "Car" comprising variables such as "Color", "Date of registration", "manufacturer", "type", "fuel consumption" and it could hold an 1-n association with its owners (a collection of "Person" instances). In addition, it can comprise getter and setter methods enabling other DOs to read and manipulate the variable values currently assigned to the variables of the a DO "car_237428348".

A "class" as used herein is an extensible program-code-template for creating objects, providing initial values for state (member variables) and implementations of behavior (member functions or methods). In many programming languages, the class name is used as the name for the class (the template itself), the name for the default constructor of the class (a subroutine that creates objects), and as the type of objects generated by instantiating the class; these distinct concepts are easily conflated. When an object is created by a constructor of the class, the resulting object is called an instance of the class, and the member variables specific to the object are called instance variables, to contrast with the class variables shared across the class. In some programming languages, classes can only be declared at compile-time, not at runtime of the application program. In other languages, classes can be declared and their structure modified at runtime of the application program.

An "application **program" or "application software"** as used herein is software designed to perform a group of coordinated functions, tasks, or activities for the benefit of one or more users and/or for the benefit of an organization, e.g. a company. Examples of an application include a word processor, a spreadsheet, an accounting application, a web browser, an email client, a media player, a file viewer, an aeronautical flight simulator, or a maintenance or control program for a manufacturing process. According to preferred embodiments, the application program is a complex application program, e.g. an application program written in an object-oriented programming language such as Java and comprising thousands or even millions of DOs. The DOs dynamically interact with each other, are instantiated, modified and deleted at runtime of the software application and thereby represent and control important workflows and services implemented in **the application software.** For example, the application program can be an enterprise application software (EAS). The term EAS refers to a collection of computer programs with complex applications, tools for modeling how the entire organization works, and development tools for building applications unique to the organization. An EAS is intended to solve an enterprise-wide problem and aims to improve the enterprise's productivity and efficiency by providing technical control logic support functionality. EAS is computer software used to satisfy the needs of an organization rather than individual users. Such organizations include businesses, e.g. the mining, manufacturing, agricultural, energy, and service industries, and governments. For example, the application program can be an EAS configured to monitor or control one or more industrial production processes, e.g. in the context of the internet of things.

According to embodiments, the application program is a software program configured to display, manipulate, and store large amounts of often complex data and to support and/or automate industrial production processes or other processes with that data. The application program can perform manufacturing functions and/or many other functions such as order processing, procurement, production scheduling, customer information management, energy management, and accounting. It is typically hosted on servers and may provide simultaneous services to a large number of users, typically over a computer network. For example, the application program can be an enterprise resources planning (ERP) system, an EAS, or a customer relationship management (CRM) software.

A "data store" as used herein is a repository for storing and managing collections of data. A data store can be an in-memory data repository or, more preferably, a nonvolatile, persistent data repository. A data store can be a database, i.e., a collection of data managed by a database management system (DBMS), but also simpler store types such as files, directories, directory services, etc. A DBMS can be, for example, a DBMS configured for managing relational databases, object-oriented databases, NoSQL databases, key-value databases, wide column stores, etc.

An "Online transaction processing (OLTP) data store" as used herein is a data store, in particular but not necessarily a DBMS, configured for supporting transaction-oriented applications and processes. In other words, an OLTP data store is a OLTP-capable data store. The OLTP data store can be an in-memory data store or a nonvolatile data store. In particular, the OLTP data store can be configured to respond in real-time to requests of one or more users or client applications. An OLTP data store is a data store optimized for efficient, high throughput write operations such as INSERT and UPDATE database operations in the context of an OLTP-DBMS. According to embodiments, the OLTP data store is able to serve hundreds or even thousands of clients concurrently. An OLTP data store is any data store that supports OLTP queries. Often, the OLTP data store is a relational OLTP database maintained by an OLTP DBMS, in particular a relational OLTP DBMS. In some embodiments, the OLTP database is implemented as a graph-based DBMS, a table-oriented DBMS, a column-store DBMS, a row-store DBMS, an object-oriented DBMS (OODBMS) or other type of DBMS. OLTP is contrasted to OLAP (online analytical processing), which is characterized by much more complex queries, in a smaller volume, for the purpose of process workflow intelligence or reporting rather than to process transactions.

A "delta object" as used herein is a piece of data that is used for storing a change in one or more DOs. A delta object can be a data object created as instance of a class specified in an object oriented programming language, but can also have any other data format, e.g. an XML or JSON file. Preferably, a delta object comprises metadata being indicative of aspects of a change event (e.g. an ID of the DO that was created, deleted or modified, a timestamp indicating the time when the change operation that induced the delta object creation was applied to the DO in the application program, and the values of any changed variable after the change. Optionally, the delta object can in addition comprise the values of any changed variable before the change. Preferably, the delta object is free of any DO variable values which were not modified by the change operation.

A "timestamp" as used herein is a sequence of characters or encoded information identifying when a certain event is recorded by a computer, usually giving date and time of day, sometimes accurate to a small fraction of a second. The time at which the event is recorded by the computer can be used as an indication of the time of the event itself, in particular when the event happens within the computer itself, e.g. the event indicates a state change of a DO instantiated on the computer. For example, the timestamp can be specified in accordance with the ISO 8601 standard.

A "select time" as used herein is a time, usually a combination of a date and optionally also an indication of a particular hour, minute and/or second, that can freely be selected. For example, the selection can be performed by a user, by a software program, by a hardware device, or the like. The select time is not bound to any particularities of the application program, the framework, the delta objects or the OLTP data store described herein for embodiments of the invention.

A "change operation" as used herein is an operation that is performed within an application program and that changes the state of one or more DOs by creating, modifying or deleting a DO in the application program and/or that changes the structure of a class used as template for instantiating a DO. For example, the change operation can be the setting of a variable of a DO to a new value, the creation of a new DO, and/or the deletion of an existing DO. According to some embodiments, the programming language that was used for creating the application program allows declaring classes and/or modifying the structure of existing classes at runtime of the application program. In this case, the change operation can be the declaration of a new class in the application program and/or the deletion of an existing class and all DOs being instances of this class and/or the modification of the structure of an existing class. The modification of the structure can comprise adding an additional variable, adding an additional method, deleting an existing variable or deleting an existing method. According to embodiments, a modification of a class structure of a class automatically triggers the propagation of these structural changes to all instances of this class in the application program, whereby each DO structure update performed during the propagation can also be a change operation that triggers the creation of a respective delta object.

An "object-oriented domain model" as used herein is a specification of static structures of classes and objects as well as their associations and optionally also their behavior. Preferably, the object-oriented domain model is stored in a data format that allows the automated creation of data container structures in the OLTP data store such that the data containers, e.g. tables or nodes of a graph, are adapted to store DOs and their associations in accordance with this model. According to embodiments, the model is maintained by a software that generates a graphical representation of the type and structure of object classes and their associations ("relations") specified in the model.

A "framework" as used herein is universal, reusable software environment that provides particular functionality as part of a larger software platform to facilitate development of software applications, products and solutions. Software frameworks may include support programs, compilers, code libraries, tool sets, and/or application programming interfaces (APIs) that bring together all the different components to enable development of a project or system. According to embodiments, the framework comprises at least some program logic for creating delta objects, for storing delta objects in a delta store, and optionally also for propagating DO chantes to the OLTP data store, and preferably also for creating and maintaining an integrated transactional context that covers DO changes in the application layer as well as the write operations performed in the delta store and optionally also the OLTP data store. According to embodiments, the framework further comprises interface methods implemented by one or more classes of the framework. Hence, a DO executing a data change operation will implicitly call and induce execution of some program code specified in the framework, e.g. code for creating delta objects and/or for creating and committing a transaction. According to embodiments, the framework in addition or alternatively comprises functionalities for persisting the current state of the DOs in the application program in accordance with an object-oriented domain model to a relational database used as the OLTP data store.

According to embodiments, the framework, unlike in libraries or in standard user applications, dictates the overall program's flow of control in respect to the creation and storing of delta objects and optionally also in respect to the updating of the OLTP data store. The framework is also in control of determining whether or not an integrated transaction has successfully completed or not and whether the integrated transaction should terminate with a commit or a roll back event. Hence, the flow of control in respect to these tasks is not dictated by the caller, the application program, but rather by the framework, which hides implementation details from the caller.

A "streaming application" as used herein is software configured to allow other applications to exploit a parallel processing of data. According to preferred embodiments, a streaming application is configured to allow other applications to exploit a parallel storing of data on many different physical data stores. Often, the bottleneck of data storing tasks is disc access performance, not CPU or memory capacity. Hence, a software application that allows parallel write (and read) operatins to many separate physical data stores which are managed in the form of a single logical "delta store" may have the advantage of a particularly high performance.

A streaming application may enable these applications to use multiple computational units, such as the floating point unit on a graphics processing unit or field-programmable gate arrays (FPGAs), without explicitly managing allocation, synchronization, or communication among those units.

According to embodiments, the streaming application is a software comprising a set of functions ("kernel functions") and that is configured to receive a sequence of data (a stream) and apply one or more of the functions on each element in the stream. According to embodiments of the invention, the stream of data is a stream of delta objects received from a framework that has created the delta objects. The kernel functions are usually pipelined. Streaming applications are configured to provide optimal local on-chip memory reuse in order to minimize the loss in bandwidth, accredited to external memory interaction when processing the data stream.

According to embodiments, the streaming application uses uniform streaming, where one kernel function is applied to all elements in the stream. Since the kernel and stream abstractions expose data dependencies, compiler tools can fully automate and optimize on-chip management tasks.

According to embodiments, the streaming application is adapted to using programming language features - eg. Java, Scala or Go - to get an optimal throughput of the processed data stream. For example, a compiler of the programming language used for writing the framework and the application program is used for optimizing the memory access and the kernel functions.

The streaming application can be, for example, Apache Kafka. Apache Kafka is an open-source stream-processing software platform developed by LinkedIn and donated to the Apache Software Foundation, written in Scala and Java. Apache Kafka is a unified, high-throughput, low-latency platform for handling real-time data feeds. Its storage layer is essentially a "massively scalable pub/sub message queue designed as a distributed transaction log, making it highly valuable for enterprise infrastructures to process streaming data. Additionally, Kafka connects to external systems (for data import/export) via Kafka Connect and provides Kafka Streams, a Java stream processing library. Apache Kafka allows users to subscribe to it and publish data to any number of real-time applications.

According to embodiments, the streaming application is configured to store data objects, e.g., key-value messages, that come from arbitrarily many processes called producers. The data can be partitioned by the streaming application into different "partitions" within different "topics". Within a partition, the data object in the stream are strictly ordered by their offsets (the position of a message within a partition), and indexed and stored together with a timestamp. Other processes called "consumers" can read data objects from partitions. For stream processing, a streaming application can offer an API (e.g. the Streams API in the case of Kafka) that allows writing Java applications that consume data from the streaming application and write results back to the streaming application. For example, the framework that creates the delta objects and that may optionally in addition be configured to continuously update the OLTP data store may act as a producer that provides a stream of delta objects to the streaming application and that in addition acts as a consumer that receives a series of delta objects obtained by the streaming application sequentially scanning and traversing the delta store, e.g. for the purposes of using the read delta objects to reconstruct the state of the OLTP data store at a selected time.

A "streaming database" as used herein is a data store, wherein write and/or read access to this data store is controlled by a software referred to as "streaming application". In context of this invention a streaming database preferably fulfills some or all of the following criteria: sequence consistency and reliablility, guarantied delivery and transactional consistency, an "exactly once" semantics, security, scaleablility and fault tolerance.

A "stream" as used herein represents an unbounded, continuously updating data set, where unbounded means "of unknown or of unlimited size". According to some embodiments, e.g. embodiments using a current version of Apache Kafka, a stream consists of one or more stream partitions, wherein a stream partition is an ordered, replayable, and fault-tolerant sequence of immutable data records (e.g. delta objects), where a data record is defined as a key-value pair.

A "windowing function" as used herein is a type of function supported by some streaming application which allow grouping of data records ("events") sharing a particular key for stateful operations such as aggregations or joins into so-called windows. Windows are tracked per record key. A window function implements a timeline that contains event data and enables a streaming application or another application to perform various operations selectively against the events within that window.

A "queuing system" or "message queuing system" as used herein is a software program configured to enable receiving a high frequence of messages in parallel. Preferably, a queuing system according to embodiments of the invention is in addition adapted to store batches of messages of a queue in multiple different physical data stores in parallel, whereby each message and/or message batch of the queue has an unequivocal message identifyer allowing the reconstruction of the original sequence of messages and/or message badges of the queue from the multiple different physical data stores. Preferably, a queuing system is adapted to register a plurality of subscribers to pull a message, or a batch of messages, from the queue. Each delta object may represent a message stored to the queue. A queue managing system preferably is configured for supporting transactions when pushing a message to the queue, thereby ensuring that the desired action (e.g. the storing of a delta object in the queue) is guarantied.

The data store managed by the queuing system for storing the queue is used according to embodiments of the inveintion as a delta store, i.e., as a data store used for storing delta objects. The queuing system may be used for creating and assigning unequivocal identifiers in the form of transaction IDs to batches of delta objects corresponding to the same integrated transaction. In addition, or alternatively, the delta store can manage the parallel read and/or write access to multiple different physical storage units used in combination to provide a single logical storage unit used as the delta store.

Although "streaming applications" and queuing systems have some conceptual differences, in praxis, several applications like Apache Kafka can both be used as streaming application and as queuing system.

A "delta store" is a data store used for storing delta objects.

According to preferred embodiments, the delta store is a data store that is adapted to store and maintain data records (in particular delta objects) in such a way that they are stored in sequentially adjacent physical storage areas in accordance with the chronological order of physically writing the data records on the delta store. Data stored on the delta store is maintained such that it is protected from later rearrangement, e.g. by the operating system, for the purposes of storage optimization or for other purposes. For example, the delta store may not allow any insert operation for storing a new data record (e.g. delta object) in between already stored data records and/or may not allow any update operation on existing data records and/or may not allow any delete operation which delete individual stored data records. Hence, the delta store according to embodiments of the invention is an "immutable data store", also referred to as "append only data store", which means that data, once written, cannot be deleted or altered or moved to a different storage location for a predetermined length of time - or in some cases, forever.

In other words, a series of data records is stored in the delta store such that subsequent data records are written in adjacent storage areas and such that the chronological sequence of writing the data records is reflected in the series of adjacent storage areas comprising the respective data records. Hence, it is ensured that even after a long time and after various storage management routines that may be performed by the operating system, the order of data records as originally stored in the delta store is maintained. Examples for delta stores are volatile and/or non-volatile data stores managed by various streaming applications and/or qeueing systems such as Log Device, Apache Ignite, Hazelcast, Apache Geode, Infinispan, ehcashe, Terracotta, and Apache Kafka.

The expression to perform a task in "real-time" as used herein means that the hardware and/or software systems performing this task is able to complete this task within a predefined maximum duration. Typically, this means that the said hardware and/or software system is subject to a "real-time constraint", for example from event to system response. Real-time programs must guarantee response within specified time constraints, often referred to as "deadlines". Real-time responses are often understood to be in the order of milliseconds, and sometimes microseconds or seconds. A system not specified as operating in real-time cannot usually guarantee a response within any timeframe, although typical or expected response times may be given. "Near-time" data is data that may not be guaranteed to be the latest data available but that is still highly up-to-date. Although there is a risk that the original data may already have changed compared to the near-time data, the probability of this happening is classified as low or irrelevant. Although the term near-time suggests a temporal proximity, the concrete form can differ considerably depending on the context. For example, stock market reporting may have a delay of only a few seconds in order to be considered "near-time".

An "interface method" as used herein is a definition of a method that can be implemented by a class and by an instance of this class. The interface method is not specified within the code of the interface class but is rather specified within the code of a class implementing the interface. For example, all methods and functions of the framework that are accessible by the application program can be implemented as interface classes, whereby the interface methods are implemented by classes of the framework that are inaccessible by the application program directly. The interface method provides a definition of the signature of a set of methods without specifying their complete implementation. An interface method may be contained in an interface class that may in addition define types that can be used to declare the type of variables or parameters and return values of methods.

Any software program described herein can be implemented as a single software application or as a distributed multi-module software application carried by one or more carriers. A carrier may be a signal, a communications channel, a non-transitory medium, or a computer readable medium amongst other examples. A computer readable medium may be: a tape; a disc for example a CD or DVD; a hard disc; an electronic memory; or any other suitable data storage medium. The electronic memory may be a ROM, a RAM, Flash memory or any other suitable electronic memory device whether volatile or non-volatile. The operations of the flow diagrams are described with references to the systems/apparatus shown in the block diagrams. However, it should be understood that the operations of the flow diagrams could be performed by embodiments of systems and apparatus other than those discussed with reference to the block diagrams, and embodiments discussed with reference to the systems/apparatus could perform operations different than those discussed with reference to the flow diagrams. Any method step described herein should be interpreted as a functional feature of a respective element of a computer system or software program and vice versa.

### Brief description of the drawings

In the following embodiments of the invention are explained in greater detail, by way of example only, making reference to the drawings in which:
- Figure 1: is a flowchart of a method for persisting data objects of an application program;
- Figure 2: is a block diagram of a computer system configured for persisting data objects of an application program;
- Figure 3: illustrates the data content of a delta store;
- Figure 4A: illustrates a process of reconstructing the content of an OLTP data store according to a first approach;
- Figure 4B: illustrates a process of reconstructing the content of an OLTP data store according to a first approach in a transaction-based manner;
- Figure 5A: illustrates a process of reconstructing the content of an OLTP data store according to a second approach;
- Figure 5B: illustrates a process of reconstructing the content of an OLTP data store according to a second approach in a transaction-based manner;
- Figure 6: depicts a GUI for real-time selection of the time and state of the data content of an OLTP data store;
- Figure 7: illustrates the data content of delta objects of various types;
- Figure 8: illustrates a the creation of delta objects in a framework;
- Figure 9: illustrates the management of integrated transactions;
- Figure 10: illustrates various sub-modules of the framework; and
- Figure 11: illustrates the creation and management of an integrated transaction.

### Detailed description

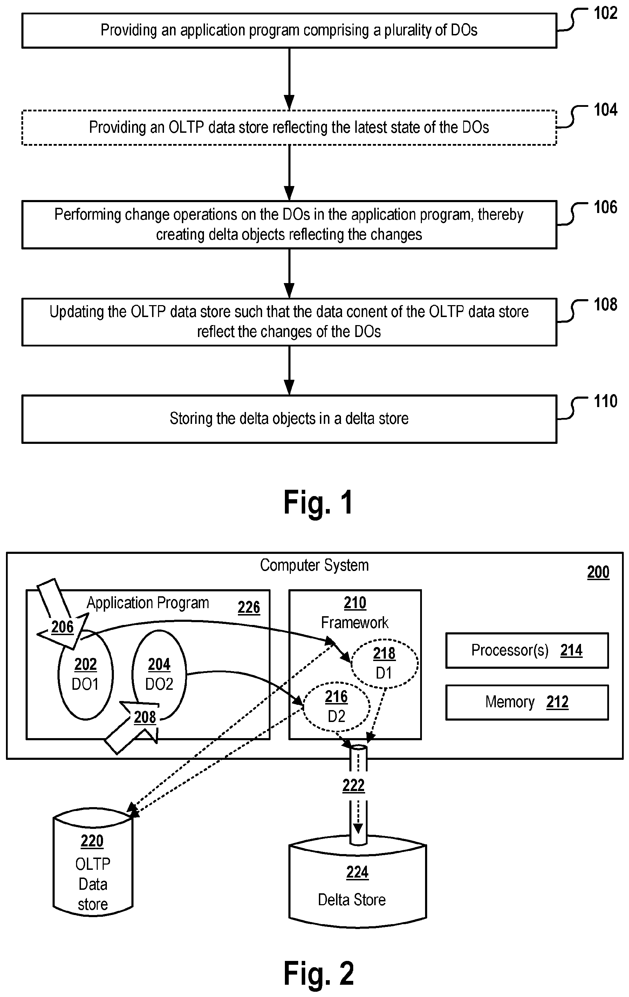

**Figure 1** is a flowchart of a method for persisting data objects of an application program that can be implemented, for example, in a computer system depicted in the block diagram of **figure 2****.** In the following, the method of figure 1 and the system of figure 2 will be described together.

In a first step 102, an application program 226 is provided comprising a plurality of data objects, e.g. Java objects. For example, the application program 226 can be instantiated on a computer system 200 comprising one or more processors 214 and a main memory 212. The providing of the application program can comprise instantiating the application program the first time or any later moment in time that is to be used as basis for storing any future DO changes in the form of delta objects in the delta store.

According to one example, the application program 226 can be a highly complex program for monitoring and controlling the production of a plurality of machine parts in a plurality of parallel industrial manufacturing processes. The software 226 may be able to monitor and represent the current state of a plurality of machines involved in the manufacturing process, to represent the current state, amount and/or availability of a plurality of consumables used during the manufacturing process, to represent the current state of intermediary products and waste products generated during the production process as well as the number, skills and identity of a plurality of persons in charge of various subtasks of the manufacturing process. The application program 226 can be based on an object-relational model of the world, wherein objects of different types such as "person", "intermediary product", "supplier", "consumable", "final product" or "vehicle" are specified in the form of Java classes acting as template for the creation (instantiation) of hundreds, thousands or even millions of class instances ("Java objects", "data objects") 202, 204. The number of data objects created, the attribute values of the data objects and the time when the data objects are created, modified and deleted depend on the class used as template for data object instantiation, on the workflow, various input parameters and other circumstances. The availability and consistency of the application program 226 throughout the whole production process may be of crucial importance for the company operating the application program, because otherwise the industrial manufacturing process could face a complete breakdown. In case the application program is restored ("reconstructed") after a system failure in an inconsistent state, it is also possible that the manufacturing process can be resumed, but is performed erroneously and the error is only recognized when an immense damage has already occurred. Embodiments and examples described herein provide a solution to the problem of allowing a fast and consistent recovery of the state of the application program at an arbitrarily chosen point in time.

Next in step 106, change operations 206, 208 are performed on data objects in the application program. A change operation can be an operation that creates, modifies and/or deletes data objects in the application program. According to some embodiments, a change operation can also be an operation that creates, modifies and/or deletes a class used as template for instantiating one or more of the data objects.

The change operations performed in the application program 226 trigger the creation of delta objects 216, 218 by the framework 210. Each delta object is descriptive of one or more changes of one of the DOs caused by one of the change operations and comprises at least a timestamp indicating the time of the one change operation.

Figure 2 shows two change operations 206, 208 corresponding to the assignment of the new value for the variable "color" and "sensor type" in data objects 202 and 204. Each change of a data object 202, 204 is automatically recognized by the framework 210. For each of the change operations, the framework creates a respective delta object 216, 218. The DO change operations 206, 208 and the creation of a respective delta object is performed within one or more integrated transactions covering at least the application program, the framework and the delta store 224. The framework caches all delta objects created within the same integrated transaction in a group-wise manner, sorts the groups in accordance with the commit ready times of the respective integrated transaction, sorts the delta objects of a given integrated transaction in accordance with their timestamps, and generates a stream of delta objects 222 sorted in accordance with the transaction-specific commit times and the delta-object-specific time stamps. The sorted delta objects are provided in the form of a stream of delta objects 222 to the delta store 224.

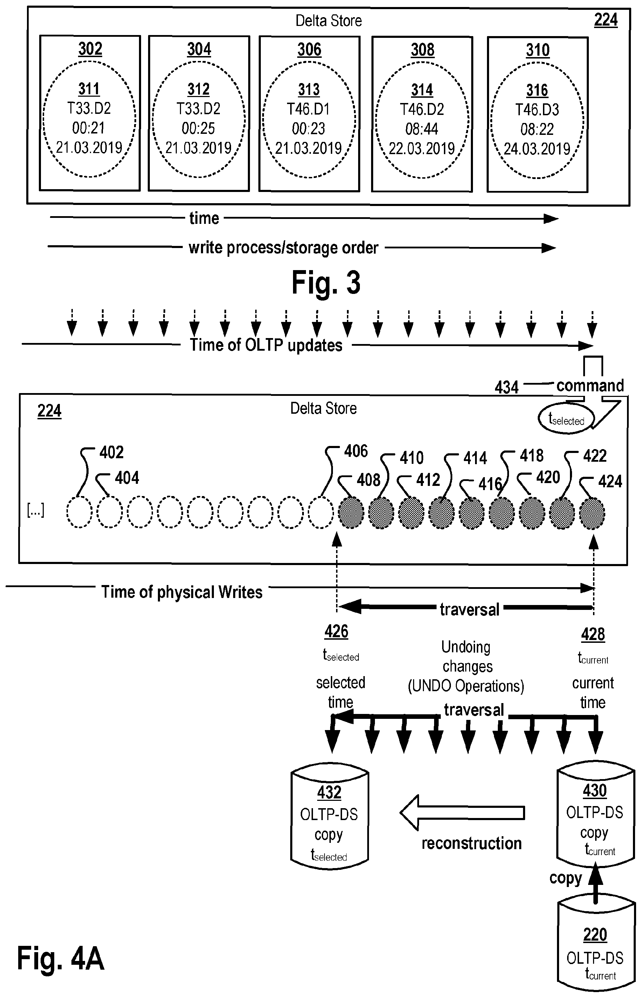

Next in step 110, the stream of delta objects 222 is stored in the delta store 224. For example, the framework 210 can be used for storing the stream of delta objects into the delta store, e.g. directly or by providing the stream of delta objects to a streaming application configured to store the delta objects in the delta store. The delta store stores and maintains any data record in such a way that data records (e.g. delta objects) are stored in sequentially adjacent physical storage areas in accordance with the chronological order of physically writing the data records on the delta store. Figure 3 illustrates the writing process in greater detail.

The delta objects are stored within the same integrated transaction(s) within which they were created. This means that in case the integrated transaction comprises multiple DO change operations and one of them fails, or if the integrated transaction comprises the creation and storing of multiple delta objects and the creation or storing of one of these delta object fails, all DO change operations within this transaction are revoked, all delta objects created within this transaction are deleted from the cache of the framework, and all delta objects created within this transaction are not stored in the delta store or removed from the delta store in case they should have already been written. Only when the storing of the delta objects created within a given integrated transaction is performed successfully, the integrated transaction commits.

The data content of the delta store is transactionally consistent with the application program.

According to one embodiment, the delta objects are directly read from the delta store and transformed into UNDO operations that are applied in the application program or a copy thereof that also represents the latest state of the application program for quickly reconstructing the state of the application program at a selected time in the past.

According to other embodiments, the data changes are in addition propagated to and persisted in an OLTP data store. For example, the OLTP data store may be used as data source for one or more clients and/or can be used for reconstructing the state of the application program at a selected time in the past. The optional steps involved in the provisioning and updating of the OLTP data store are indicated in Figure 1 by dotted lines.

In step 104, an OLTP data store 220 is provided that comprises the latest state of each of the data objects of the application program and hence reflects the latest state of the application program at the time when the OLTP data store is provided. For example, the providing of the OLTP data store be performed upon providing (e.g. installing, and/or instantiating) the application program and in this case the OLTP data store reflect the state of the data objects of the application program at the time of providing the application program.

The OLTP data store can be instantiated on the computer system 200 hosting the application program and the framework or on a remote computer system, e.g. a remote database server connected to the computer system hosting the application program via a network. In this case, the computer system 200 can be considered as a distributed computer system comprising multiple sub- systems. For example, this step can be performed when the application program is initially synchronized with and persisted in the OLTP data store as to ensure that the OLTP data store comprises and represents the current state of the data objects of the application program.

Next in step 108, the OLTP data store is repeatedly updated such that the data content of the OLTP data store reflects the changes of the data objects caused by the change operations 206, 208. For example, the framework 210 can perform conventional SQL CREATE, UPDATE, INSERT or DELETE queries in order to store the changes in the data objects 202, 204 in the OLTP data store 220. Step 108 is therefore actually not a single step, but rather a repeatedly executed update routine that ensures that any change of a DO introduced in the application program by a DO change operation is propagated to the OLTP data store.

Likewise, step 104 does typically not represent a single step but rather a series of steps respectively involving a change operation performed on one or more DOs after the OLTP data store was provided in step 104.

The OLTP data store provides OLTP capability to the system meaning that one or more client systems or client applications can access the state of the DOs as reflected in the OLTP data store in real time. The last/current state of any DO in the application program is always stored in this OLTP data store and optionally made accessible to one or more clients via this OLTP data store.

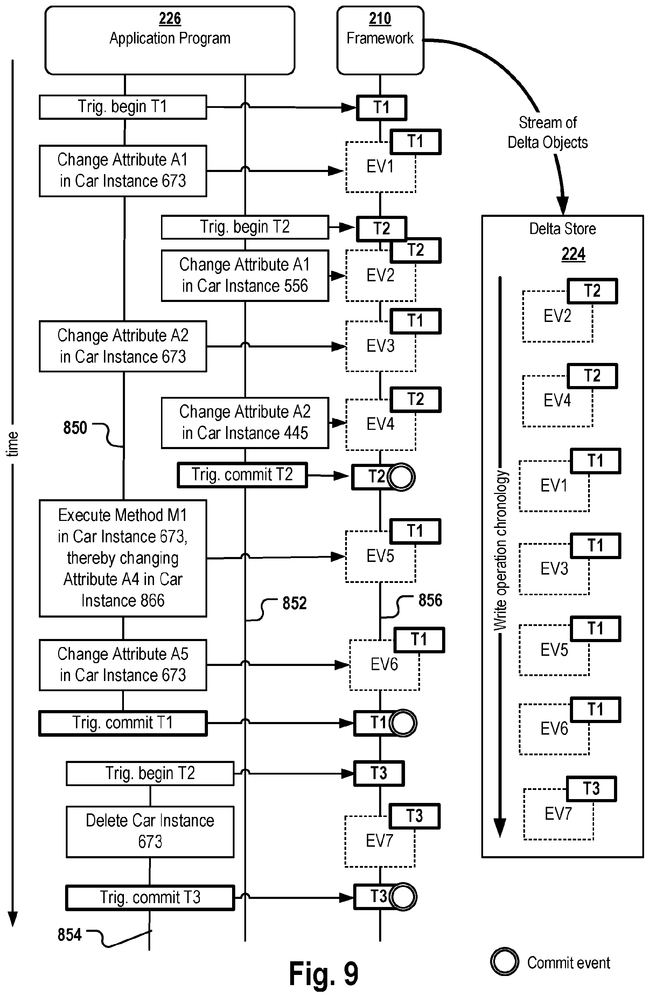

Any change applied to a data object in the application program is propagated to the OLTP data store such that the OLTP data store always reflects the latest state of the data objects of the application program and hence always reflects the latest state of the application program itself. Preferably, and as described in greater detail with reference to figure 9, the change operations in the application program, the write commands in the OLTP data store (e.g. INSERT SQL commands), and write operations performed on the delta store are performed within an integrated transactional context, to ensure that the data content of the application program, the OLTP data store and the delta store is always in a consistent state.

For example, a data change operation 206 applied on data objects 202 can involve the change of a particular attribute value. The color of a data object representing an intermediate product may have assigned a NULL value upon instantiation. The assignment of the color value "green" in the application program can trigger a manufacturing step of painting or varnishing the intermediate product in "green". Then, a further data change operation 208 is applied on data object 204. For example, the same variable, e.g. color, could be set to a particular value, e.g. "blue", or a different variable, e.g. "sensor type", being indicative of the type of sensor to be activated in the product, can be set to a new value (e.g. from "type I" to "type II").

The OLTP data store 220 can concurrently be accessed by a plurality of client applications which may operate on and require the latest state of the DOs of the application program (not shown). For example, a program for automatically ordering new consumables may repeatedly access the OLTP data store in order to determine the number and type of consumables still available and in order to determine whether it is necessary to automatically place an order for new consumables. The OLTP data store only comprises and reflects the latest state of the DOs of the application program. Hence, in case the OLTP data store crashes and/or becomes inconsistent, the OLTP data store may not comprise history data allowing to reconstruct the OLTP data store at a desired time in the past when the data was still consistent.

However, the framework may use the delta objects in the delta store for creating REDO or UNDO operations which re-apply or und the DO changes specified in a delta object and apply the UNDO or REDO functions on the OLTP data store or a backup copy thereof created previously.

Both the delta objects and the data records in the OLTP data store comprise or are stored in association with an identifier of the DO whose changes they respectively reflect.

The change operations 206, 208 are performed at runtime of the application program 226. According to embodiments, it is possible to instantiate and close the application program repeatedly without any limiting effect on the reconstructability of the state of the OLTP data store. According to embodiments, the closing and re-instantiation of the application program 226 has an impact on transaction borders because the closing of the application triggers a commit event for all currently executed transactions and the closing process is delayed until all ongoing transactions have committed. Otherwise, the instantiation and closing the application does not have an effect on the way data is persisted to the OLTP data store and the delta store.

According to embodiments, each change operation performed in the application program corresponds to one delta object created in the framework, and each integrated transaction covers one or more change operations and the creation and storing of the respective delta objects. According to other embodiments, a single delta object can be indicative of multiple data changes and respective change operations. The numerical ratio between change operations and respective delta objects may vary in dependence of the implementation, but a 1:1 ratio eases the data exchange between the application program and the framework.

**Figure 3** illustrates the data content of a delta store 224. The delta store comprises one or more physical data storage devices each comprising a plurality of data storage areas 302-310 respectively used for storing a delta object. A series of delta objects 311-316 is stored on the delta store 224 such that the chronological order of physical write operations corresponds to and is reflected by the sequence of adjacent storage areas 302-310 to which the delta objects are written. The sequence is maintained by the delta store. This means that the physical storage location of a particular delta object does not change over time e.g. because of a storage optimization, defragmentation and/or swapping operation performed by the operating system or another program. For example, the delta objects 311, 312 belong to a first integrated transaction T33 while delta objects 313-316 belong to a second integrated transaction T46. Delta object 311 has the oldest timestamp of all delta objects of transaction T33, namely March 21, 2019, 00:21. Transaction T33 is ready for commit before transaction T46, therefore the delta objects 311, 312 are written to the delta store before the delta objects 313-316 of transaction T46 although the timestamp of delta object 313 is older than timestamp of delta object 312. The chronological order of physically storing the delta objects in the delta store in the embodiment depicted in figure 3 is represented by the time arrow below, meaning that the more to the left of the time arrow, the earlier the delta object is written to the delta store.

Storing Delta objects in adjacent physical storage areas in accordance with the order of write operations may be advantageous, because the read/write head of the one or more physical storage devices constituting the delta store 224 can sequentially traverses and read the delta objects either in the original order of the delta object writing process (here: from left to right) or in reverse order (here: from right to left) very quickly, because the read/write head does not have to "jump" to distant storage locations as indicated by pointers or other types of links.

For example, starting from the most recently written delta object which corresponds to a current state of the OLTP data store 220, the read/write head can quickly traverse the delta store 224 depicted in figure 3 from right to left, whereby the data object changes indicated in each traversed delta object are used to automatically extract an UNDO operation that is performed on the OLTP data store, thereby reverting the current state of the OLTP data store to a previous state in a step-wise manner, wherein each traversed delta object represents a step.

Preferably, the stepwise reversal is performed such that the UNDO operations (corresponding to traversed delta objects) are grouped into "UNDO transactions". Each UNDO transaction comprises one or more UNDO operations corresponding to respective delta objects, whereby the begin event of each undo transaction corresponds to the commit event of the respective integrated transaction within which the delta objects used for creating the UNDO transaction were originally created and persisted, and whereby the commit event of each undo transaction is identical to the begin event of this integrated transaction.

For example, the traversal of the delta store by the read/write head from right to left would comprise reading and parsing delta object 316 first and creating a first UNDO operation, then reading and parsing delta object 314 and creating a second UNDO operation and then reading and parsing delta object 313 and creating a third UNDO operation. The first, second and third UNDO operations are bundled into a first UNDO transaction and executed together on the OLTP data store in accordance with the ACID principles. Then, the delta object 312 is read and parsed for creating a fourth UNDO operation and delta object 311 is read and parsed for creating a fifth UNDO operation. The fourth and fifth UNDO operations are performed within a second UNDO transaction on the OLTP data store after a successful commit of the first UNDO transaction.

An "UNDO operation" as used herein is a command or function created based on DO change information stored in a delta object and that, if applied on any data entity (e.g. a data object or class or database record) representing the DO whose changes are reflected in this delta object, revokes these changes in the data entity.

Likewise, starting from an old state of the OLTP data store 220, e.g. from the state of the content of the OLTP data store 220 as created upon storing a backup copy of the OLTP data store, the read/write head can quickly traverse the delta store 224 depicted in figure 3 from left to right, whereby the data object changes indicated in each traversed delta object are used to automatically extract a REDO operation that is performed on the old version of the OLTP data store (the "backup"), until a desired state of the OLTP data store, e.g. the current state of the OLTP data store or the state at any other, arbitrarily selected time, is obtained. The REDO operations for recreating the OLTP data store at a selected time can be performed in a step-wise manner, wherein each traversed delta object represents a step.

Preferably, the stepwise reconstruction of the OLTP data store is performed such that the REDO operations (corresponding to traversed delta objects) are grouped into "REDO transactions". Each REDO transaction comprises one or more REDO operations. Each REDO transaction comprises one or more REDO operations corresponding to respective delta objects, whereby the begin event of each REDO transaction is identical to the begin event of the respective integrated transaction within which the delta objects used for creating the REDO transaction were originally created and persisted, and whereby the commit event of each REDO transaction is identical to the commit event of this integrated transaction.

A "REDO operation" as used herein is a command or function created based on DO change information stored in a delta object and that, if applied on any data entity (e.g. a data object or class or database record) representing the DO whose changes are reflected in this delta object, re-applies these changes on the data entity.

For example, the framework can be configured to create and execute an UNDO command as follwos:
- reading all delta objects in sequence related to a particular integrated transaction (trx0 - 1) whose changes are to be undone from the delta store
- opening a reconstruction transaction on the OLTP data store;
- for each of the read delta objects of this particular, already "persisted" integrated transaction:
   ∘ extracting the object Id from the delta object,
   ∘ retrieving the one of the data records (e.g. an XML document, a JSON document, a table or a table line) in the OLTP data store which comprises the extracted object id from the OLTP data store
   ∘ identifying the type of delta object (changePropertyDeltaObject, ad-dAssociationObjectDeltaObject etc.) of the retrieved delta object;
- committing and closing this reconstruction transaction; as a consequence, the OLTP data store has the exact state of (trx0-1); and
repeating the above-mentioned steps for all delta objects created and stored within the integrated transaction (trx0 - 2) until the begin timestamp of (trx0 - x) is smaller or equal the selected time.

Since the delta objects are stored strictly sequentially in the storage areas and their position does not change during the storage period, the read/write head can very quickly read out and immediately process all information required for the reconstruction (also referred to as "restoring") of the application program and/or the OLTP data store by performing a sequential scanning of the physical storage medium.

Embodiments of the invention may allow reconstructing the state of an application program and/or of an OLTP data store used for persisting the latest state of the application program very quickly, e.g. within a few seconds. Accordign to one implementation example, the data changes stored in 5000 integrated transactions could be restored in an OLTP data store within only one second on a computer system having standard hardware equipment. This is because the reconstruction is based on a sequential scanning of adjacent physical storage areas and the immediate application of information obtained by linearly scanning of one or more storage devices. According to preferred embodiments, data obtained in the scanning process is already organized in the form of transactions whose "borders" (begin and commit events) correspond to integrated transactions having been used for applying and persisting delta object changes originally. For example, the "borders" of an integrated transaction can be derived from the transaction-IDs of the traversed delta objects. Hence, the UNDO/REDO operations obtained during the scanning process can immediately performed on an OLTP data store in a transaction-based manner, thereby ensuring that the state of the OLTP data store is reconstructed in a consistent manner in accordance with the ACID criteria.

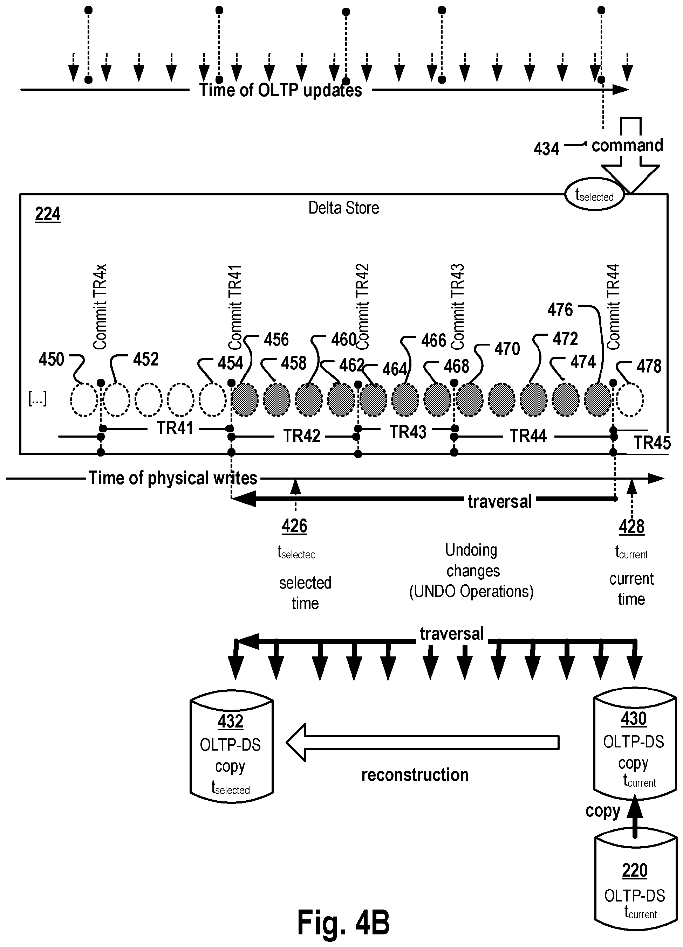

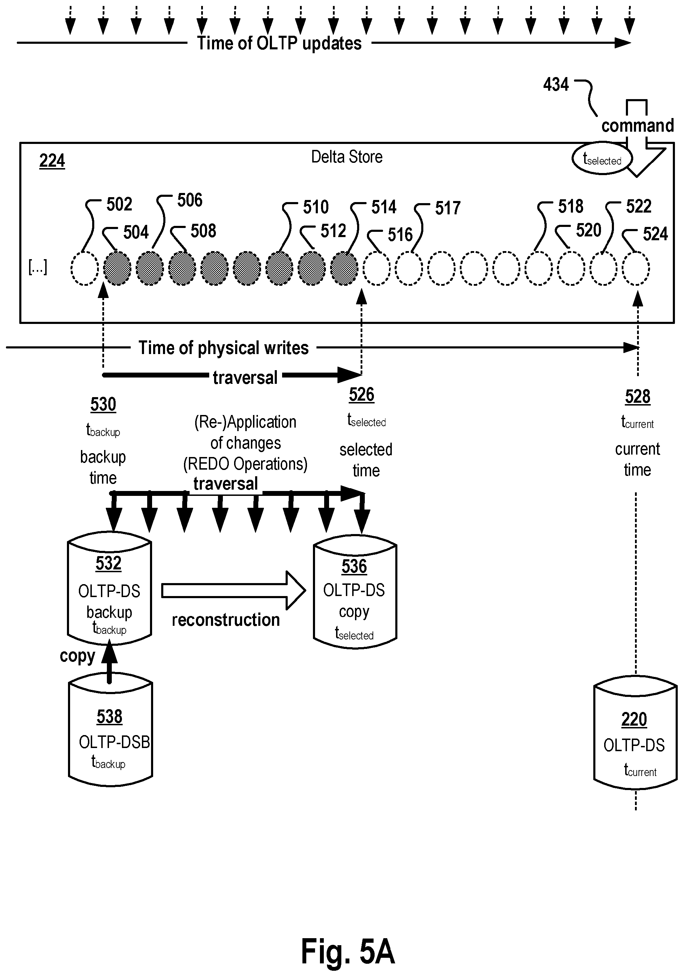

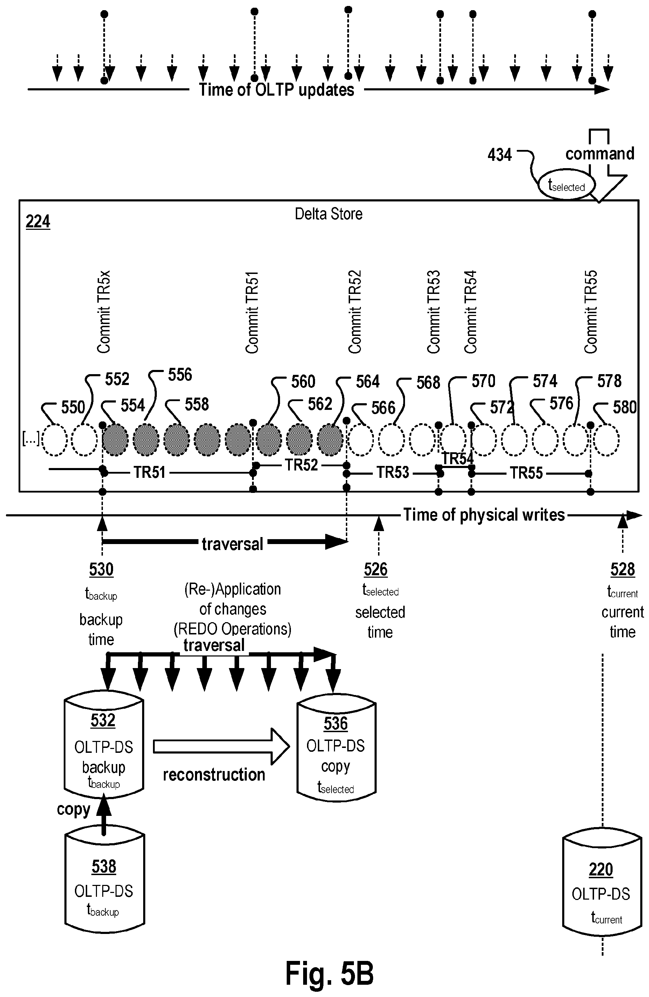

**Figure 4A** illustrates a process of reconstructing the content of an OLTP data store based on a first reconstruction approach that comprises traversing delta objects and performing **UNDO** operations. The reconstruction of the application program can be performed analogously to the reconstruction of the OLTP data store described in figures 4 and 5 based on UNDO or REDO operations obtained by parsing delta objects, but in this case the created UNDO/REDO operations are less generic and more difficult to create as they have to manipulate data objects of an application program at runtime and hence cannot make use of generic data manipulation languages such as SQL.

In the example depicted in figure 4A, the reconstruction of the data content of the OLTP data store at an arbitrarily selected time is performed starting from a current version of the OLTP data store.

At first, a time specification is received that corresponds to a state of a OLTP data store that is to be reconstructed. This time can be an arbitrarily selected time and is referred herein as "selected time". For example, a user or an application program can send a command or a request 434 that is indicative of a selected time 426 in the past. The receiving of the selected time 426 can trigger the reconstruction process. The time when the selected time is received and/or when the reconstruction process starts is referred to as "current time" 428. In an optional step, in response to receiving the selected time, a copy 430 of the original OLTP data store 220 can be created, whereby the data content of the copy 430 as well as the original OLTP data store 220 respectively reflect the current state of the data objects of the application program 226. The reconstruction of the state of OLTP data store 220 at the selected time 426 can be performed on the copy 430. Alternatively, it can be performed on the original OLTP data store 220 (e.g. in case it is not necessary to maintain the current state of the OLTP data store for some reason). For the sake of simplicity, the following description is based on the assumption that the reconstruction is performed based on the OLTP data store copy 430 but the reconstruction process could likewise be performed on the original OLTP data store 220.

The delta store 224 comprises a plurality of delta objects 402-424. The earlier the delta objects have been stored in the delta store, the further to the left they appear in the box 224 in Figure 4A, which represents the delta store. The later the delta objects have been stored in the delta store, the further to the right they appear in the box 224.

A data store reconstruction software, e.g. a program module of a streaming framework, a program module of the framework 210 used for creating the delta objects or any other type of application program, is configured to traverse the delta store 224 from right to left until the one 408 of the delta objects is reached that is the first delta object physically stored in the delta store after the selected time 426. In the depicted example, delta objects 424, 422, 420, 418, 416, 414, 412, 410 and 408 are traversed, but not delta object 406 or any delta object 402, 404 further to the left. Each traversed delta object comprises an indication, e.g. an identifier, of the one of the data objects of the application that was changed and whose change is represented by this delta object, and comprises of one or more attributes which where amended by this change.

For each of the this one or more attributes, the attribute value before the change event and after the change event is specified in the delta object.

In case the change operation reflected by the delta object changed a class used as template for instantiating data objects in the application program rather than a data object, the delta object comprises a class-ID of the changed class and indicates the structure of the class before and after the change such that the state of the changed aspect of the class before and after the change can be derived from the delta object.

According to the embodiment depicted in Figure 4A, the OLTP data store reconstruction software is configured to parse each delta object and to create one or more "UNDO operations" that are respectively configured to undo the changes reflected by the said, parsed delta objects.

During the sequential traversal of the delta objects in the delta store 224, a stream of UNDO operations is created and automatically applied on the current copy 430 of the OLTP data store. Thereby, a restored (or "reconstructed") version 432 of the OLTP data store is created in a very fast, and memory-saving manner, as the delta objects can be processed and loaded into memory sequentially. There is no need to load a large log file into memory in order to parse it. This may significantly increase the speed of reconstruction the state of an OLTP data store, because the loading of large files into memory often results in swapping operations and other bottlenecks. The re-created copy 432 represents the state of the OLTP data store 220 at the selected time 426.

The described data store reconstruction approach may be advantageous as this approach for reconstructing an OLTP data store may be much faster than existing, log-based data store recovery approaches, because the UNDO operations can be performed immediately on the OLTP data store copy 432 while sequentially processing delta objects which are stored in a sequence of adjacent physical storage areas in a transactional context that ensures data consistency. There is no need that a read-write head of a physical data storage device jumps to different, spaced apart storage regions in order to collect all information needed for reconstruction the OLTP data store.

According to embodiments, the OLTP data store 220 and/or any copy 430, 532 used as basis for reconstructing the OLTP data store at a selected time is free of cross-table constraints (e.g. is free of uniqueness constraints, primary key constraints and/or secondary key constraints) or the cross-table constraints are the activated or ignored during the database reconstruction process. This may further significantly increase performance. As the UNDO or REDO operations can be performed within a reconstruction transaction context, data consistency is ensured without the heavy use of complex cross table constraints which often render a conventional, log-based database recovery approach unacceptably slow.

**Figure 4B** illustrates a process of reconstructing the content of an OLTP data store that is also based on the first reconstruction approach that comprises traversing delta objects and performing UNDO operations. The approach depicted in figure 4B ensures that the OLTP data store is reconstructed in a consistent state by taking into account the transactional context within which the delta objects were created and stored.

The features and steps depicted in figure 4B are basically identical to the features and steps described already for figure 4A. The only difference is that the transactional context is taken into account when identifying the delta objects to be traversed and used for reconstructing the OLTP data store.

Figure 4B illustrates that the integrated transactions are taken into account both when updating the OLTP data store and when storing the delta objects in the delta store. The transaction boundaries are indicated by vertical dotted lines with ends bounded by black circles. The order of physical storing operations which store the delta objects in storage 224 and the order of the updating operations which update data records in the OLTP data store is done according to the chronology of commit-ready events of the individual transactions TR41-TR45. For example, all delta objects created within transaction TR41 are first written to storage 224 and the OLTP data store is updated within the same transaction TR41. Then, all delta objects 456-462 that were created within transaction TR42 are written to delta store 224 and the corresponding updates of the OLTP data store are performed within the same transaction TR42. Then all delta objects 464-468 that were created within transaction TR43 are written to delta store 224 and the corresponding updates of the OLTP data store are also carried out within the same transaction TR43. And so on. The number of delta objects per transaction can vary. It is also possible that each delta object corresponds to its own transaction. The borders of the transactions can be explicitly stored, for example in the form of special "begin transaction objects" and "commit transaction objects", which contain an ID of the respective started or committed transaction. Alternatively or additionally, it is also possible that the borders of the transactions are implicitly stored, for example in the form of transaction IDs, which are contained in each of the delta objects and in each case denote the transaction within which the delta object was created.

At first, the data store reconstruction program receives an indication 434 of a selected time 426, e.g. a request of a user input via a GUI to set the state of the OLTP data store to a time of interest in the past.

In response to receiving the selected time, the data store reconstruction program identifies the one 476 of the delta objects in the delta store belonging to the most recently committed integrated transaction TR44 and that in addition is the most recently stored delta object of all delta objects 470-476 within the said integrated transaction TR44. Delta objects having already been stored in the delta store but having been created in a not-yet committed integrated transaction are not traversed but rather ignored as it is currently not known whether or not the transaction will successfully commit or whether the delta object will be deleted in case the transaction fails.

For example, each delta object can comprise an ID of the integrated transaction within which it was created and persisted. All delta objects belonging to the same transaction are stored in adjacent storage areas in the delta store. So the question when a particular transaction committed and a new one begun can be quickly and automatically determined by sequentially scanning and processing the delta objects in the delta store. When the transaction-ID of a currently processed delta object differs from the transaction-ID of the previously processed delta object, a transaction border was passed where one transaction committed. It should be noted that the timestamps of the delta objects are strictly chronological only within the border of a transaction. This is because according to preferred embodiments, the delta objects are stored as transaction-based delta object batches, whereby the delta object batches are ordered in accordance with the chronological order of events when an integrated transaction becomes ready for commit (the completion of the storing of the delta objects can then represent the actual commit event of this integrated transaction). Hence, the chronological order of time stamps of delta objects in the delta store derived from many different transactions may not necessarily be identical with the chronological order of timestamps of the totality of created delta objects.

Then, starting with the identified delta object, the reconstruction comprises sequentially traversing the delta objects in the delta store until a downstream-termination delta object 456 is reached. The downstream-termination delta object is the one of the delta objects that belongs to the one TR42 of the integrated transactions having committed first after the selected time 426 and that was first stored in the delta store after the select time, the traversing including the downstream-termination delta object and comprising sequentially undoing all DO changes specified in the traversed delta objects 456-476 in the OLTP data store 220 or in a copy 430 thereof.

It should be noted that the downstream-termination delta object may have a timestamp that is before the selected time 426 in case the commit event of the transaction TR42 comprising the downstream-termination delta object is later than the selected time. This is to ensure that the reconstructed OLTP data store only comprises data being descriptive of the data objects of the application program that was already "visible" to application-internal program routines at the selected time. Non-committed data object changes are hidden from other data objects in the application program to ensure that any data object change is first persisted to the OLTP data store and data store 224 and only after a successful commit is subject to further changes performed within a different transactional context.

According to some embodiments, any read operation performed by one of the data objects on an attribute of another data object involves a reading of the respective attribute values from the OLTP data store. This may be advantageous as this ensures that any data object of the application program can only "see" data object changes which have already been stored in the OLTP data store within an already committed integrated transaction. Non-committed changes in a data objects cannot be "seen" by other data objects.

The data store reconstruction software is configured to parse, when traversing the delta objects 476 to 456 each delta object and to create one or more "UNDO operations" that are respectively configured to undo the changes reflected by the traversed delta objects. After the traversal, the state of the resulting OLTP data store 432 corresponds to the state of the OLTP data store at the selected time. The OLTP data store 432 does not comprise the changes specified in the delta objects 456, 458 as these delta objects belong to a transaction TR42 not having committed at the selected time.

These features may be advantageous as they may ensure transactional safety and data consistency of the reconstructed data store 432. The restored (or "reconstructed") version 432 of the OLTP data store is created in a very fast and consistent manner, whereby the delta objects can be traversed sequentially without loading the whole content of the store 224 into memory.

According to preferred embodiments, all UNDO operations derived from delta objects having been created and stored in the same integrated transaction are executed on the OLTP data store in the reconstruction process within a respective reconstruction transaction. For example, the UNDO operations extracted from delta objects 470-476 can be performed in a first OLTP- data store reconstruction transaction RTR44 (not shown), the UNDO operations extracted from delta objects 464-468 can be performed in a second reconstruction transaction RTR43, and the UNDO operations extracted from delta objects 456-462 can be performed in a third reconstruction transaction RTR42. The order of performing the UNDO operations corresponds to the direction of the delta object traversal. For example, when traversing the delta objects of TR43, at first an UNDO operation reversing the data object changes specified in delta object 468 is performed on the data content of the OLTP data store 430, then an UNDO operation reversing the data object changes specified in delta object 466 is performed on the OLTP data store 430, and then an UNDO operation reversing the data object changes specified in delta object 464 is performed on the OLTP data store 430.

In a further beneficial aspect, the way the delta objects and OLTP data store updates are stored and the way they are reconstructed inherently ensures transactional consistency of the reconstructed OLTP data store. Hence, it may not necessary to create complex cross-table constraints in the OLTP data store in order to ensure that the data is consistent. This may greatly accelerate the process of reconstructing an OLTP data store. Hence, according to embodiments, the OLTP data store is free of cross-table constraints.

As the reconstruction starts from a current version of the OLTP data store, it is not necessary to repeatedly create backups. Rather, in case it is necessary to reset the OLTP data store to a previous sate, it is possible to simply start from the currently existing OLTP data store version.

**Figure 5A** illustrates a process of reconstructing the content of an OLTP data store based on a second reconstruction approach that comprises traversing delta objects and performing REDO operations.

In the example depicted in figure 5A, the reconstruction of the data content of the OLTP data store 220 at an arbitrarily selected time 426 is performed starting from an old version of the OLTP data store 220. For example, the old version can be an OLTP data store backup copy 532 that was created at a backup time 530 as a copy of the original OLTP data store 538.

As described already with reference to figure 4A, a time specification 434 is received that specifies the time corresponding to the state of an OLTP data store that is to be reconstructed. This time can be an arbitrarily selected time and is referred herein as "selected time" 526. The time when the selected time is received and/or when the reconstruction process starts is referred to as "current time" 528. The reconstruction of the state of OLTP data store 220 at the selected time 526 can be performed on the backup copy 532 created at a "backup time" 530. For example, the OLTP data store or a software maintaining the OLTP data store can be configured to create backup copies of the OLTP data store repeatedly, e.g. once every hour, or every day, or every week, etc. In case the OLTP data store is to be reconstructed as it was at the selected time, the one of the backup copies having been created most recently before the selected time is selected as a basis for the data store reconstruction.

The delta store 224 comprises a plurality of data objects 502-524. The earlier the delta objects have been stored in the delta store, the further to the left they appear in the box 224 which represents the delta store. The later the delta objects have been stored in the delta store, the further to the right they appear in the box 224.

A data store reconstruction software is configured to traverse the delta store 224 from left starting with delta object 504 to right until delta object 514 is reached. In the depicted example, delta objects 504 - 514 are traversed, but not delta object 502 or any delta object 516-524 further to the right. Each traversed delta object comprises an indication of the one of the data objects of the application that was changed and one or more attributes and attribute values as described with reference to figure 4.

The data store reconstruction software is configured to parse each delta object and to create one or more "REDO operations" that are respectively configured to re-apply the changes reflected by this delta object on a backup copy of the OLTP data store 220.

During the sequential traversal of the delta objects in the delta store 224, a stream of REDO operations is created and automatically applied on the backup 532 of the OLTP data store. Thereby, a reconstructed version 536 of the OLTP data store is created in a very fast, memory-saving manner.

**Figure 5B** illustrates a process of reconstructing the content of an OLTP data store that is also based on the second reconstruction approach that comprises traversing delta objects and performing REDO operations. The approach depicted in figure 5B ensures that the OLTP data store is reconstructed in a consistent state by taking into account the transactional context within which the delta objects were created and stored.

The features and steps depicted in figure 5B are basically identical to the features and steps described already for figure 5A. The only difference is that the transactional context is taken into account when identifying the delta objects to be traversed and used for reconstructing the OLTP data store.

Figure 5B illustrates that the integrated transactions are taken into account both when updating the OLTP data store and when storing the delta objects in the delta store. The transaction boundaries are indicated by vertical dotted lines with ends bounded by black circles. The order of physical storing operations which store the delta objects in delta store 224 and the order of the updating operations which update data records in the OLTP data store is done according to the chronology of commit-ready events of the individual transactions TR51-TR55. For example, all delta objects created within transaction TR51 are first written to delta store 224 and the OLTP data store is updated within the same transaction TR51. Then, all delta objects 560-564 that were created within transaction TR52 are written to the delta store 224 and the corresponding updates of the OLTP data store are performed within the same transaction TR52. Then all delta objects 566-570 that were created within transaction TR53 are written to the delta store 224 and the corresponding updates of the OLTP data store are also carried out within the same transaction TR53. And so on. The number of delta objects per transaction can vary. It is also possible that each delta object corresponds to its own transaction. The borders of the transactions can be explicitly stored, for example in the form of special "begin transaction flags" and "commit transaction flags", which contain an ID of the respective started or committed transaction. Alternatively or additionally, it is also possible that the borders of the transactions are implicitly stored, for example in the form of transaction IDs, which are contained in each of the delta objects and in each case denote the transaction within which the delta object was created.

At first, the data store reconstruction program (e.g. the framework having created the delta objects) or another program creates a backup 532, i.e., a copy, of the OLTP data store 220 at a time referred to as backup time 530. For example, the backup can be created once in a day, or once in a week. Then, the data store reconstruction program receives an indication 434 of a selected time 426, e.g. a request of a user input via a GUI to set the state of the OLTP data store to a time of interest in the past. In response to the request 434, the data store reconstruction program identifies the one of the backups having been created most recently before the selected time (in case multiple backups created at different backup times exist).

Then, the data store reconstruction program reconstructs the state of the OLTP data store at the selected time. The reconstruction comprises identifying the one 554 of the delta objects in the delta store belonging to the one TR51 of the integrated transactions having committed first after the backup time and that was first stored in the delta store after the backup time. Starting with the identified delta object 554, the data store reconstruction program then sequentially traverses the delta objects 554-564 in the delta store until an upstream-termination delta object 564 is reached. The upstream-termination delta object is the one of the delta objects that belongs to the one TR52 of the integrated transactions that was last committed before the selected time and that was last stored in the delta store before the selected time. The traversing includes the upstream-termination delta object and comprises sequentially applying all data object changes specified in the traversed delta objects on the backup 532. For example, these data object changes can be applied by creating REDO operations based on the information contained in the traversed delta objects and applying the REDO operations on the OLTP data store 532.

It should be noted that the upstream-termination delta object 564 may have a timestamp that is before the selected time 426 in case the commit event of the transaction TR42 comprising the downstream-termination delta object is later than the selected time. This is to ensure that the reconstructed OLTP data store only comprises data being descriptive of the data objects of the application program that was already "visible" to application-internal program routines at the selected time. The data store reconstruction software is configured to parse, when traversing the delta objects 554 to 564 each delta object and to create one or more "REDO operations" that are respectively configured to re-apply the changes reflected by the traversed delta objects on the backup copy 532. After the traversal, the state of the resulting OLTP data store 536 corresponds to the state of the OLTP data store 220 at the selected time. The OLTP data store 536 does not comprise the changes specified in the delta object 556 as this delta object belong to a transaction TR53 not having committed at the selected time.

These features may be advantageous as they may ensure transactional safety and data consistency of the reconstructed data store 536. The restored (or "reconstructed") version 536 of the OLTP data store is created in a very fast and consistent manner, whereby the delta objects can be traversed sequentially without loading the whole content of the store 224 into memory.

According to preferred embodiments, all REDO operations derived from delta objects having been created and stored in the same integrated transaction are executed on the OLTP data store in the reconstruction process within a respective transaction (also referred to as "reconstruction transaction"). For example, the REDO operations extracted from delta objects 554, 556, 558 can be performed in a first OLTP-data store reconstruction transaction RTR51 (not shown), and the REDO operations extracted from delta objects 560-564 can be performed in a second reconstruction transaction RTR52. The order of performing the REDO operations corresponds to the direction of the delta object traversal. For example, when traversing the delta objects of TR52, at first a REDO operation reversing the data object changes specified in delta object 560 is performed on the data content of the backup 532, then an REDO operation reversing the data object changes specified in delta object 562, and then a REDO operation reversing the data object changes specified in delta object 564 is performed.

In a further beneficial aspect, the way the delta objects and OLTP data store updates are stored and the way they are reconstructed inherently ensures transactional consistency of the reconstructed OLTP data store. Hence, it may not be necessary to create complex cross-table constraints in the OLTP data store in order to ensure that the data is consistent. This may greatly accelerate the process of reconstructing an OLTP data store. Hence, according to embodiments, the OLTP data store is free of cross-table constraints.

This approach for reconstructing an OLTP data store may be much faster than existing, log-based database recovery approaches, because the REDO operations can be performed immediately on the OLTP data store copy 532 in such a way that they are transactionally safe and the data content of the reconstructed OLTP data store is consistent.

Furthermore, it may not be necessary to create complex cross-table constraints in the OLTP data store in order to ensure that the data is not corrupted in a backup process.

According to embodiments, the OLTP data store backup 532 and/or any copy of the data store 220 used as basis for reconstructing the OLTP data store at a selected time 526 is free of cross-table constraints (e.g. uniqueness constraints, primary key constraints and/or secondary key constraints) or the cross-table constraints are the activated or ignored during the data store reconstruction process. This may further increase performance.

For space reasons, figures 4A, 4B, 5A and 5B respectively show only a small number of delta objects. Typically, embodiments of the invention allow traversing delta objects created within several thousand integrated transactions and applying the respectively created undo transaction within a single second.

**Figure 6** depicts a GUI 600 for real-time selection of the time and state of the data content of an OLTP data store, e.g. a relational OLTP database. For example, the GUI 600 can be a graphical user interface of an application program for inspecting and/or using one or more databases, e.g. databases comprising technical data generated by various machines of different industrial manufacturing pipelines. This application program can be interoperable with the framework and use the framework for quickly reconstructing the state of the OLTP database at a time of interest. The databases to be inspected can comprise a first database and a second database. The data content of the first database represents the current state of the totality of data objects of a first control application program configured for monitoring and controlling a first industrial manufacturing pipeline, e.g. for medical injection needles of a particular size. The data content of the second database represents the current state of the totality of data objects of a second control application program configured for monitoring and controlling a second industrial manufacturing pipeline, e.g. for medical injection needles of a different size or type. The GUI 600 comprises a first tab 602 for searching the first database and a second tab 604 for searching the second database for one or more keywords. The first tab is currently selected and comprises a first area on the left side of the tab 602 with a graphical representation of a timescale 608 ranging e.g. from 1925 to today (some day in August 2019) and a search field 612 enabling the user to enter one or more search terms to be searched in the first database. The graphical representation of the timescale comprises a slider element 606 that indicates the currently selected time, in this case, April 01, 2019. A second area on the right side of the tab 602 comprises a result of the current search entered by a user in search field 612.

The selectable slider 606 enables a user to select a time of interest by moving the selectable GUI element 606 to the left or to the right along the graphical representation of the timescale. For example, when the program is started and the GUI is shown the first time, the slider 606 can be positioned at the right and of the timescale. This indicates that the data content of the first database represents a current state of the first application program and hence, indirectly, that any search term entered would be searched in the data objects of the first program in its current state. Any query entered via search field 612 will be processed on a current, up-to-date version of the first database and the results of the search will be presented on the right side of the currently selected tab and be related to the current state of the first production pipeline. However, the user may not be interested in the current state, but rather may be interested in a situation as of April 1, 2019. For example, the user may suspect that a new machine installed on that date is responsible for a particular production defect and may be interested in machine parameters from that date. The user may select the time of interest via the slider 606. The release of the slider may automatically trigger the reconstruction of the state of the database to a state as of the selected time, i.e., April 1, 2019. The reconstruction is performed as described herein for embodiments of the invention and is illustrated, for example, in figures 4 and 5. The reconstruction can be performed very fast, e.g. within a few seconds, also for large databases provided database backups have been created frequently. When the reconstruction of the state of the database on April 1, 2019 is accomplished, an indication of the date corresponding to the reconstructed state of the database is indicated 610, 614 in the graphical user interface, e.g. in the left side such pane or in the right side result pane.

Sequentially traversing delta objects stored in a delta store for reconstructing the content of an OLTP data store at the time of interest, and reconstructing also the state of the totality of data objects of an application program at the selected time may be advantageous as the high speed and scalability of this approach allows for a real-time or at least near-term selection of the data store state of interest.

The use of a GUI in combination with the high-speed data store reconstruction procedure as described herein for embodiments and examples of the invention can be particularly advantageous for analyses of a temporal evolution of a particular aspect of the object under investigation. An increasing proportion of manufacturing processes are fully automated or largely automated, with object-oriented, complex software programs for monitoring and control playing an important role. Those complex software programs generate an immense amount of structured data, often stored in an OLTP data store. However, these OLTP data stores only contain the latest state of the data objects of the application program, so that historical analyses are not possible. However, these would be very important, e.g. with regard to the recognition of errors and their causes in the production process, with regard to the recognition of optimization potentials and others. Using a GUI that enables a user to change the state of an OLTP data store reflecting the state of an application program in real time may enable an automated, semi-automated or manual inspection and analysis of the state of this application program at many different points in time, and hence may allow the identification of trends, of errors, of cause-and-effect relationships at an arbitrarily chosen level of granularity.

It should be noted that these types of analysis are made possible even in case the application program whose state is reflected in the OLTP data store lacks any explicit reporting capabilities. This may also facilitate the implementation of complex monitoring and control programs for all kinds of technical and other processes and workflows, as it is not necessary to implement explicit reporting or logging routines: any kind of change in the state of a data object in the application program will result in an update of the OLTP data store and the creation and storing of a respective delta object. Programming the application program such that it interoperates with a framework 210 that does not only update the OLTP data store but that in addition automatically creates and stores delta objects upon every data object change may ensure that every single, small change of the state of the application program or one of its data objects is persisted and can be used for reconstructing and/or analyzing the state of the application program quickly and easily. The programmer is freed of the burden of developing and implementing explicit report routines within the application program itself.

**Figure 7** illustrates the data content of five different types 702-710 of delta objects. According to embodiments, the framework used for creating the delta objects comprises a set of predefined templates for each of a plurality of supported types of delta objects. For example, a template can be a combination of a Java interface method and a Java class file that implements this interface method and that can be used for creating delta objects which comprise the property values defined for this template. In the example embodiment depicted in figure 7, the framework comprises a template for the "createObjectDeltaObject" delta object type 702, a template for the "deleteObjectDeltaObject" delta object type 704, a template for the "changePropertyDeltaObject" delta object type 706, a template for the "addObjectAssociationDel-taObject" delta object type 708, and a template for the "removeObjectAssocia-tionDeltaObject" delta object type 710.

According to embodiments, any creation of a new data object in the application program 226 triggers the creation of a new delta object of type 702 by the framework.

Each delta object of type 702 comprises an indication of its type ("createObjectDeltaObject") that may also reflect the type of data change operation performed in the application program that triggered the creation of this delta object. In addition, each delta object of type 702 comprises a timestamp being indicative of the time of creating the new data object in the application program, a transaction-ID being indicative of the integrated transaction within which the data change operation occurred and within which the delta object was created, an object-type being indicative of the type of data object that was created (e.g. "customer") and a unique identifier (object-ID) of the new data object that was created (here: a new instance of the class "customer").

Each delta object of type 704 comprises an indication of its type ("deleteObjectDeltaObject") that also reflects the type of data change operation performed in the application program that triggered the creation of this delta object. Each delta object of type 704 comprises the information described already for delta object type 702, i.e., a timestamp, a transaction-ID, the object-type and an object-ID. In addition, each delta object of type 704 comprises a list of properties and associations and respective data values ("list of P&A") representing the latest state of this data object and its associations at the time when it was deleted.

Each delta object of type 706 comprises an indication of its type ("changePropertyDeltaObject") that reflects the type of data change operation performed in the application program that triggered the creation of this delta object. Each delta object of type 706 comprises the information described already for delta object type 702, i.e.., a timestamp, a transaction-ID, the object-type and an object-ID. In addition, each delta object of type 706 comprises an identifier of the property whose change triggered the creation of this delta object and comprises the new value that was assigned to this property upon this change.

Each delta object of type 708 comprises an indication of its type ("addObjectAssoci-ationDeltaObject") that reflects the type of data change operation performed in the application program that triggered the creation of this delta object (here: the adding of an association between two data objects to one of the two data objects). Each delta object of type 708 comprises the information described already for delta object type 702, i.e.., a timestamp, a transaction-ID, the object-type and an object-ID in respect to the data object to whom the association was assigned. In addition, each delta object of type 708 comprises an identifier or name of the association that was added to the data object and an identifier of the other data object that was linked to the above-mentioned data object by adding the association.

According to embodiments, a data object in an association of a particular association type (IndexedAssociation) has a certain position in the list of associated objects - e.g. at position 5. This is expressed by the "AddedObjectldPosition". Additional association types and their changes can also be stored as delta objects.

Each delta object of type 710 comprises an indication of its type ("removeObject-FromAssociationDeltaObject") that reflects the type of data change operation performed in the application program that triggered the creation of this delta object (here: the removing of a data object from an association between two data objects). Each delta object of type 710 comprises the information described already for delta object type 702, i.e.., a timestamp, a transaction-ID, the object-type and an object-ID in respect to the data object from which the association was removed. In addition, each delta object of type 710 comprises an identifier or name of the association that was removed and an identifier of the other data object that was linked to the above-mentioned data object by the removed association.

Other embodiments of the invention may support less or additional delta object types or support delta object types with a slightly different data content and comprise a corresponding set of templates. In any case, each template should specify the information that is required for enabling a program that reads and parses the delta objects (e.g. the framework 210) to create UNDO or REDO operations which re-execute or undo the data object changes specified in the delta objects. For example, in some embodiments, a changePropertyDeltaObject instance may comprise the property value of the data object before the change operation took effect in addition to the new property values.

According to some embodiments, the set of delta object types supported by the framework in addition comprises delta object types for creating a new class, for deleting an existing class and/or for modifying the structure of an existing class, e.g. adding a new property to an existing class and/or for removing a property of an existing class.

For example, a delta object of the type "changeObjectDeltaObject" can be created in response to a command "customer.name().set("test");" performed by a data object of the application program. The execution of the method "set("test")" induces a call of an abstract interface method "changeObjectDeltaObject" 706 provided by the framework. The interface method for creating a new delta object of type 706 can be, for example:

```
 public interface createChangePropertyDeltaObject {
      Property<date> timestamp();
      Property<date> transaction-ID();
      Property<String> object-type();
      Property<String> object-ID();
      Property<String> property-ID();
      Property<String> newPropertyValue();
      }
```

The interface method createChangePropertyDeltaObject may be called automatically whenever a DO in the application program sets a data value of another DO. The interface method may be implemented by one or more classes provided by the framework (not shown).

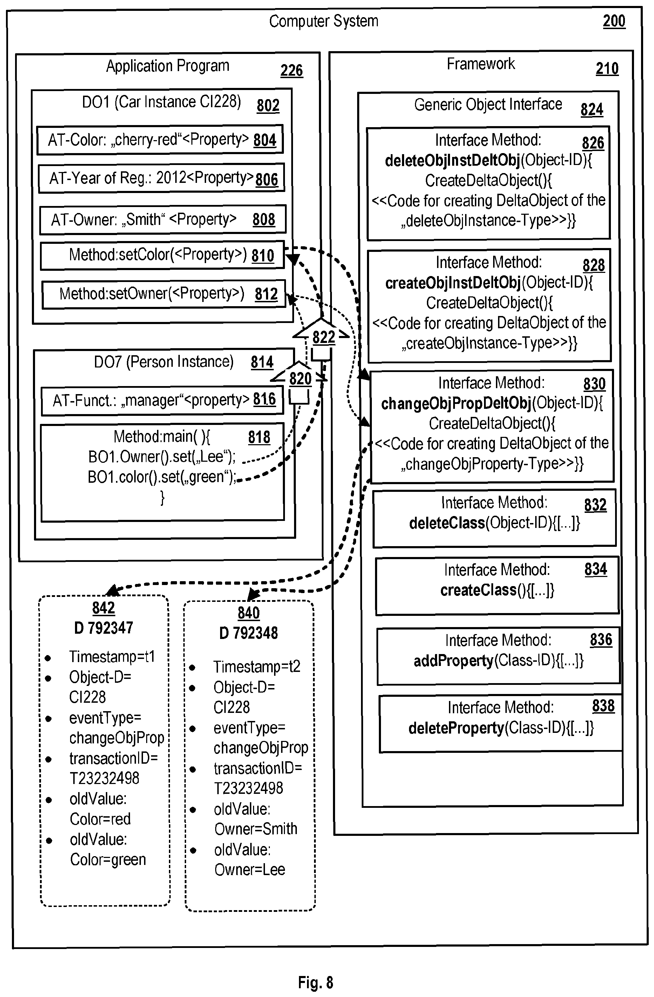

**Figure 8** illustrates the creation of delta objects by the framework 210 as implemented in some embodiments of the invention.

According to embodiments of the invention, the attributes of the data objects in the application program 226 are not implemented in the form of primitive data types such as String, Integer, Float, Boolean etc. but rather in the form of a generic data object and a respective class (referred to in the following as "Property") that is functionally linked to the framework 210. For example, the framework can comprise the class "Property" and may be used as a class library during the development and programming of the application program 226. Hence, according to embodiments, all properties of all data objects of the application program 226 are instances of the class "Property" or inherit some features and/or functions provided by an abstract class "Property", whereby the "Property" class is provided by the framework 210.

This feature may be highly advantageous as any property change within the application program 226 is automatically communicated to the framework 210 that is in charge of instantiating a new delta object instance based on the respective type of data change operation and that is in charge of specifying in this new delta object which property of the DO was modified and the new property value (at least for all data change operation types involved with modifying the type and or value of a property (or "attribute") of a DO. As any new property is an instance of the PROPERTY class provided by the framework, the framework inherently "knows" when a property value of a DO is changed in the application program.

These features free the programmer of the burden to make sure that every DO change in the application program is correctly propagated and persisted in the delta store and/or OLTP data store, because any property change operation is necessarily and fully automtically associated with creating a new instance of the Property class in the framework and hence automatically triggers data processing routines in the framework that are associated with the creation of a respective delta object in the framework.

Moreover, these features free the programmer of the burden of making sure that any relevant DO changes are explicitly covered in reporting routines because the delta objects that are automatically created by the framework in response to any data change operation that involves the creation of a new Property class instance implicitly represents the most fine granular change log one could think of. The delta store can be used as an automatically generated complete log or report that can be evaluated by analytical programs developed in respect to any analytical question that may be of interest for an operator of the application program.

In summary, the framework may offer the great advantage that a programmer who uses this framework when creating an application program does not have to worry about and does not have to write explicit routines or modules to ensure that all changes to data objects and/or associations and/or classes within the application program at runtime are fully persisted. The programmer only has to make sure that the operations that cause the changes in the data objects, associations and/or classes in the application program use classes and/or interfaces provided by the framework, so that the framework is automatically notified of any change to a DO, DO association or class in the application program and hence can automatically create respective delta objects and persist them in the delta store and optionally also update an OLTP data store such that the OLTP store always represents the latest state of the application program. This greatly facilitates and accelerates the development of application programs and increases the quality and reliability of the program and of the way the application program is persisted, because the persistence of changes in the application program is inherently and fully automatically implemented simply by making use of the respective classes and functionalities provided by the framework.

In other words, the use of a framework 210 according to embodiments of the invention provide for an industrialization and automation of large parts of the software development process, whereby the quality, reliability and completeness of persisting and reporting the state of an application program is greatly facilitated.

In the following, a concrete example will be described to illustrate how the framework 210 can be used by a programmer at design time of the application program 226 for automatically propagating DO or class changes occurring at runtime of the application program 226 in the application program 226 to the framework 210.

### State of the art approach property change

A state of the art approach of modifying an object property of a Java class instance of the class "ExampleClassic" would be implemented as follows:

```
 public class ExampleClassic {
      private String firstName;
      private String lastName;
      public String getFirstName() {
             return firstName;
      }
      public void setFirstName(String firstName) {
             this.firstName = firstName;
      }
      public String getLastName() {
             return lastName;
      }
      public void setLastName(String lastName) {
             this.lastName = lastName;
```

In the example given above, the creation of a new ExampleClassic instance and the access to one of its attributes (properties) (here: the first name) is performed by the following method calls:
ExampleClassic exampleClassicInstance = new ExampleClassic();
exampleClassicInstance.setFirstName("Peter");

### Framework-based property change approach

To the contrary, according to embdoimetns of the invention, the modification of an object property of a Java class instance of the class "ExampleNew" would be implemented based on a generic Property class instance rather than a primitive property String value as follows:

```
 public interface ExampleNeu {
      Property<String> firstName();
      Property<String> lastName();
      
```

In the example given above, the ExampleNeu interface and a class implementing the ExampleClassic instance can be comprised in and be provided by the application program while the class Property is provided by the framework.

According to embodiments, the Property class provided by the framework comprises a "set" method that is called whenever a new Instance of this Property is created and assigned to a Porperty instance in the application program. The call to this "set" method of a Property class instance triggers the creation of a delta object.

Access to one of its attributes (properties) (here: the first name) of any DO bein an instance of the ExampleNew implementing class can be performed e.g. by the following method calls:

```
 ExampleNew exampleNewInstance = uow.create(ExampleNeu.class);
 exampleNeuInstance.firstName().set("Peter");
```

Thereby, uow is an ojbect provided by the framework that is in charge of creating and managing an individual integrated transaction. The call to the setter method of the Property (here: firstName().set("Peter")) in the application program fully automatically triggers the creation of a delta object of the type changeObjectDeltaObject in the framework.

Representing a class attribute as an instance of the generic "Property" class provided by framework has the following advantages:
- The source code is much more compact
- Because the properties of the data objects implement the class "Property", and all method calls for changing the properties run via the class "Property" of the framework 210, every change of a property value can be recognized very easily and fully automatically by the framework and used to create a delta object; In the classical model, the attribute is directly manipulated with the setter method, without another program/framework being able to interfere in this process (without time-consuming "tricks"). By implementing the object properties as instances of the generic "Property" class of the framework, this technical difficulty is avoided;
- the properties and especially the dynamic behavior of the properties can be easily extended at any time - e.g. by test methods like "notNull" or complex test protocols or by complex evaluation routines for reporting purposes, without having to change the source code of the application program. It is sufficient to extend the source code of the framework by corresponding functions. Thus a highly complex software can be supplemented during operation by checks and reporting functions on a fine-granular level, namely the attribute level, without a source code change or recompilation being necessary. A change in a single class or a few classes in the framework is sufficient, and this change immediately has global validity for all application programs developed on the basis of the framework.

In the example depicted in figure 8, the application program 226 at runtime comprises DO 802, an instance of the car class whose attribute values 804, 806, 808 indicate that the color of this car is cherry-red, the year of registration is 2012 and that the car is owned by a person named "Smith". The attributes of this car instance can be modified by other DOs, e.g. DO 814 being an instance of the "person" class and representing a person having the function of a fleet manager (attribute 816), by executing the following methods calls specified in source code 818: BO1.setOwner("Lee"); and BO1.setColor("green").

The framework comprises, for each of a plurality of predefined data change events, a respective template class (e.g.: an interface class) and/or an interface method for creating delta objects. For example, the framework can comprise one or more generic interface classes 824 respectively comprising one or more generic interface methods 826-838 for creating new data objects 826, modifying a property of an existing DO 830, deleting an existing DO 826, deleting 832 a class at runtime of the application program, creating 834 a class at runtime of the application program and modifying 836, 838 the structure of a class at runtime of the application program. When the DO7 814 executes the method call BO1.setOwner("Lee"), a new Instance of the class "Property" provided by the framework is created. The call to the "setOwner" function provides information on the calling DO7, the time of the call, the new value of the property ("Lee") and the property to be changed ("owner") to the framework. The framework does not only create a new instance of the "Property" class that is needed by the application program to change the owner-property of DO1, the framework also creates a new instance of a changeProperty class or creates a new class instance making use of an abstract changeProperty interface 830 provided by the framework. This new class instance is filled with context information on the property change (which property is changed, the time of change, the DO having caused the change, the new property value, etc.) and used as a new delta object 840.

DO 814 may in addition call the method BO1.setColor("green"). This call triggers the creation of a Property instance for the new color "green" and the creation of a new delta object 842 in the framework.

**Figure 9** illustrates the management of integrated transactions by the framework 120 in interoperation with the application program 226.

In the embodiment depicted in Figure 9, integrated transactions are generated, managed and closed after a commit event by the framework, whereby operations executed within the application program serve as triggers for beginning and/or terminating an integrated transaction.

For example, the framework 210 can implement a function being able to receive one or more method calls as argument. Each call to this function by a DO of the application program triggers the creation of an integrated transaction whose existence is bound to the execution of the called function. The method calls provided as arguments are data change operations (e.g. the creation of a new DO, the modification of a property of an existing DO, the deletion of an existing DO, the creation of a class, the deletion of a class, the modification of a class).

This may be advantageous as the transactional context of the integrated transaction created by the framework upon a call to this function is automatically closed (with a commit or undo action) when the function returns. Hence, it is not possible that a programmer forgets to explicitly close an integrated transaction. Furthermore, as the one or more data change operation performed within this integrated transaction are provided as artument of the function, it is implicitly ensured that each of the data object change operations is executed within an integrated transaction. Provided the programmer of the application program specifies any change to a data object or class exclusively as an argument of the said function, it is ensured that no data change operation can be executed outside of an integrated transaction. This may ensure transactional consistency for every single data change operation as well as complete persistence of any change in the delta store (and optionally also in the OLTP data store). The programmer is not required to explicitly open or close a transactional context or to explicitly assign data change operations to a particular integrated transaction. Providing the data change operations as an argument to the function of the interface is all that is required.

For example, the function that is adapted to receive the one or more data change operations as arguments can be a function of a functional interface. In Java, this function can be a so-called Lambda function, whereby each call of a Lambda function is carried out within a respective integrated transaction.

The application program or a data object contained therein can call a lambda function of the framework for the first time and thus trigger the generation of a first integrated transaction T1 by the framework. After the transactional context T1 has been opened, the A1 attribute of car data object 673 is changed in the application program, and later the A2 attribute of the same data object is changed. Then, a further attribute A4 in car data object 866 is changed and finally attribute A5 of car data object 673 is changed. The changes made to data objects within the transactional context of T1 within the application program are represented in Figure 9 by a first line 850. Closing the call of the lambda function within the application program represents a trigger event that triggers a commit event for the integrated transaction T1, represented by the concentric double circle, within the framework.

The application program may in addition can call another lambda function of the framework, thereby triggering the generation of a second integrated transaction T2 whose transactional context is represented by line 852. After the transactional context T2 has been opened, the A1 attribute of car data object 556 is changed in the application program, and later the A2 attribute of car data object 445 is changed. Closing the call of the other lambda function within the application program represents a trigger event that triggers a commit event for the integrated transaction T2.

The application program may in addition can call a still further lambda function of the framework, thereby triggering the generation of a third integrated transaction T3 whose transactional context is represented by line 854. After the transactional context T3 has been opened, car data object 673 is deleted in the application program, and the still further lambda function is closed, thereby triggering a commit event for the integrated transaction T3.

According to embodiments, the framework can manage a variety of different integrated transactions for the same application program simultaneously. It is possible to start one integrated transaction while another is not yet finished. The framework ensures that there are no conflicts and that two transactions do not manipulate the same data object at the same time. A transaction is committed by the framework only if all delta objects created within this transaction are successfully stored in the delta memory (not shown here).

The events shown on line 856 are listed in the chronological order of the corresponding data object changes and the time stamps of the respectively created delta objects. Each change of a date object corresponds to an event EV, which in turn triggers the creation of a delta object, which in turn contains an identifier of the integrated transaction within which the delta object was created. However, the sequence of the creation of the delta objects in the framework does not necessarily correspond to the chronological sequence of the physical storage of the delta objects in the delta store. Rather, the framework is configured to perform the storing of the delta objects according to the order of their commit-ready events, so that the time stamps of the delta objects stored in the delta store 224 are strictly chronologically ordered only within a certain transnational context. This is shown in delta store 224: since the commit-erady-event of transaction T2 occurs earlier than that of transaction T1, the corresponding delta objects EV2 and EV4 of transaction T2 are also stored before the delta objects EV1, EV3, EV5, EV6 of transaction T1, although the transactional context of T1 begins earlier than that of T2. The chronological order of the expected commit events is derivable from and determined by the source code of the application program, in which the individual lambda functions are called in one or more different threads, whereby within a thread the opening of a new transactional context is only possible after the completion of an open lambda function call.

**Figure 10** illustrates various sub-modules 902-914 of the framework 210 according to embodiments of the invention.

According to embodiments, the framework comprises a module 910 for creating delta objects and for storing the delta objects in a delta store. The module 910 can comprise a set of classes or interfaces for each of a plurality of different predefined data object, data object association and/or class change operations.

The framework can in addition comprise a module 914 for managing integrated transactions and sub-transactions for storing delta objects created within an integrated transaction to the delta store and/or for updating an OLTP data store with change information regarding changed data objects, associations and/or classes in the application program.

In some embodiments, the framework can in addition comprise a module 912 for analyzing the delta store 224 for generating one or more different reports or other forms of analytical results.

In addition, or alternatively, the framework can comprise a module 902 for continuously updating an OLTP data store with data object changes occurring in the application program, thereby ensuring that the OLTP data store always comprises the latest state of the application program. For example, the OLTP data store updating can be performed by sub-module 906 making use of an object-oriented domain model 904 which maps data object types to respective data structures in the OLTP data store. Preferably, all data object instances of a particular object type are stored in a single respective table. This may be advantageous as complex cross-table constraints may be avoided.

According to some embodiments, the framework comprises a module 908 configured for reconstructing the state of the OLTP data store at an arbitrary selected time from the delta store in combination with the current version of the OLTP data store or a backup copy of the OLTP data store created previously.

In addition, or alternatively, the framework comprises a module 916 configured for reconstructing the state of the application program 226 at an arbitrary selected time from the delta store in combination with the current OLTP data store or a backup copy of the OLTP data store created previously.

**Figure 11** illustrates the creation and management of an integrated transaction according to an embodiment of the invention.

According to embodiments of the invention, the framework 210 is configured to generate an integrated transaction 951 (begin event) in response to the reception of a trigger signal 950, for example the call of a particular framework function (e.g. a Java lambda function) by a data object of the application program 226. For example, the call may include one or more data object change operations 950, 952, 954 as function argument. Each of the said data change operations changes a data object, an association of data objects and/or a class of the application program 226 at runtime of the application program. These changes are not immediately visible within the application for other data objects (indicated by the dashed outline of the data object change events 950-954).

When all changes to be made within integrated transaction 951 within application program 226 have been made, the application program is ready for a commit event of this integrated transaction 951. The time of readiness of the application program for the commit event of integrated transaction 951 is represented by circle 958 and is also referred to as the "commit readiness event" of the transaction 951.

As soon as this time or state 958 is reached by the application program, framework 210 initiates the creation of a sub-transaction 960, also referred to as a "delta-sub-transaction". A delta-sub-transaction is a transaction to be executed within the context of an integrated transaction, whereby the delta-sub-transaction comprises storing all delta objects created in the said integrated transaction 951 in the delta store 224 in accordance with the ACID criteria.

Once the framework 210 is notified of a commit event of the delta-sub-transaction 960 (indicating that the delta sub transaction was successfully performed), the framework 210 causes another sub transaction 962 (also called OLTP sub transaction) to be created and executed according to some embodiments of the invention. An OLTP-sub-transaction is a transaction to be executed within the context of an integrated transaction, whereby the OLTP-sub-transaction comprises updating the OLTP data store with all changes 950, 952, 954 made in the application program within the said integrated transaction 951, whereby all update steps performed within an OLTP sub-transaction are executed in accordance with the ACID criteria.

As soon as the framework receives a commit event for the sub-transaction 960 and, in embodiments of the framework supporting the updating an OLTP datastore, as soon as the framework receives a commit event for the OLTP sub-transaction as well, the framework 210 causes a commit event for the integrated transaction 951. This commit event, represented by the concentric double circle at the end of the integrated transaction 951, causes that all changes of data objects, associations and classes, which were carried out in data change operations 950, 952 and 954, now also occur within the application program, too, and are visible for other data objects and routines of the application program.

In the following, a concrete implementation example based on the Java lambda functions is provided.

For example, the application program 226 can be written in the object oriented programming language Java and the framework 210 comprises a plurality of interface methods in the form of Java lambda functions (also referred to as "lambda expressions").

Lambda functions have been added in Java 8. Lambda functions basically express instances of functional interfaces (an interface with a single abstract method is called functional interface. An example is java.lang.Runnable). Lambda expressions implement the only abstract function and therefore implement functional interfaces. Lambda functions enable to treat functionality as a method argument, or code as data. They can be created without belonging to any class. A lambda function can be passed around as if it was an object and executed on demand. Lambda expressions basically express instances of functional interfaces (An interface with a single abstract method, an example is java.lang.Runnable). Lambda expressions implement the only abstract function and therefore implement functional interfaces.

However, other embodiments of the invention may be implemented using other programming languages. A skilled programmer is able to implement the examples and embodiments described herein based on the programming language Java also in other programming languages, in particular in other object-oriented programming languages.

The call *"("add_data", (uow)* -> *{*" - a so-called lambda function in Java - opens a transaction context of an integrated transaction. The call can be made by a data object of the application program but the called lambda function itself is provided preferably as part of the framework 210. The term "uow" here represents a name of an individual integrated transaction to receive the data, in this case "unit of work". The name and/or ID of the transaction may in some embodiment be provided as an argument of the method call.

With the method call "uow.create(Customer.class);" a customer object is created in the integrated transaction uow.

The expression "customer.name().set("test");" sets the property name of the customer to "test" and a Property object is created internally in the framework. This Property object has a 'set' method which comprises the new name "test" and comprises an identifier of the integrated transaction uow or is otherwise assigned to the integrated transaction uow.
when the lambda function is left (terminates), the integrated transaction uow is automatically closed and committed by the framework - and in case of an error all changes are discarded.

The lambda function (which provides the uow transaction context) is implemented by the framework 210. When the uow transaction is closed/ready for commit, an abstract driver interface for the delta store is called by the framework and a delta-sub-transaction is opened. Within the context of the delta-sub-transaction, the stream of delta objects created in the integrated transaction uow is transferred to and saved in the delta store. If the storing in the delta store was successful, the delta-sub-transaction commits and the framework opens/begins a further sub-transaction on the OLTP data store for propagating all data object/association and/or class changes introduced in the application program within the integrated transaction to the OLTP data store. If all the said updates are performed successfully, the OLTP sub-transaction commits and closes.

If both the delta-sub-transaction and the OLTP-sub-transaction commit successful, an OK is returned to the application, the integrated transaction commits and the changes in the application program become visible to other data objects. If an error occurs, the framework triggers a rollback in the application, the delta store and the OLTP data store. However, if an error occurs, all data that led to a termination is still available. This greatly increases traceability in the event of an error.

In the source code example provided below, "repository" is the framework-service that is configured to control the creation, maintenance, commit and rollback of the integrated transactions and all sub-transactions. The name "uow"/"UnitOfWork" is an identifier of a particular integrated transaction.

```
      public void testProxyUnitOfWork() throws Exception {
             repository.unitOfWork("add_data", (uow) -> {
                   Customer customer = uow.create(Customer.class);
                   assertNotNull(customer);
                   customer.name().set("test");
                   return null;
             });
      }
```

With "unitOfWork.create" a new object of the class Customer is created. In addition, the framework automatically creates a delta object with type "createObject" in the background.

For example, a delta object with the attributes timestamp, class (in the example: Customer. class), and/or object-ID is created for the type "createObjectDeltaObject", e.g. an instance of the createObjectDeltaObject 702 template depicted in figure 7. The command "customer.name().set("test");" induces the creation of a delta object of the type "changePropertyDeltaObject" comprising a timestamp, an object-ID, a property-ID and the new property value.

The command "customer.name().set("test");" induces the creation of a delta object of type "changePropertyDeltaObject", e.g. an instance of the changePropertyDeltaObject 706 template depicted in figure 7.

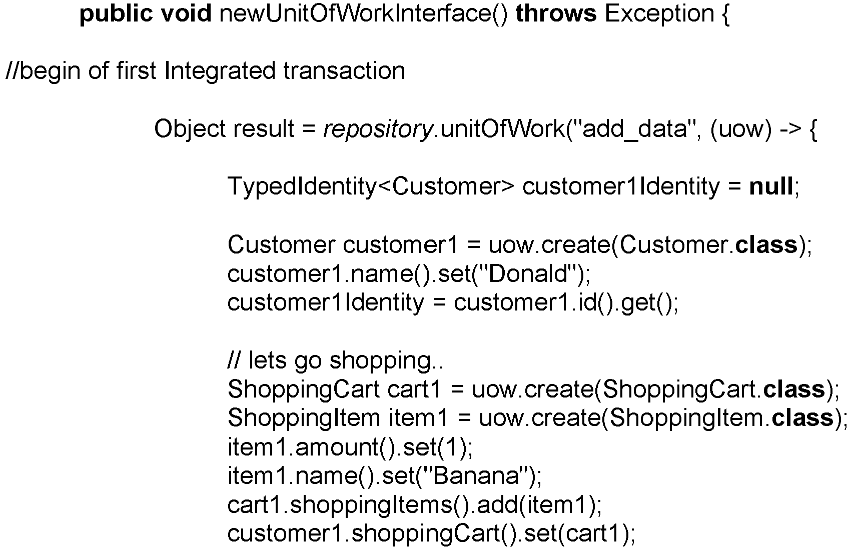

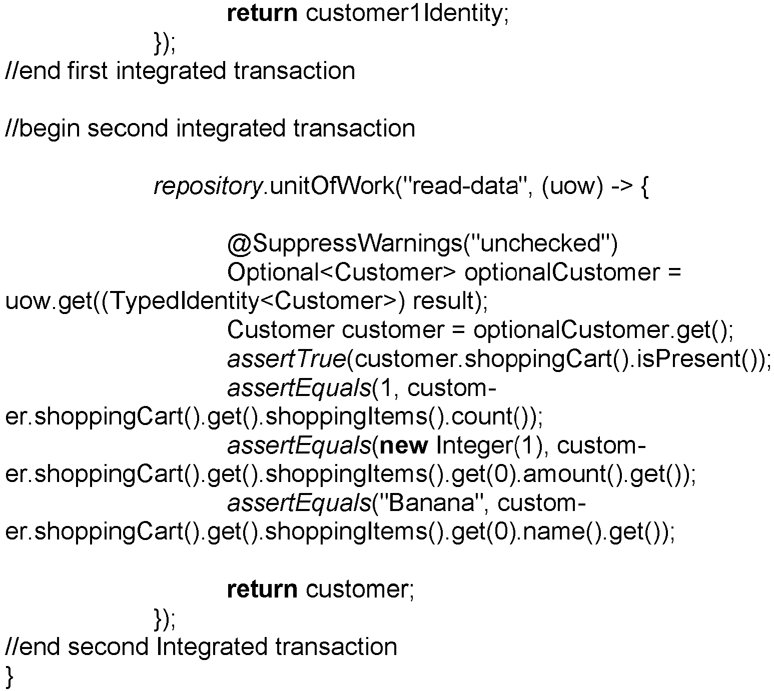

### Listofreferencenumerals - - - - - - - - - - - - - - - - - - - - - - - - - - - - - - - - - - - -

- 102-110: steps
- 200: computer system
- 202: data object
- 204: data object
- 206: change operation
- 208: change operation
- 210: framework
- 212: main memory
- 214: processor(s)
- 216: delta object
- 218: delta object
- 220: OLTP data store
- 222: stream of delta objects
- 224: delta store
- 302-310: storage areas
- 311-316: delta objects
- 402-424: delta objects
- 408-424: traversed delta objects
- 426: selected time
- 434: command/request indicating a selected time
- 428: current time
- 430: OLTP-DB copy comprising the state of the DOs at the current time
- 432: OLTP-DB copy comprising the state of the DOs at the selected time
- 450-478: delta objects
- 456-476: traversed delta objects
- 502-524: delta objects
- 504-514: traversed delta objects
- 550-580: delta objects
- 554-564: traversed delta objects
- 526: selected time
- 528: current time
- 530: backup time
- 532: OLTP-DB copy comprising the state of the DOs at the backup time
- 536: OLTP-DB copy comprising the state of the DOs at the selected time
- 538: OLTP-DB comprising the state of the DOs at the backup time
- 600: graphical user interface
- 602: GUI for time traveling an OLTP data store comprising US stock data
- 604: GUI for time traveling an OLTP data store comprising UK stock data
- 606: GUI element
- 608: graphical representation of a timescale
- 610: indication of the time currently selected by a user and reflecting the state of the data content of the US stock database
- 612: data entry field for one or more search terms
- 614: indication of the time currently selected by a user and reflecting the state of the data content of the US stock database
- 702-710: delta objects
- 802: data object "DO1"
- 804-808: attribute values of DO1
- 810-812: methods of DO1
- 814: data object B07
- 816: attribute value of B07
- 818: method of B07
- 820: change operation
- 822: change operation
- 824: collection of interface methods
- 826-838: interface methods implemented by the methods of the DOs
- 850-854: lines respectively representing a transactional context
- 856: line representing timestamps of data change events
- 902-914: framework sub-modules
- 950: data change event
- 952: data change event
- 954: data change event
- 956: commit of integrated transaction
- 958: commit-readiness event
- 951: integrated transaction
- 960: delta sub-transaction
- 962: OLTP sub-transaction

## Claims

1. A computer-implemented method for persisting data objects (202, 204) of an application program (226), the method comprising:
- providing (102) an application program (226) comprising a plurality of data objects (202, 204) - DOs, wherein the application program is written in an object-oriented programming language, wherein the plurality of DOs comprises at least thousands of Dos, wherein the DOs dynamically interact with each other, are instantiated, modified and deleted at runtime of the application program and represent and control workflows and services implemented in the application program, wherein each DO is a data object within the application program, wherein each DO is an instance of a class written in the object-oriented programming language;
- performing (106) change operations (206, 208) which respectively create, modify and/or delete at least one of the DOs in the application program, wherein the change operations trigger the creation of delta objects (216, 218), each delta object being descriptive of one or more DO changes caused by one of the change operations;
- storing the delta objects in a data store (224) referred to as "delta store", wherein the delta store is a data store that is adapted to store and maintain the delta objects in such a way that they are stored in sequentially adjacent physical storage areas in accordance with the chronological order of physically writing the delta objects on the delta store,
wherein the application program is configured for initiating the creation of one or more integrated transactions and for performing the change operations within the one or more integrated transactions, whereby the creation and the storing of the ones of the delta objects being descriptive of one or more change operations within a particular one of the integrated transactions is executed within the said integrated transaction, and
wherein an integrated transaction is a transaction in accordance with the ACID -At-omicity, Consistency, Isolation, Durability - criteria that covers at least operations performed within the application program and storing operations performed within a software used for storing the delta objects in the delta store,
the method further comprising:
- providing an OLTP-data store comprising the latest state of all DOs of the application program before the change operations were performed; and
- updating the OLTP-data store such that the updated OLTP-data store reflects the changes of the DOs caused by the change operations;
wherein the updating of the OLTP-data store with the one or more DO changes created by the one or more data change operations performed within the particular one of the integrated transactions is executed within the said integrated transaction,
the method further comprising:
- displaying a GUI (600), the GUI comprising at least one GUI element (606) enabling a user to select a point on a graphical representation of a timeline (608);
- receiving an indication (434) of a selected time (426, 526);
- in response to receiving the user's selection of the point on the timeline with the GUI element, reconstructing the OLTP data store at the selected time, wherein the selected time is the time selected by the user with the GUI element; and
- in response to the completion of the reconstruction, automatically updating the GUI such that the GUI indicates (610, 614) that the state of the reconstructed OLTP data store is the state of the OLTP data store at the selected time,
- wherein the state of the application program is synchronized with the state of the data content of the OLTP data store selected by the user via the GUI,
wherein the reconstruction of the OLTP data store at the selected time comprises:
∘ identifying the one (476) of the delta objects in the delta store belonging to the most recently committed integrated transaction (TR44) and being the most recently stored delta object (476) of all delta objects (470-476) within the said integrated transaction (TR44); and starting with the identified delta object, sequentially traversing the delta objects in the delta store until a downstream-termination delta object (456) is reached, the downstream-termination delta object being the one of the delta objects that belongs to the one (TR42) of the integrated transactions having committed first after the selected time (426) and that was first stored in the delta store after the select time, the traversing including the downstream-termination delta object and comprising sequentially undoing all DO changes specified in the traversed delta objects (456-476) in the OLTP data store (220) or in a copy (430) thereof; or
∘ identifying the one (554) of the delta objects in the delta store belonging to the one (TR51) of the integrated transactions having committed first after a backup time and that was first stored in the delta store after the backup time, wherein the backup time is the time wherein a backup (532) of the OLTP data store was created; and starting with the identified delta object (554), sequentially traversing the delta objects (554-564) in the delta store until an upstream-termination delta object (564) is reached, the upstream-termination delta object being the one of the delta objects that belongs to the one (TR52) of the integrated transactions that was last committed before the selected time and that was last stored in the delta store before the selected time, the traversing including the upstream-termination delta object and comprising sequentially applying all DO changes specified in the traversed delta objects on the backup (532).

2. The computer-implemented method of claim 1, wherein the delta store is an "append only" data store.

3. The computer-implemented method of any one of the previous claims,
- wherein the delta store is a data store managed by a streaming application and/or a by a queuing system; and/or
- wherein the delta store is a logical data store comprising a plurality of physical storage units; and/or
- wherein the delta store is free of UNIQUE constriaints that need to be checked before a delta object is stored.

4. The computer-implemented method of any one of the previous claims, further comprising:
- traversing at least some of the delta objects in the delta store for automatically extracting UNDO or REDO operations from the traversed delta objects, the identity of the traversed delta objects depending on the selected time;
- using the extracted UNDO or REDO operations for reconstructing the state of the application program at the selected time.

5. The computer-implemented method of any one of the previous claims, further comprising:
- providing an OLTP-data store copy at a time referred to as copy time, the OLTP data store copy comprising the latest state of all DOs of the application program at the copy time;
- after the copy time, continuously updating the OLTP-data store copy with delta object copies created after the copy time such that the updated OLTP-data store copy comprises the latest state of all DOs of the application program;
- wherein the updating of the OLTP-data store copy with the copies of the delta objects created within any particular one of the integrated transactions is executed within the said integrated transaction.

6. The computer-implemented method of any one of the previous claims, further comprising:
- providing an input data store, the input data store being the OLTP data store (220) or a copy or version (432, 536) thereof, the input data store reflecting the state of the DOs of the application program at a current or previous time;
- receiving an indication (434) of a selected time (426);
- reconstructing the state of an input data store such that it reflects the state of the DOs of the application program at the selected time;
- creating a new instance of the application program whose state reflects the state of the application program at the selected time, the creation comprising:
o reading data being descriptive of the state of the plurality of data objects of the application program at the selected time from the input data store; and
o creating the DOs of the new instance of the application program and the associations between the said DOs in accordance with the read data, the said DOs and DO associations being created according to a predefined object-relational mapping of an object-oriented domain model to a database schema of the input data store.

7. The computer-implemented method of any one of the previous claims,
- wherein each integrated transaction defines a integrated transactional context in which:
o a failure to store within the integrated transaction a delta object in the delta store and/or
o a failure to perform within the integrated transaction an OLTP data store update reflecting a DO change in the application program and/or
o a failure to perform within the integrated transaction a change operation on a DO in the application program
induces:
o a reversal of all DO changes in the application program having already been performed in the said integrated transaction; and
o a reversal of all OLTP data store updates having already been performed in the said integrated transaction; and
o a deletion of all delta objects having already been written in the delta store in the said integrated transaction.

8. The computer-implemented method of any one of claims, wherein each of the delta objects stored in the delta store comprises or is stored in association with an identifier of the integrated transaction within which the delta object was created.

9. The method of claim 8 wherein the application program is configured for being used by multiple users concurrently, whereby the creation of first ones of the integrated transactions is triggered by a first one of the multiple users, the creation of second ones of the integrated transactions is triggered by a second one of the multiple users, the storing of delta objects in the delta store comprising storing an identifier of the first user in association with the delta objects created within the first ones of the transactions and storing an identifier of the second user in association with the delta objects created within the second ones of the transactions.

10. The computer-implemented method of any one of claims, wherein the begin of each of the one or more integrated transactions is triggered by a call to a function, the execution of the called function comprising performing the one or more change operationsto be performed within the integrated transaction whose begin was triggered by the call, wherein preferably the call is performed in a data object of the application program and the function is performed in a framework (210) that is interoperable with the application program.

11. The computer-implemented method of claim 10, wherein the one or more data change operations to be performed within the one of the integrated transactions whose begin is triggered by the call to the function are provided to the function as function arguments.

12. The computer-implemented method of any one of claims, wherein the delta objects are stored in the delta store in accordance with the chronological order of the commit events of the integrated transactions comprising the respective delta objects.

13. The computer-implemented method of any one of claims, further comprising:
- providing a framework (210) that is interoperable with the application program, the framework being configured to manage the creation, commit and/or roll back of the integrated transaction, to perform the storing of the delta objects in the delta store and optionally also the updating of an OLTP database with data object changes, whereby the implementation of the said management and storing tasks is encapsulated and hidden from the application program such that the implementation can be modified or exchanged without requiring a modification of the source code of the application program, wherein the execution of any one of the DO change operations in the application program automatically induces the creation of a delta object being indicative of the change performed on the DO object.

14. The computer-implemented method of any one of the previous claims, wherein the data change operations comprise a class change operation, a class change operation being the creation, deletion or structural modification of a class acting as template for a class-specific type of data objects, the changes induced by the class change operation being reflected in one or more of the delta objects.

15. The computer-implemented method of claim 14 or 15,
- wherein the plurality of DOs and their associations are defined in accordance with an object-oriented domain model; and
- wherein the storing of the DOs in the OLTP data store is performed by the framework such that the DOs and their attributes are stored in accordance with an object-relational mapping of the object-oriented domain model to a database schema of the OLTP data store.

16. The computer-implemented method of any one of the previous claims, wherein the user's selection of a point in the graphical representation of the timeline, the respective reconstruction of the OLTP data store and the updating of the graphical representation of the timeline being performed multiple times in real-time.

17. The computer-implemented method of any one of the preceding claims, wherein the user's selection of a point in the graphical representation of the timeline, the respective reconstruction of the OLTP data store and the updating of the graphical representation of the timeline being performed within a session context of the user interacting with the GUI, wherein the reconstruction of the OLTP data store is performed on a session-based copy of the OLTP data store, the lifetime of the session-based OLTP data store copy being limited to the session context of the user.

18. A computer system(200) comprising:
- a data store (224) referred to as "delta store";
- an application program (226) comprising a plurality of data objects - DOs (202, 204), the application program being configured to perform (106) change operations (206, 208) which respectively create, modify and/or delete at least one of the DOs in the application program, wherein the application program is configured for initiating the creation of one or more integrated transactions and for performing the operations within the one or more integrated transactions, wherein the application program is written in an object-oriented programming language, wherein the plurality of DOs comprises at least thousands of Dos, wherein the DOs dynamically interact with each other, are instantiated, modified and deleted at runtime of the application program and represent and control workflows and services implemented in the application program, wherein each DO is a data object within the application program, wherein each DO is an instance of a class written in the object-oriented programming language;
- a software program (210) configured for:
o creating, in response to the performing of the one or more change operations, delta objects (216, 218), each delta object being descriptive of one or more DO changes caused by one of the change operations;
o storing the delta objects in the delta store (224), wherein the delta store is a data store that is adapted to store and maintain the del-ta objects in such a way that they are stored in sequentially adjacent physical stor-age areas in accordance with the chronological order of physically writing the delta objects on the delta store,
whereby the creation and the storing of the ones of the delta objects being descriptive of one or more change operations within a particular one of the integrated transactions is executed within the said integrated transaction, and
wherein an integrated transaction is a transaction in accordance with the ACID - Atomicity, Consistency, Isolation, Durability - criteria that covers at least operations performed within the application program and storing operations performed within a software used for storing the delta objects in the delta store; and
- an OLTP data store (220) comprising the latest state of the DOs of the application program before the change operations was performed;
the software program being configured for updating the OLTP-data store such that the updated OLTP-data store reflects the changes of the DOs caused by the change operations, wherein the updating of the OLTP-data store with the one or more DO changes created by the one or more data change operations performed within the particular one of the integrated transactions is executed within the said integrated transaction;
- a displayed GUI (600), the GUI comprising at least one GUI element (606) enabling a user to select a point on a graphical representation of a timeline (608);
wherein the computer system is configured to perform, in response to receiving the user's selection of the point on the timeline with the GUI element, the reconstruction of the OLTP data store at the selected time, wherein the selected time is the time selected by the user with the GUI element; and
in response to the completion of the reconstruction, automatically updating the GUI such that the GUI indicates (610, 614) that the state of the reconstructed OLTP data store is the state of the OLTP data store at the selected time,
wherein the state of the application program is synchronized with the state of the data content of the OLTP data store selected by the user via the GUI,
wherein the reconstruction of the OLTP data store at the selected time comprises:
o identifying the one (476) of the delta objects in the delta store belonging to the most recently committed integrated transaction (TR44) and being the most recently stored delta object (476) of all delta objects (470-476) within the said integrated transaction (TR44); and starting with the identified delta object, sequentially traversing the delta objects in the delta store until a downstream-termination delta object (456) is reached, the downstream-termination delta object being the one of the delta objects that belongs to the one (TR42) of the integrated transactions having committed first after the selected time (426) and that was first stored in the delta store after the select time, the traversing including the downstream-termination delta object and comprising sequentially undoing all DO changes specified in the traversed delta objects (456-476) in the OLTP data store (220) or in a copy (430) thereof; or
o identifying the one (554) of the delta objects in the delta store belonging to the one (TR51) of the integrated transactions having committed first after a backup time and that was first stored in the delta store after the backup time, wherein the backup time is the time wherein a backup (532) of the OLTP data store was created; and starting with the identified delta object (554), sequentially traversing the delta objects (554-564) in the delta store until an upstream-termination delta object (564) is reached, the upstream-termination delta object being the one of the delta objects that belongs to the one (TR52) of the integrated transactions that was last committed before the selected time and that was last stored in the delta store before the selected time, the traversing including the upstream-termination delta object and comprising sequentially applying all DO changes specified in the traversed delta objects on the backup (532).

19. A computer-readable storage medium comprising computer-interpretable instructions which, when executed by a processor, cause the processor to provide a framework (210) and an OLTP-data store (220), the framework being operatively coupled to an application program (226) comprising a plurality of data objects - DOs (202, 204), the framework further comprising an interface to a delta store (224), wherein the application program is written in an object-oriented programming language, wherein the plurality of DOs comprises at least thousands of Dos, wherein the DOs dynamically interact with each other, are instantiated, modified and deleted at runtime of the application program and represent and control workflows and services implemented in the application program, wherein each DO is a data object within the application program, wherein each DO is an instance of a class written in the object-oriented programming language, the framework being configured for:
o receiving an indication of change operations (206, 208) which respectively create, modify and/or delete at least one of the DOs in the application program from the application program;
o in response to the receiving, creating delta objects (216, 218), each delta object being descriptive of one or more DO changes caused by one of the change operations;
o storing the delta objects in the delta store (224), wherein the delta store is a data store that is adapted to store and maintain the del-ta objects in such a way that they are stored in sequentially adjacent physical stor-age areas in accordance with the chronological order of physically writing the delta objects on the delta store,
whereby the creation and the storing of the ones of the delta objects being descriptive of one or more change operations within a particular one of the integrated transactions is executed within the said integrated transaction, and
wherein an integrated transaction is a transaction in accordance with the ACID - Atomicity, Consistency, Isolation, Durability - criteria that covers at least operations performed within the application program and storing operations performed within the framework (210) used for storing the delta objects in the delta store,
wherein the framework (210) is further configured for updating the OLTP-data store such that the updated OLTP-data store reflects the changes of the DOs caused by the change operations, wherein the updating of the OLTP-data store with the one or more DO changes created by the one or more data change operations performed within the particular one of the integrated transactions is executed within the said integrated transaction,
wherein the computer-interpretable instructions, when executed by the processor, cause the processor to:
- displaying a GUI (600), the GUI comprising at least one GUI element (606) enabling a user to select a point on a graphical representation of a timeline (608);
- in response to receiving the user's selection of the point on the timeline with the GUI element, performing the reconstruction of the OLTP data store at the selected time in accordance with claim 6 or 7, wherein the selected time is the time selected by the user with the GUI element; and
in response to the completion of the reconstruction, automatically updating the GUI such that the GUI indicates (610, 614) that the state of the reconstructed OLTP data store is the state of the OLTP data store at the selected time,
wherein the state of the application program is synchronized with the state of the data content of the OLTP data store selected by the user via the GUI,
wherein the reconstruction of the OLTP data store at the selected time comprises:
o identifying the one (476) of the delta objects in the delta store belonging to the most recently committed integrated transaction (TR44) and being the most recently stored delta object (476) of all delta objects (470-476) within the said integrated transaction (TR44); and starting with the identified delta object, sequentially traversing the delta objects in the delta store until a downstream-termination delta object (456) is reached, the downstream-termination delta object being the one of the delta objects that belongs to the one (TR42) of the integrated transactions having committed first after the selected time (426) and that was first stored in the delta store after the select time, the traversing including the downstream-termination delta object and comprising sequentially undoing all DO changes specified in the traversed delta objects (456-476) in the OLTP data store (220) or in a copy (430) thereof; or
identifying the one (554) of the delta objects in the delta store belonging to the one (TR51) of the integrated transactions having committed first after a backup time and that was first stored in the delta store after the backup time, wherein the backup time is the time wherein a backup (532) of the OLTP data store was created and starting with the identified delta object (554), sequentially traversing the delta objects (554-564) in the delta store until an upstream-termination delta object (564) is reached, the upstream-termination delta object being the one of the delta objects that belongs to the one (TR52) of the integrated transactions that was last committed before the selected time and that was last stored in the delta store before the selected time, the traversing including the upstream-termination delta object and comprising sequentially applying all DO changes specified in the traversed delta objects on the backup (532).

## Patentansprüche

1. Computerimplementiertes Verfahren zur Persistierung von Datenobjekten (202, 204) eines Anwendungsprogramms (226), wobei das Verfahren umfasst:
- Bereitstellen (102) eines Anwendungsprogramms (226), das eine Mehrzahl von Datenobjekten (202, 204) - DOs - umfasst, wobei das Anwendungsprogramm in einer objektorientierten Programmiersprache geschrieben ist, wobei die Mehrzahl von DOs mindestens Tausende von DOs umfasst, wobei die DOs dynamisch miteinander interagieren, während der Laufzeit des Anwendungsprogramms instanziiert, modifiziert und gelöscht werden und in dem Anwendungsprogramm implementierte Workflows und Services darstellen und steuern, wobei jedes DO ein Datenobjekt innerhalb des Anwendungsprogramms ist, wobei jedes DO eine Instanz einer Klasse ist, die in der objektorientierten Programmiersprache geschrieben ist;
- Ausführen (106) von Änderungsoperationen (206, 208), die jeweils mindestens eines von den DOs in dem Anwendungsprogramm erzeugen, modifizieren und/oder löschen, wobei die Änderungsoperationen die Erzeugung von Deltaobjekten (216, 218) auslösen, wobei jedes Deltaobjekt eine oder mehrere, durch eine der Änderungsoperationen bewirkte DO-Änderungen beschreibt;
- Speichern der Deltaobjekte in einem als "Deltaspeicher" bezeichneten Datenspeicher (224), wobei der Deltaspeicher ein Datenspeicher ist, der dazu eingerichtet ist, die Deltaobjekte auf solche Weise zu speichern und zu bewahren, dass sie gemäß der chronologischen Reihenfolge, in der die Deltaobjekte physisch in den Deltaspeicher geschrieben werden, in aneinandergereihten, einander benachbarten physischen Speicherbereichen gespeichert werden,
wobei das Anwendungsprogramm konfiguriert ist, die Erzeugung einer oder mehrerer integrierter Transaktionen zu initiieren und die Änderungsoperationen innerhalb der einen oder der mehreren integrierten Transaktionen auszuführen, wodurch die Erzeugung und die Speicherung derjenigen von den Deltaobjekten, die eine oder mehrere Änderungsoperationen innerhalb einer bestimmten von den integrierten Transaktionen beschreiben, innerhalb dieser integrierten Transaktion durchgeführt werden, und
wobei eine integrierte Transaktion eine Transaktion gemäß den Kriterien von AKID - Atomarität, Konsistenz, Isolation, Dauerhaftigkeit - ist, die zumindest für innerhalb des Anwendungsprogramms ausgeführte Operationen und für Speicherungsoperationen gelten, die innerhalb einer zum Speichern der Deltaobjekte in dem Deltaspeicher verwendeten Software ausgeführt werden,
wobei das Verfahren ferner umfasst:
- Bereitstellen eines OLTP-Datenspeichers, der den aktuellen Zustand aller DOs des Anwendungsprogramms vor der Ausführung der Änderungsoperationen umfasst; und
- Aktualisieren des OLTP-Datenspeichers auf solche Weise, dass der aktualisierte OLTP-Datenspeicher die durch die Änderungsoperationen bewirkten Änderungen an den DOs wiedergibt;
wobei das Aktualisieren des OLTP-Datenspeichers mit der einen oder den mehreren DO-Änderungen, die durch die eine oder die mehreren, innerhalb der einen bestimmten von den integrierten Transaktionen ausgeführten Datenänderungsoperationen erzeugt worden sind, innerhalb dieser integrierten Transaktion durchgeführt wird,
wobei das Verfahren ferner umfasst:
- Anzeigen einer GUI (600), wobei die GUI mindestens ein GUI-Element (606) umfasst, das einem Anwender ermöglicht, einen Punkt auf einer grafischen Darstellung einer Zeitachse (608) auszuwählen;
- Empfangen einer Angabe (434) einer ausgewählten Zeit (426, 526);
- als Reaktion auf das Empfangen der Auswahl des Anwenders bezüglich des Punktes auf der Zeitachse mit dem GUI-Element: Rekonstruieren des OLTP-Datenspeichers zu der ausgewählten Zeit, wobei die ausgewählte Zeit die Zeit ist, die von dem Anwender mit dem GUI-Element ausgewählt wurde; und
- als Reaktion auf die Fertigstellung der Rekonstruktion: automatisch Aktualisieren der GUI auf solche Weise, dass die GUI anzeigt (610, 614), dass der Zustand des rekonstruierten OLTP-Datenspeichers der Zustand des OLTP-Datenspeichers zu der ausgewählten Zeit ist,
- wobei der Zustand des Anwendungsprogramms mit dem Zustand des Dateninhalts des OLTP-Datenspeichers, der von dem Anwender über die GUI ausgewählt wurde, synchronisiert wird,
wobei die Rekonstruktion des OLTP-Datenspeichers zu der ausgewählten Zeit umfasst:
∘ Identifizieren desjenigen (476) von den Deltaobjekten in dem Deltaspeicher, das zu der zuletzt festgeschriebenen integrierten Transaktion (TR44) gehört und bei dem es sich um das zuletzt gespeicherte Deltaobjekt (476) von allen Deltaobjekten (470-476) innerhalb dieser integrierten Transaktion (TR44) handelt; und, beginnend mit dem identifizierten Deltaobjekt, Durchlaufen der Deltaobjekte in dem Deltaspeicher der Reihe nach, bis ein downstream abgeschlossenes Deltaobjekt (456) erreicht wird, wobei das downstream abgeschlossene Deltaobjekt dasjenige von den Deltaobjekten ist, das zu derjenigen (TR42) von den integrierten Transaktionen gehört, die nach der ausgewählten Zeit (426) als erste festgeschrieben wurde, und das nach der ausgewählten Zeit als erstes in dem Deltaspeicher gespeichert wurde, wobei das Durchlaufen das downstream abgeschlossene Deltaobjekt einschließt und ein Rückgängigmachen aller DO-Änderungen, die in den durchlaufenen Deltaobjekten (456-476) in dem OLTP-Datenspeicher (220) oder in einer Kopie (430) davon spezifiziert sind, der Reihe nach umfasst; oder
∘ Identifizieren desjenigen (554) von den Deltaobjekten in dem Deltaspeicher, das zu derjenigen (TR51) von den integrierten Transaktionen gehört, die nach einer Sicherungszeit als erste festgeschrieben wurde, und das nach der Sicherungszeit als erstes in dem Deltaspeicher gespeichert wurde, wobei die Sicherungszeit die Zeit ist, in der eine Sicherung (532) des OLTP-Datenspeichers erzeugt wurde; und, beginnend mit dem identifizierten Deltaobjekt (554), Durchlaufen der Deltaobjekte (554-564) in dem Deltaspeicher der Reihe nach, bis ein upstream abgeschlossenes Deltaobjekt (564) erreicht wird, wobei das upstream abgeschlossene Deltaobjekt dasjenige von den Deltaobjekten ist, das zu derjenigen (TR52) von den integrierten Transaktionen gehört, die vor der ausgewählten Zeit als letzte festgeschrieben wurde, und das vor der ausgewählten Zeit als letztes in dem Deltaspeicher gespeichert wurde, wobei das Durchlaufen das upstream abgeschlossene Deltaobjekt einschließt und ein Anwenden aller in den durchlaufenen Deltaobjekten spezifizierten DO-Änderungen auf die Sicherung (532) der Reihe nach umfasst.

2. Computerimplementiertes Verfahren nach Anspruch 1, wobei der Deltaspeicher ein "Append-only"-Datenspeicher ist.

3. Computerimplementiertes Verfahren nach einem der vorangehenden Ansprüche,
- wobei der Deltaspeicher ein Datenspeicher ist, der von einer Streaming-Anwendung und/oder von einem Warteschlangensystem verwaltet wird; und/oder
- wobei der Deltaspeicher ein logischer Datenspeicher ist, der eine Mehrzahl von physischen Speichereinheiten umfasst; und/oder
- wobei der Deltaspeicher frei von UNIQUE-Constraints ist, die vor der Speicherung eines Deltaobjekts überprüft werden müssen.

4. Computerimplementiertes Verfahren nach einem der vorangehenden Ansprüche, ferner umfassend:
- Durchlaufen von zumindest einigen von den Deltaobjekten in dem Deltaspeicher zum automatischen Extrahieren von UNDO- und REDO-Operationen aus den durchlaufenen Deltaobjekten, wobei die Identität der durchlaufenen Deltaobjekte von der ausgewählten Zeit abhängt;
- Verwenden der extrahierten UNDO- oder REDO-Operationen zum Rekonstruieren des Zustands des Anwendungsprogramms zu der ausgewählten Zeit.

5. Computerimplementiertes Verfahren nach einem der vorangehenden Ansprüche, ferner umfassend:
- Bereitstellen einer OLTP-Datenspeicherkopie zu einer Zeit, die als Kopierzeit bezeichnet wird, wobei die OLTP-Datenspeicherkopie den aktuellen Zustand aller DOs des Anwendungsprogramms zu der Kopierzeit umfasst;
- nach der Kopierzeit: kontinuierliches Aktualisieren der OLTP-Datenspeicherkopie mit nach der Kopierzeit erzeugten Deltaobjektkopien, so dass die aktualisierte OLTP-Datenspeicherkopie den aktuellen Zustand aller DOs des Anwendungsprogramms umfasst;
- wobei das Aktualisieren der OLTP-Datenspeicherkopie mit den Kopien der Deltaobjekte, die innerhalb von irgendeiner bestimmten von den integrierten Transaktionen erzeugt wurden, innerhalb dieser integrierten Transaktion durchgeführt wird.

6. Computerimplementiertes Verfahren nach einem der vorangehenden Ansprüche, ferner umfassend:
- Bereitstellen eines Eingangsdatenspeichers, wobei der Eingangsdatenspeicher der OLTP-Datenspeicher (220) oder eine Kopie oder Version (432, 536) davon ist, wobei der Eingangsdatenspeicher den Zustand der DOs des Anwendungsprogramms zu einer jetzigen oder früheren Zeit wiedergibt;
- Empfangen einer Angabe (434) einer ausgewählten Zeit (426);
- Rekonstruieren des Zustands eines Eingangsdatenspeichers auf solche Weise, dass er den Zustand der DOs des Anwendungsprogramms zu der ausgewählten Zeit wiedergibt;
- Erzeugen einer neuen Instanz des Anwendungsprogramms, deren Zustand den Zustand des Anwendungsprogramms zu der ausgewählten Zeit wiedergibt, wobei die Erzeugung umfasst:
o Lesen von Daten, die den Zustand der Mehrzahl von Datenobjekten des Anwendungsprogramms zu der ausgewählten Zeit beschreiben, aus dem Eingangsdatenspeicher; und
o Erzeugen der DOs der neuen Instanz des Anwendungsprogramms und der Assoziationen zwischen diesen DOs gemäß den gelesenen Daten, wobei diese DOs und DO-Assoziationen gemäß einer vordefinierten objektrelationalen Abbildung eines objektorientierten Domänenmodells auf ein Datenbankschema des Eingangsdatenspeichers erzeugt werden.

7. Computerimplementiertes Verfahren nach einem der vorangehenden Ansprüche,
- wobei jede integrierte Transaktion einen integrierten Transaktionskontext definiert, in dem:
o ein Fehlschlag einer Speicherung eines Deltaobjekts in dem Deltaspeicher innerhalb der integrierten Transaktion und/oder
o ein Fehlschlag einer Ausführung einer Aktualisierung eines OLTP-Datenspeichers, die eine DO-Änderung in dem Anwendungsprogramm wiedergibt, innerhalb der integrierten Transaktion und/oder
o ein Fehlschlag einer Ausführung einer Änderungsoperation an einem DO in dem Anwendungsprogramm innerhalb der integrierten Transaktion Folgendes hervorruft:
o eine Umkehrung aller in dieser integrierten Transaktion bereits ausgeführten DO-Änderungen in dem Anwendungsprogramm; und
o eine Umkehrung aller in dieser integrierten Transaktion bereits ausgeführten Aktualisierungen des OLTP-Datenspeichers; und
∘ eine Löschung aller Deltaobjekte, die in dieser integrierten Transaktion bereits in den Deltaspeicher geschrieben wurden.

8. Computerimplementiertes Verfahren nach einem der Ansprüche, wobei jedes von den in dem Deltaspeicher gespeicherten Deltaobjekten eine Kennung der integrierten Transaktion, innerhalb von der das Deltaobjekt erzeugt wurde, umfasst oder assoziiert mit einer solchen gespeichert wird.

9. Verfahren nach Anspruch 8, wobei das Anwendungsprogramm für eine gleichzeitige Verwendung durch mehrere Anwender konfiguriert ist, wodurch die Erzeugung von ersten von den integrierten Transaktionen durch einen ersten von den mehreren Anwendern ausgelöst wird, die Erzeugung von zweiten von den integrierten Transaktionen durch einen zweiten von den mehreren Anwendern ausgelöst wird, wobei das Speichern der Deltaobjekte in dem Deltaspeicher das Speichern einer Kennung des ersten Anwenders, assoziiert mit den innerhalb der ersten von den Transaktionen erzeugten Deltaobjekten und das Speichern einer Kennung des zweiten Anwenders, assoziiert mit den innerhalb der zweiten von den Transaktionen erzeugten Deltaobjekten umfasst.

10. Computerimplementiertes Verfahren nach einem der Ansprüche, wobei der Beginn von jeder von der einen oder den mehreren integrierten Transaktionen durch einen Aufruf einer Funktion ausgelöst wird, wobei die Durchführung der aufgerufenen Funktion ein Ausführen der einen oder der mehreren Änderungsoperationen umfasst, die innerhalb der integrierten Transaktion, deren Beginn durch den Aufruf ausgelöst wurde, auszuführen sind, wobei der Aufruf vorzugsweise in einem Datenobjekt des Anwendungsprogramms ausgeführt wird und die Funktion in einem Framework (210) ausgeführt wird, das mit dem Anwendungsprogramm interoperabel ist.

11. Computerimplementiertes Verfahren nach Anspruch 10, wobei die eine oder die mehreren Datenänderungsoperationen, die innerhalb derjenigen von den integrierten Transaktionen auszuführen sind, deren Beginn durch den Aufruf der Funktion ausgelöst wird, als Funktionsargumente für die Funktion bereitgestellt werden.

12. Computerimplementiertes Verfahren nach einem der Ansprüche, wobei die Deltaobjekte gemäß der chronologischen Reihenfolge der Festschreibungsereignisse der integrierten Transaktionen, welche die jeweiligen Deltaobjekte umfassen, in dem Deltaspeicher gespeichert werden.

13. Computerimplementiertes Verfahren nach einem der Ansprüche, ferner umfassend:
- Bereitstellen eines Framework (210), das mit dem Anwendungsprogramm interoperabel ist, wobei das Framework konfiguriert ist zum Verwalten der Erzeugung, Festschreibung und/oder Annullierung der integrierten Transaktion, zum Ausführen der Speicherung der Deltaobjekte in dem Deltaspeicher und optional auch der Aktualisierung einer OLTP-Datenbank mit Datenobjektänderungen, wodurch die Implementierung dieser Verwaltungs- und Speicherungsaufgaben verkapselt und vor dem Anwendungsprogramm verborgen wird, so dass die Implementierung modifiziert oder ausgetauscht werden kann, ohne dass dies eine Modifizierung des Quellcodes des Anwendungsprogramms erfordert, wobei die Durchführung von irgendeiner von den DO-Änderungsoperationen in dem Anwendungsprogramm automatisch die Erzeugung eines Deltaobjekts hervorruft, das die von dem DO-Objekt ausgeführte Änderung angibt.

14. Computerimplementiertes Verfahren nach einem der vorangehenden Ansprüche, wobei die Datenänderungsoperationen eine Klassenänderungsoperation umfassen, wobei eine Klassenänderungsoperation die Erzeugung, Löschung oder strukturelle Modifizierung einer Klasse ist, die als Template für einen klassenspezifischen Typ von Datenobjekten wirkt, wobei die von der Klassenänderungsoperation hervorgerufenen Änderungen in einem oder mehreren von den Deltaobjekten wiedergegeben werden.

15. Computerimplementiertes Verfahren nach Anspruch 14 oder 15,
- wobei die Mehrzahl von DOs und ihre Assoziationen gemäß einem objektorientierten Domänenmodell definiert werden; und
- wobei das Speichern der DOs in dem OLTP-Datenspeicher durch das Framework auf solche Weise ausgeführt wird, dass die DOs und ihre Attribute gemäß einer objektrelationalen Abbildung des objektorientierten Domänenmodells auf ein Datenbankschema des OLTP-Datenspeichers gespeichert werden.

16. Computerimplementiertes Verfahren nach einem der vorangehenden Ansprüche, wobei die Anwenderauswahl eines Punkts in der grafischen Darstellung der Zeitachse, die entsprechende Rekonstruktion des OLTP-Datenspeichers und die Aktualisierung der grafischen Darstellung der Zeitachse mehrmals in Echtzeit ausgeführt werden.

17. Computerimplementiertes Verfahren nach einem der vorangehenden Ansprüche, wobei die Auswahl eines Punkts in der grafischen Darstellung der Zeitachse durch den Anwender, die entsprechende Rekonstruktion des OLTP-Datenspeichers und die Aktualisierung der grafischen Darstellung der Zeitachse innerhalb eines Sitzungskontextes des mit der GUI interagierenden Anwenders ausgeführt werden, wobei die Rekonstruktion des OLTP-Datenspeichers an einer sitzungsbasierten Kopie des OLTP-Datenspeichers ausgeführt wird, wobei die Lebenszeit der sitzungsbasierten Kopie des OLTP-Datenspeichers auf den Sitzungskontext des Anwenders beschränkt ist.

18. Computersystem (200), umfassend:
- einen Datenspeicher (224), der als "Deltaspeicher" bezeichnet wird;
- ein Anwendungsprogramm (226), das eine Mehrzahl von Datenobjekten - DOs (202, 204) - umfasst, wobei das Anwendungsprogramm konfiguriert ist, Änderungsoperationen (206, 208) auszuführen (106), die jeweils mindestens eines von den DOs in dem Anwendungsprogramm erzeugen, modifizieren und/oder löschen, wobei das Anwendungsprogramm konfiguriert ist, die Erzeugung einer oder mehrerer integrierter Transaktionen zu initiieren und die Operationen innerhalb der einen oder der mehreren integrierten Transaktionen auszuführen, wobei das Anwendungsprogramm in einer objektorientierten Programmiersprache geschrieben ist, wobei die Mehrzahl von DOs mindestens Tausende von DOs umfasst, wobei die DOs dynamisch miteinander interagieren, während der Laufzeit des Anwendungsprogramms instanziiert, modifiziert und gelöscht werden und in dem Anwendungsprogramm implementierte Workflows und Services darstellen und steuern, wobei jedes DO eine Instanz einer Klasse ist, die in der objektorientierten Programmiersprache geschrieben ist;
- ein Software-Programm (210), konfiguriert zum:
o Erzeugen von Deltaobjekten (216, 218) als Reaktion auf die Ausführung der einen oder der mehreren Änderungsoperationen, wobei jedes Deltaobjekt eine oder mehrere, von einer der Änderungsoperationen bewirkte DO-Änderungen beschreibt;
o Speichern der Deltaobjekte in dem Deltaspeicher (224), wobei der Deltaspeicher ein Datenspeicher ist, der dazu eingerichtet ist, die Deltaobjekte auf solche Weise zu speichern und zu bewahren, dass sie gemäß der chronologischen Reihenfolge, in der die Deltaobjekte physisch in den Deltaspeicher geschrieben werden, in aneinandergereihten, einander benachbarten physischen Speicherbereichen gespeichert werden,
wodurch die Erzeugung und Speicherung derjenigen von den Deltaobjekten, die eine oder mehrere Änderungsoperationen innerhalb einer bestimmten von den integrierten Transaktionen beschreiben, innerhalb dieser integrierten Transaktion durchgeführt werden, und
wobei eine integrierte Transaktion eine Transaktion gemäß den Kriterien von AKID - Atomarität, Konsistenz, Isolation, Dauerhaftigkeit - ist, die zumindest für innerhalb des Anwendungsprogramms ausgeführte Operationen und für Speicherungsoperationen gelten, die innerhalb einer zum Speichern der Deltaobjekte in dem Deltaspeicher verwendeten Software ausgeführt werden; und
- einen OLTP-Datenspeicher (220), der den aktuellen Zustand der DOs des Anwendungsprogramms vor der Ausführung der Änderungsoperationen umfasst;
wobei das Software-Programm konfiguriert ist, um den OLTP-Datenspeicher auf solche Weise zu aktualisieren, dass der aktualisierte OLTP-Datenspeicher die durch die Änderungsoperationen bewirkten Änderungen der DOs wiedergibt, wobei das Aktualisieren des OLTP-Datenspeichers mit der einen oder den mehreren DO-Änderungen, die durch die eine oder die mehreren, innerhalb der bestimmten einen von den integrierten Transaktionen ausgeführten Datenänderungsoperationen erzeugt werden, innerhalb dieser integrierten Transaktion ausgeführt wird;
- eine angezeigte GUI (600), wobei die GUI mindestens ein GUI-Element (606) umfasst, das einem Anwender ermöglicht, einen Punkt auf einer grafischen Darstellung einer Zeitachse (608) auszuwählen;
wobei das Computersystem konfiguriert ist, um als Reaktion auf das Empfangen der Auswahl des Punktes auf der Zeitachse durch den Anwender mit dem GUI-Element die Rekonstruktion des OLTP-Datenspeichers zu der ausgewählten Zeit auszuführen, wobei die ausgewählte Zeit die von dem Anwender mit dem GUI-Element ausgewählte Zeit ist; und
als Reaktion auf die Fertigstellung der Rekonstruktion automatisch die GUI auf solche Weise zu aktualisieren, dass die GUI anzeigt (610, 614), dass der Zustand des rekonstruierten OLTP-Datenspeichers der Zustand des OLTP-Datenspeichers zu der ausgewählten Zeit ist,
wobei der Zustand des Anwendungsprogramms mit dem Zustand des Dateninhalts des OLTP-Datenspeichers, der von dem Anwender über die GUI ausgewählt wurde, synchronisiert wird,
wobei die Rekonstruktion des OLTP-Datenspeichers zu der ausgewählten Zeit umfasst:
∘ Identifizieren desjenigen (476) von den Deltaobjekten in dem Deltaspeicher, das zu der zuletzt festgeschriebenen integrierten Transaktion (TR44) gehört und bei dem es sich um das zuletzt gespeicherte Deltaobjekt (476) von allen Deltaobjekten (470-476) innerhalb dieser integrierten Transaktion (TR44) handelt; und, beginnend mit dem identifizierten Deltaobjekt, Durchlaufen der Deltaobjekte in dem Deltaspeicher der Reihe nach, bis ein downstream abgeschlossenes Deltaobjekt (456) erreicht wird, wobei das downstream abgeschlossene Deltaobjekt dasjenige von den Deltaobjekten ist, das zu derjenigen (TR42) von den integrierten Transaktionen gehört, die nach der ausgewählten Zeit (426) als erste festgeschrieben wurde, und das nach der ausgewählten Zeit als erstes in dem Deltaspeicher gespeichert wurde, wobei das Durchlaufen das downstream abgeschlossene Deltaobjekt einschließt und ein Rückgängigmachen aller DO-Änderungen, die in den durchlaufenen Deltaobjekten (456-476) in dem OLTP-Datenspeicher (220) oder in einer Kopie (430) davon spezifiziert sind, der Reihe nach umfasst; oder
o Identifizieren desjenigen (554) von den Deltaobjekten in dem Deltaspeicher, das zu derjenigen (TR51) von den integrierten Transaktionen gehört, die nach einer Sicherungszeit als erste festgeschrieben wurde, und das nach der Sicherungszeit als erstes in dem Deltaspeicher gespeichert wurde, wobei die Sicherungszeit die Zeit ist, in der eine Sicherung (532) des OLTP-Datenspeichers erzeugt wurde; und, beginnend mit dem identifizierten Deltaobjekt (554): Durchlaufen der Deltaobjekte (554-564) in dem Deltaspeicher der Reihe nach, bis ein upstream abgeschlossenes Deltaobjekt (564) erreicht wird, wobei das upstream abgeschlossene Deltaobjekt dasjenige von den Deltaobjekten ist, das zu derjenigen (TR52) von den integrierten Transaktionen gehört, die vor der ausgewählten Zeit als letzte festgeschrieben wurde, und das vor der ausgewählten Zeit als letztes in dem Deltaspeicher gespeichert wurde, wobei das Durchlaufen das upstream abgeschlossene Deltaobjekt einschließt und ein Anwenden aller in den durchlaufenen Deltaobjekten spezifizierten DO-Änderungen der Reihe nach auf die Sicherung (532) umfasst.

19. Computerlesbares Speichermedium, das computerinterpretierbare Befehle umfasst, die, wenn sie von einem Prozessor durchgeführt werden, bewirken, dass der Prozessor ein Framework (210) und einen OLTP-Datenspeicher (220) bereitstellt, wobei das Framework operativ mit einem Anwendungsprogramm (226) gekoppelt ist, das eine Mehrzahl von Datenobjekten - DOs (202, 204) - umfasst, wobei das Framework ferner eine Schnittstelle mit einem Deltaspeicher (224) umfasst, wobei das Anwendungsprogramm in einer objektorientierten Programmiersprache geschrieben ist, wobei die Mehrzahl von DOs mindestens Tausende von DOs umfasst, wobei die DOs dynamisch miteinander interagieren, während der Laufzeit des Anwendungsprogramms instanziiert, modifiziert und gelöscht werden und in dem Anwendungsprogramm implementierte Workflows und Services darstellen und steuern, wobei jedes DO ein Datenobjekt innerhalb des Anwendungsprogramms ist, wobei jedes DO eine Instanz einer Klasse ist, die in der objektorientierten Programmiersprache geschrieben ist, wobei das Framework konfiguriert ist zum:
∘ Empfangen einer Angabe von Änderungsoperationen (206, 208), die jeweils mindestens eines von den DOs in dem Anwendungsprogramm erzeugen, modifizieren und/oder aus dem Anwendungsprogramm löschen;
o Erzeugen von Deltaobjekten (216, 218) als Reaktion auf das Empfangen, wobei jedes Deltaobjekt eine oder mehrere, von einer der Änderungsoperationen bewirkte DO-Änderungen beschreibt;
o Speichern der Deltaobjekte in dem Deltaspeicher (224), wobei der Deltaspeicher ein Datenspeicher ist, der dazu eingerichtet ist, die Deltaobjekte auf solche Weise zu speichern und zu bewahren, dass sie gemäß der chronologischen Reihenfolge, in der die Deltaobjekte physisch in den Deltaspeicher geschrieben werden, in aneinandergereihten, einander benachbarten physischen Speicherbereichen gespeichert werden,
wodurch die Erzeugung und Speicherung derjenigen von den Deltaobjekten, die eine oder mehrere Änderungsoperationen innerhalb einer bestimmten einen von den integrierten Transaktionen beschreiben, innerhalb dieser integrierten Transaktion ausgeführt werden, und
wobei eine integrierte Transaktion eine Transaktion gemäß den Kriterien von AKID - Atomarität, Konsistenz, Isolation, Dauerhaftigkeit - ist, die zumindest für innerhalb des Anwendungsprogramms ausgeführte Operationen und für Speicherungsoperationen gelten, die innerhalb des zum Speichern der Datenobjekte in dem Deltaspeicher verwendeten Framework (210) ausgeführt werden,
wobei das Framework (210) ferner konfiguriert ist, den OLTP-Datenspeicher auf solche Weise zu aktualisieren, dass der aktualisierte OLTP-Datenspeicher die von den Änderungsoperationen bewirkten Änderungen der DOs wiedergibt, wobei das Aktualisieren des OLTP-Datenspeichers mit der einen oder den mehreren DO-Änderungen, die durch die eine oder die mehreren, innerhalb der einen bestimmten von den integrierten Transaktionen ausgeführten Datenänderungsoperationen erzeugt werden, innerhalb dieser integrierten Transaktionen ausgeführt wird,
wobei die computerinterpretierbaren Befehle, wenn sie von dem Prozessor durchgeführt werden, den Prozessor zu Folgendem veranlassen:
- Anzeigen einer GUI (600), wobei die GUI mindestens ein GUI-Element (606) umfasst, das einem Anwender ermöglicht, einen Punkt auf einer grafischen Darstellung einer Zeitachse (608) auszuwählen;
- als Reaktion auf das Empfangen der Auswahl des Anwenders bezüglich des Punktes auf der Zeitachse mit dem GUI-Element: Ausführen der Rekonstruktion des OLTP-Datenspeichers zu der ausgewählten Zeit gemäß Anspruch 6 oder 7, wobei die ausgewählte Zeit die von dem Anwender mit dem GUI-Element ausgewählte Zeit ist; und
als Reaktion auf die Fertigstellung der Rekonstruktion: automatisch Aktualisieren der GUI auf solche Weise, dass die GUI anzeigt (610, 614), dass der Zustand des rekonstruierten OLTP-Datenspeichers der Zustand des OLTP-Datenspeichers zu der ausgewählten Zeit ist,
wobei der Zustand des Anwendungsprogramms mit dem Zustand des Dateninhalts des OLTP-Datenspeichers, der von dem Anwender über die GUI ausgewählt wurde, synchronisiert wird,
wobei die Rekonstruktion des OLTP-Datenspeichers zu der ausgewählten Zeit umfasst:
o Identifizieren desjenigen (476) von den Deltaobjekten in dem Deltaspeicher, das zu der zuletzt festgeschriebenen integrierten Transaktion (TR44) gehört und bei dem es sich um das zuletzt gespeicherte Deltaobjekt (476) von allen Deltaobjekten (470-476) innerhalb dieser integrierten Transaktion (TR44) handelt; und, beginnend mit dem identifizierten Deltaobjekt, Durchlaufen der Deltaobjekte in dem Deltaspeicher der Reihe nach, bis ein downstream abgeschlossenes Deltaobjekt (456) erreicht wird, wobei das downstream abgeschlossene Deltaobjekt dasjenige von den Deltaobjekten ist, das zu derjenigen (TR42) von den integrierten Transaktionen gehört, die nach der ausgewählten Zeit (426) als erste festgeschrieben wurde, und das nach der ausgewählten Zeit als erstes in dem Deltaspeicher gespeichert wurde, wobei das Durchlaufen das downstream abgeschlossene Deltaobjekt einschließt und ein Rückgängigmachen aller DO-Änderungen, die in den durchlaufenen Deltaobjekten (456-476) in dem OLTP-Datenspeicher (220) oder in einer Kopie (430) davon spezifiziert sind, der Reihe nach umfasst; oder
o Identifizieren desjenigen (554) von den Deltaobjekten in dem Deltaspeicher, das zu derjenigen (TR51) von den integrierten Transaktionen gehört, die nach einer Sicherungszeit als erste festgeschrieben wurde, und das nach der Sicherungszeit als erstes in dem Deltaspeicher gespeichert wurde, wobei die Sicherungszeit die Zeit ist, in der eine Sicherung (532) des OLTP-Datenspeichers erzeugt wurde; und, beginnend mit dem identifizierten Deltaobjekt (554), Durchlaufen der Deltaobjekte (554-564) in dem Deltaspeicher der Reihe nach, bis ein upstream abgeschlossenes Deltaobjekt (564) erreicht wird, wobei das upstream abgeschlossene Deltaobjekt dasjenige von den Deltaobjekten ist, das zu derjenigen (TR52) von den integrierten Transaktionen gehört, die vor der ausgewählten Zeit als letzte festgeschrieben wurde, und das vor der ausgewählten Zeit als letztes in dem Deltaspeicher gespeichert wurde, wobei das Durchlaufen das upstream abgeschlossene Deltaobjekt einschließt und ein Anwenden aller in den durchlaufenen Deltaobjekten spezifizierten DO-Änderungen der Reihe nach auf die Sicherung (532) umfasst.

## Revendications

1. Procédé mis en œuvre par ordinateur destiné à faire persister des objets de données (202, 204) d'un programme d'application (226), le procédé comprenant les étapes consistant à :
- fournir (102) un programme d'application (226) comprenant une pluralité d'objets de données (202, 204) ou OD, dans lequel le programme d'application est écrit dans un langage de programmation orienté objet, dans lequel la pluralité d'OD comprend au moins des milliers d'OD, dans lequel les OD interagissent de manière dynamique les uns avec les autres, sont instanciés, modifiés et supprimés au moment de l'exécution du programme d'application et représentent et commandent les flux de travail et les services mis en œuvre dans le programme d'application, dans lequel chaque OD est un objet de données au sein du programme d'application, dans lequel chaque OD est une instance d'une classe écrite dans le langage de programmation orienté objet ;
- réaliser (106) des opérations de changement (206, 208) qui créent, modifient et/ou suppriment respectivement au moins l'un des OD dans le programme d'application, dans lequel les opérations de changement déclenchent la création d'objets delta (216, 218), chaque objet delta étant descriptif d'un ou de plusieurs changements d'OD amenés par l'une des opérations de changement ;
- stocker les objets delta dans un stockage de données (224) appelé « stockage delta », dans lequel le stockage delta est un stockage de données qui est adapté pour stocker et maintenir les objets delta d'une manière telle qu'ils sont stockés dans des zones de stockage physique séquentiellement adjacentes conformément à l'ordre chronologique d'écriture physique des objets delta dans le stockage delta,
dans lequel le programme d'application est configuré pour initier la création d'une ou de plusieurs transactions intégrées et pour réaliser les opérations de changement au sein de la ou des transactions intégrées, moyennant quoi la création et le stockage des objets spécifiques parmi les objets delta descriptifs d'une ou de plusieurs opérations de changement au sein d'une transaction particulière parmi les transactions intégrées sont exécutés au sein de ladite transaction intégrée, et
dans lequel une transaction intégrée est une transaction conforme aux critères ACID - Atomicité, Cohérence, Isolement, Durabilité - qui englobe au moins les opérations réalisées au sein du programme d'application et le stockage des opérations réalisées au sein d'un logiciel utilisé pour stocker les objets delta dans le stockage delta,
le procédé comprenant en outre les étapes consistant à :
- fournir un stockage de données OLTP comprenant le dernier état de tous les OD du programme d'application avant que les opérations de changement ne soient réalisées ; et
- mettre à jour le stockage de données OLTP de telle sorte que le stockage de données OLTP mis à jour reflète les changements des OD amenés par les opérations de changement ;
dans lequel l'étape consistant à mettre à jour le stockage de données OLTP avec le ou les changements d'OD créés par la ou les opérations de changement de données réalisées au sein de la transaction particulière parmi les transactions intégrées est exécutée au sein de ladite transaction intégrée,
le procédé comprenant en outre les étapes consistant à :
- afficher une GUI (600), la GUI comprenant au moins un élément de GUI (606) permettant à un utilisateur de sélectionner un point sur une représentation graphique d'une chronologie (608) ;
- recevoir une indication (434) d'un temps sélectionné (426, 526) ;
- en réponse à l'étape consistant à recevoir la sélection de l'utilisateur du point sur la chronologie avec l'élément de GUI, reconstruire le stockage de données OLTP au temps sélectionné, dans lequel le temps sélectionné est le temps sélectionné par l'utilisateur avec l'élément de GUI ; et
- en réponse à la complétion de la reconstruction, mettre à jour automatiquement la GUI de telle sorte que la GUI indique (610, 614) que l'état du stockage de données OLTP reconstruit est l'état du stockage de données OLTP au temps sélectionné,
- dans lequel l'état du programme d'application est synchronisé avec l'état du contenu en données du stockage de données OLTP sélectionné par l'utilisateur par l'intermédiaire de la GUI,
dans lequel la reconstruction du stockage de données OLTP au temps sélectionné comprend les étapes consistant à :
o identifier l'objet spécifique (476) parmi les objets delta dans le stockage delta appartenant à la transaction intégrée (TR44) la plus récemment engagée et étant l'objet delta le plus récemment stocké (476) parmi tous les objets delta (470 à 476) au sein de ladite transaction intégrée (TR44) ; et en commençant par l'objet delta identifié, traverser séquentiellement les objets delta dans le stockage delta jusqu'à ce qu'un objet delta d'achèvement en aval (456) soit atteint, l'objet delta d'achèvement en aval étant l'objet spécifique parmi les objets delta qui appartient à la transaction spécifique (TR42) parmi les transactions intégrées ayant été engagée en premier après le temps sélectionné (426) et qui a été stockée en premier dans le stockage delta après le temps sélectionné, l'étape consistant à traverser incluant l'objet delta d'achèvement en aval et comprenant une étape consistant à annuler séquentiellement tous les changements d'OD spécifiés dans les objets delta traversés (456 à 476) dans le stockage de données OLTP (220) ou dans une copie (430) de celui-ci ; ou
∘ identifier l'objet spécifique (554) parmi les objets delta dans le stockage delta appartenant à la transaction spécifique (TR51) parmi les transactions intégrées ayant été engagée en premier après un temps de sauvegarde et qui a été stockée en premier dans le stockage delta après le temps de sauvegarde, dans lequel le temps de sauvegarde est le temps auquel une sauvegarde (532) du stockage de données OLTP a été créée ; et en commençant par l'objet delta identifié (554), traverser séquentiellement les objets delta (554 à 564) dans le stockage delta jusqu'à ce qu'un objet delta d'achèvement en amont (564) soit atteint, l'objet delta d'achèvement en amont étant l'objet spécifique parmi les objets delta qui appartient à la transaction spécifique (TR52) parmi les transactions intégrées qui a été engagée en dernier avant le temps sélectionné et qui a été stockée en dernier dans le stockage delta avant le temps sélectionné, l'étape consistant à traverser incluant l'objet delta d'achèvement en amont et comprenant une étape consistant à appliquer séquentiellement tous les changements d'OD spécifiés dans les objets delta traversés sur la sauvegarde (532).

2. Procédé mis en œuvre par ordinateur selon la revendication 1, dans lequel le stockage delta est un stockage de données de type « ajouter uniquement ».

3. Procédé mis en œuvre par ordinateur selon l'une quelconque des revendications précédentes,
- dans lequel le stockage delta est un stockage de données géré par une application de streaming et/ou par un système de file d'attente ; et/ou
- dans lequel le stockage delta est un stockage de données logiques comprenant une pluralité d'unités de stockage physique ; et/ou
- dans lequel le stockage de données est exempt de contraintes UNIQUES qui doivent être contrôlées avant qu'un objet delta ne soit stocké.

4. Procédé mis en œuvre par ordinateur selon l'une quelconque des revendications précédentes, comprenant en outre les étapes consistant à :
- traverser au moins certains des objets delta dans le stockage delta pour extraire automatiquement les opérations ANNULER et RÉTABLIR des objets delta traversés, l'identité des objets delta traversés dépendant du temps sélectionné ;
- utiliser les opérations ANNULER et RÉTABLIR extraites pour reconstruire l'état du programme d'application au temps sélectionné.

5. Procédé mis en œuvre par ordinateur selon l'une quelconque des revendications précédentes, comprenant en outre les étapes consistant à :
- fournir une copie du stockage des données OLTP à un temps appelé temps de copie, la copie du stockage de données OLTP comprenant le tout dernier état de tous les OD du programme d'application au temps de copie ;
- après le temps de copie, mettre à jour en continu la copie du stockage de données OLTP avec des copies d'objets delta créées après le temps de copie de telle sorte que la copie du stockage de données OLTP mise à jour comprend le tout dernier état de tous les OD du programme d'application ;
- dans lequel l'étape consistant à mettre à jour la copie du stockage de données OLTP avec les copies des objets delta créées au sein de n'importe quelle transaction particulière parmi les transactions intégrées est exécutée au sein de ladite transaction intégrée.

6. Procédé mis en œuvre par ordinateur selon l'une quelconque des revendications précédentes, comprenant en outre les étapes consistant à :
- fournir un stockage de données d'entrée, le stockage de données d'entrée étant le stockage de données OLTP (220) ou une copie ou version (432, 536) de celui-ci, le stockage de données d'entrée reflétant l'état des OD du programme d'application à un temps actuel ou précédent ;
- recevoir une indication (434) d'un temps sélectionné (426) ;
- reconstruire l'état d'un stockage de données d'entrée de telle sorte qu'il reflète l'état des OD du programme d'application au temps sélectionné ;
- créer une nouvelle instance du programme d'application dont l'état reflète l'état du programme d'application au temps sélectionné, la création comprenant les étapes consistant à :
o lire les données descriptives de l'état de la pluralité d'objets de données du programme d'application au temps sélectionné à partir du stockage de données d'entrée ; et
o créer les OD de la nouvelle instance du programme d'application et les associations entre lesdits OD conformément aux données lues, lesdits OD et associations d'OD étant créés conformément à un mappage relationnel d'objets prédéfini d'un modèle de domaine orienté objet sur un schéma de base de données du stockage de données d'entrée.

7. Procédé mis en œuvre par ordinateur selon l'une quelconque des revendications précédentes,
- dans lequel chaque transaction intégrée définit un contexte transactionnel intégré dans lequel :
o un échec à stocker au sein de la transaction intégrée un objet delta dans le stockage delta et/ou
∘ un échec à réaliser au sein de la transaction intégrée une mise à jour de stockage des données OLTP reflétant un changement d'OD dans le programme d'application et/ou
o un échec à réaliser au sein de la transaction intégrée une opération de changement d'un OD dans le programme d'application induit :
∘ une inversion de tous les changements d'OD dans le programme d'application ayant déjà été réalisés dans ladite transaction intégrée ; et
∘ une inversion de toutes les mises à jour de stockage de données OLTP ayant déjà été réalisées dans ladite transaction intégrée ; et
∘ une suppression de tous les objets delta ayant déjà été écrits dans le stockage delta dans ladite transaction intégrée.

8. Procédé mis en œuvre par ordinateur selon l'une quelconque des revendications, dans lequel chacun des objets delta stockés dans le stockage delta comprend ou est stocké en association avec un identifiant de la transaction intégrée au sein de laquelle l'objet delta a été créé.

9. Procédé selon la revendication 8 dans lequel le programme d'application est configuré pour être utilisé par plusieurs utilisateurs simultanément, moyennant quoi la création des premières transactions spécifiques parmi les transactions intégrées est déclenchée par un premier utilisateur spécifique parmi les plusieurs utilisateurs, la création de secondes transactions parmi les transactions intégrées est déclenchée par un second utilisateur spécifique parmi les plusieurs utilisateurs, l'étape consistant à stocker les objets delta dans le stockage delta comprenant une étape consistant à stocker un identifiant du premier utilisateur en association avec les objets delta créés au sein des premières transactions spécifiques parmi les transactions et à stocker un identifiant du second utilisateur en association avec les objets delta créés au sein des secondes transactions spécifiques parmi les transactions.

10. Procédé mis en œuvre par ordinateur selon l'une quelconque des revendications, dans lequel le début de chacune parmi la ou les transactions intégrées est déclenché par un appel à une fonction, l'exécution de la fonction appelée comprenant la réalisation de la ou des opérations de changement à réaliser au sein de la transaction intégrée dont le début a été déclenché par l'appel, dans lequel de préférence l'appel est réalisé dans un objet de données du programme d'application et la fonction est réalisée dans un cadre (210) qui peut interopérer avec le programme d'application.

11. Procédé mis en œuvre par ordinateur selon la revendication 10, dans lequel la ou les opérations de changement de données à réaliser au sein de la transaction spécifique parmi les transactions intégrées dont le début est déclenché par l'appel à la fonction sont fournies à la fonction en tant qu'arguments de fonction.

12. Procédé mis en œuvre par ordinateur selon l'une quelconque des revendications, dans lequel les objets delta sont stockés dans le stockage delta conformément à l'ordre chronologique des événements d'engagement des transactions intégrées comprenant les objets delta respectifs.

13. Procédé mis en œuvre par ordinateur selon l'une quelconque des revendications, comprenant en outre les étapes consistant à :
- fournir un cadre (210) qui peut interopérer avec le programme d'application, le cadre étant configuré pour gérer la création, l'engagement et/ou le renversement de la transaction intégrée, afin de réaliser l'étape consistant à stocker les objets delta dans le stockage delta et éventuellement également l'étape consistant à mettre à jour une base de données OLTP avec des changements d'objets de données, moyennant quoi la mise en œuvre desdites tâches de gestion et de stockage est encapsulée et masquée au programme d'application de telle sorte que la mise en œuvre peut être modifiée ou échangée sans exiger de modification du code source du programme d'application, dans lequel l'exécution de n'importe laquelle des opérations de changement d'OD dans le programme d'application induit automatiquement la création d'un objet delta indicatif du changement réalisé sur l'objet OD.

14. Procédé mis en œuvre par ordinateur selon l'une quelconque des revendications précédentes, dans lequel les opérations de changement de données comprennent une opération de changement de classe, une opération de changement de classe étant la création, la suppression ou la modification structurelle d'une classe jouant le rôle de modèle pour un type d'objets de données spécifique d'une classe, les changements induits par l'opération de changement de classe se reflétant dans un ou plusieurs des objets delta.

15. Procédé mis en œuvre par ordinateur selon la revendication 14 ou 15,
- dans lequel la pluralité d'OD et leurs associations sont définies conformément à un modèle de domaine orienté objet ; et
- dans lequel l'étape consistant à stocker les OD dans le stockage de données OLTP est réalisée par le cadre de telle sorte que les OD et leurs attributs sont stockés conformément à un mappage relationnel d'objets du modèle de domaine orienté objet sur un schéma de base de données du stockage de données OLTP.

16. Procédé mis en œuvre par ordinateur selon l'une quelconque des revendications précédentes, dans lequel la sélection de l'utilisateur d'un point dans la représentation graphique de la chronologie, la reconstruction respective du stockage de données OLTP et l'étape consistant à mettre à jour la représentation graphique de la chronologie sont réalisées plusieurs fois en temps réel.

17. Procédé mis en œuvre par ordinateur selon l'une quelconque des revendications précédentes, dans lequel la sélection de l'utilisateur d'un point dans la représentation graphique de la chronologie, la reconstruction respective du stockage de données OLTP et l'étape consistant à mettre à jour la représentation graphique de la chronologie sont réalisées au sein d'un contexte de session de l'utilisateur interagissant avec la GUI, dans lequel la reconstruction du stockage de données OLTP est réalisée sur une copie basée sur la session du stockage de données OLTP, la durée de vie de la copie du stockage de données OLTP basée sur la session étant limitée au contexte de session de l'utilisateur.

18. Système informatique (200) comprenant :
- un stockage de données (224) appelé « stockage delta » ;
- un programme d'application (226) comprenant une pluralité d'objets de données ou OD (202, 204), le programme d'application étant configuré pour réaliser (106) des opérations de changement (206, 208) qui créent, modifient et/ou suppriment respectivement au moins l'un des OD dans le programme d'application, dans lequel le programme d'application est configuré pour initier la création d'une ou de plusieurs transactions intégrées et pour réaliser les opérations au sein de la ou des transactions intégrées, dans lequel le programme d'application est écrit dans un langage de programmation orienté objet, dans lequel la pluralité d'OD comprend au moins des milliers d'OD, dans lequel les OD interagissent de manière dynamique les uns avec les autres, sont instanciés, modifiés et supprimés au moment de l'exécution du programme d'application et représentent et commandent les flux de travail et les services mis en œuvre dans le programme d'application, dans lequel chaque OD est un objet de données au sein du programme d'application, dans lequel chaque OD est une instance d'une classe écrite dans le langage de programmation orienté objet ;
- un programme logiciel (210) configuré pour :
∘ créer, en réponse à l'étape consistant à réaliser la ou les opérations de changement, des objets delta (216, 218), chaque objet delta étant descriptif d'un ou de plusieurs changements d'OD amenés par l'une des opérations de changement ;
∘ stocker les objets delta dans le stockage delta (224), dans lequel le stockage delta est un stockage de données qui est adapté pour stocker et maintenir les objets delta d'une manière telle qu'ils sont stockés dans des zones de stockage physique séquentiellement adjacentes conformément à l'ordre chronologique d'écriture physique des objets delta sur le stockage delta,
moyennant quoi les étapes consistant à créer et stocker les objets spécifiques parmi les objets delta descriptifs d'une ou de plusieurs opérations de changement au sein d'une transaction particulière parmi les transactions intégrées sont exécutées au sein de ladite transaction intégrée, et
dans lequel une transaction intégrée est une transaction conforme aux critères ACID - Atomicité, Cohérence, Isolement, Durabilité - qui englobe au moins les opérations réalisées au sein du programme d'application et le stockage des opérations réalisées au sein d'un logiciel utilisé pour stocker les objets delta dans le stockage delta ; et
- un stockage de données OLTP (220) comprenant le tout dernier état des OD du programme d'application avant que les opérations de changement ne soient réalisées ;
le programme logiciel étant configuré pour mettre à jour le stockage de données OLTP de telle sorte que le stockage de données OLTP mis à jour reflète les changements des OD amenés par les opérations de changement, dans lequel l'étape consistant à mettre à jour le stockage de données OLTP avec le ou les changements d'OD créés par la ou les opérations de changement de données réalisées au sein de la transaction particulière parmi les transactions intégrées est exécutée au sein de ladite transaction intégrée ;
- une GUI (600) affichée, la GUI comprenant au moins un élément de GUI (606) permettant à un utilisateur de sélectionner un point sur une représentation graphique d'une chronologie (608) ;
dans lequel le système informatique est configuré pour réaliser, en réponse à l'étape consistant à recevoir la sélection de l'utilisateur du point sur la chronologie avec l'élément de GUI, la reconstruction du stockage de données OLTP au temps sélectionné, dans lequel le temps sélectionné est le temps sélectionné par l'utilisateur avec l'élément de GUI ; et
en réponse à la complétion de la reconstruction, mettre à jour automatiquement la GUI de telle sorte que la GUI indique (610, 614) que l'état du stockage de données OLTP reconstruit est l'état du stockage de données OLTP au temps sélectionné,
dans lequel l'état du programme d'application est synchronisé avec l'état du contenu en données du stockage de données OLTP sélectionné par l'utilisateur par l'intermédiaire de la GUI,
dans lequel la reconstruction du stockage de données OLTP au temps sélectionné comprend les étapes consistant à :
o identifier l'objet spécifique (476) parmi les objets delta dans le stockage delta appartenant à la transaction intégrée (TR44) la plus récemment engagée et étant l'objet delta le plus récemment stocké (476) parmi tous les objets delta (470 à 476) au sein de ladite transaction intégrée (TR44) ; et en commençant par l'objet delta identifié, traverser séquentiellement les objets delta dans le stockage delta jusqu'à ce qu'un objet delta d'achèvement en aval (456) soit atteint, l'objet delta d'achèvement en aval étant l'objet spécifique parmi les objets delta qui appartient à la transaction spécifique (TR42) parmi les transactions intégrées ayant été engagée en premier après le temps sélectionné (426) et qui a été stockée en premier dans le stockage delta après le temps sélectionné, l'étape consistant à traverser incluant l'objet delta d'achèvement en aval et comprenant une étape consistant à annuler séquentiellement tous les changements d'OD spécifiés dans les objets delta traversés (456 à 476) dans le stockage de données OLTP (220) ou dans une copie (430) de celui-ci ; ou
∘ identifier l'objet spécifique (554) parmi les objets delta dans le stockage delta appartenant à la transaction spécifique (TR51) parmi les transactions intégrées ayant été engagée en premier après un temps de sauvegarde et qui a été stockée en premier dans le stockage delta après le temps de sauvegarde, dans lequel le temps de sauvegarde est le temps auquel une sauvegarde (532) du stockage de données OLTP a été créée ; et en commençant par l'objet delta identifié (554), traverser séquentiellement les objets delta (554 à 564) dans le stockage delta jusqu'à ce qu'un objet delta d'achèvement en amont (564) soit atteint, l'objet delta d'achèvement en amont étant l'objet spécifique parmi les objets delta qui appartient à la transaction spécifique (TR52) parmi les transactions intégrées qui a été engagée en dernier avant le temps sélectionné et qui a été stockée en dernier dans le stockage delta avant le temps sélectionné, l'étape consistant à traverser incluant l'objet delta d'achèvement en amont et comprenant une étape consistant à appliquer séquentiellement tous les changements d'OD spécifiés dans les objets delta traversés sur la sauvegarde (532).

19. Support de stockage lisible par ordinateur comprenant des instructions interprétables par ordinateur qui, lorsqu'elles sont exécutées par un processeur, amènent le processeur à fournir un cadre (210) et un stockage de données OLTP (220), le cadre étant couplé de manière opérationnelle à un programme d'application (226) comprenant une pluralité d'objets de données ou OD (202, 204), le cadre comprenant en outre une interface avec un stockage delta (224), dans lequel le programme d'application est écrit dans un langage de programmation orienté objet, dans lequel la pluralité d'OD comprend au moins des milliers d'OD, dans lequel les OD interagissent de manière dynamique les uns avec les autres, sont instanciés, modifiés et supprimés au moment de l'exécution du programme d'application et représentent et commandent les flux de travail et les services mis en œuvre dans le programme d'application, dans lequel chaque OD est un objet de données au sein du programme d'application, dans lequel chaque OD est une instance d'une classe écrite dans le langage de programmation orienté objet, le cadre étant configuré pour :
o recevoir une indication d'opérations de changement (206, 208) qui créent, modifient et/ou suppriment respectivement au moins l'un des OD dans le programme d'application depuis le programme d'application ;
∘ en réponse à l'étape consistant à recevoir, créer des objets delta (216, 218), chaque objet delta étant descriptif d'un ou de plusieurs changements d'OD amenés par l'une des opérations de changement ;
∘ stocker les objets delta dans le stockage delta (224), dans lequel le stockage delta est un stockage de données qui est adapté pour stocker et maintenir les objets delta d'une manière telle qu'ils sont stockés dans des zones de stockage physique séquentiellement adjacentes conformément à l'ordre chronologique d'écriture physique des objets delta sur le stockage delta,
moyennant quoi les étapes consistant à créer et stocker les objets spécifiques parmi les objets delta descriptifs d'une ou de plusieurs opérations de changement au sein d'une transaction particulière parmi les transactions intégrées sont exécutées au sein de ladite transaction intégrée, et
dans lequel une transaction intégrée est une transaction conforme aux critères ACID - Atomicité, Cohérence, Isolement, Durabilité - qui englobe au moins les opérations réalisées au sein du programme d'application et le stockage des opérations réalisées au sein du cadre (210) utilisé pour stocker les objets delta dans le stockage delta,
dans lequel le cadre (210) est en outre configuré pour mettre à jour le stockage de données OLTP de telle sorte que le stockage de données OLTP mis à jour reflète les changements des OD amenés par les opérations de changement, dans lequel l'étape consistant à mettre à jour le stockage de données OLTP avec le ou les changements d'OD créés par la ou les opérations de changement de données réalisées au sein de la transaction particulière parmi les transactions intégrées est exécutée au sein de ladite transaction intégrée,
dans lequel les instructions interprétables par ordinateur, lorsqu'elles sont exécutées par le processeur, amènent le processeur à :
- afficher une GUI (600), la GUI comprenant au moins un élément de GUI (606) permettant à un utilisateur de sélectionner un point sur une représentation graphique d'une chronologie (608) ;
- en réponse à l'étape consistant à recevoir la sélection de l'utilisateur du point sur la chronologie avec l'élément de GUI, réaliser la reconstruction du stockage de données OLTP au temps sélectionné selon la revendication 6 ou 7, dans lequel le temps sélectionné est le temps sélectionné par l'utilisateur avec l'élément de GUI ; et
en réponse à la complétion de la reconstruction, mettre à jour automatiquement la GUI de telle sorte que la GUI indique (610, 614) que l'état du stockage de données OLTP reconstruit est l'état du stockage de données OLTP au temps sélectionné,
dans lequel l'état du programme d'application est synchronisé avec l'état du contenu en données du stockage de données OLTP sélectionné par l'utilisateur par l'intermédiaire de la GUI,
dans lequel la reconstruction du stockage de données OLTP au temps sélectionné comprend les étapes consistant à :
o identifier l'objet spécifique (476) parmi les objets delta dans le stockage delta appartenant à la transaction intégrée (TR44) la plus récemment engagée et étant l'objet delta le plus récemment stocké (476) parmi tous les objets delta (470 à 476) au sein de ladite transaction intégrée (TR44) ; et en commençant par l'objet delta identifié, traverser séquentiellement les objets delta dans le stockage delta jusqu'à ce qu'un objet delta d'achèvement en aval (456) soit atteint, l'objet delta d'achèvement en aval étant l'objet spécifique parmi les objets delta qui appartient à la transaction spécifique (TR42) parmi les transactions intégrées ayant été engagée en premier après le temps sélectionné (426) et qui a été stockée en premier dans le stockage delta après le temps sélectionné, l'étape consistant à traverser incluant l'objet delta d'achèvement en aval et comprenant une étape consistant à annuler séquentiellement tous les changements d'OD spécifiés dans les objets delta traversés (456 à 476) dans le stockage de données OLTP (220) ou dans une copie (430) de celui-ci ; ou
identifier l'objet spécifique (554) parmi les objets delta dans le stockage delta appartenant à la transaction spécifique (TR51) parmi les transactions intégrées ayant été engagée en premier après un temps de sauvegarde et qui a été stockée en premier dans le stockage delta après le temps de sauvegarde, dans lequel le temps de sauvegarde est le temps auquel une sauvegarde (532) du stockage de données OLTP a été créée ; et en commençant par l'objet delta identifié (554), traverser séquentiellement les objets delta (554 à 564) dans le stockage delta jusqu'à ce qu'un objet delta d'achèvement en amont (564) soit atteint, l'objet delta d'achèvement en amont étant l'objet spécifique parmi les objets delta qui appartient à la transaction spécifique (TR52) parmi les transactions intégrées qui a été engagée en dernier avant le temps sélectionné et qui a été stockée en dernier dans le stockage delta avant le temps sélectionné, l'étape consistant à traverser incluant l'objet delta d'achèvement en amont et comprenant une étape consistant à appliquer séquentiellement tous les changements d'OD spécifiés dans les objets delta traversés sur la sauvegarde (532).
